(19) Europäisches Patentamt
European Patent Office
Office européen des brevets

(11) EP 0 677 072 B1

# (12) EUROPEAN PATENT SPECIFICATION

(45) Date of publication and mention of the grant of the patent:
**10.03.1999 Bulletin 1999/10**

(21) Application number: **94903486.2**

(22) Date of filing: **06.12.1993**

(51) Int Cl.6: **C08G 18/12**, C08G 18/08

(86) International application number:
**PCT/US93/11831**

(87) International publication number:
**WO 94/13723 (23.06.1994 Gazette 1994/14)**

## (54) ROOM TEMPERATURE CURABLE SILANE-TERMINATED POLYURETHANE DISPERSIONS

RAUMTEMPERATURHÄRTBARE SILANENDGRUPPEN ENTHALTENDE POLYURETHANDISPERSIONEN

DISPERSIONS DE POLYURETHANE A TERMINAISON SILANE DURCISSABLE A LA TEMPERATURE AMBIANTE

(84) Designated Contracting States:
**BE DE ES FR GB IT NL SE**

(30) Priority: **08.12.1992 US 986801**
**20.08.1993 US 109640**
**20.08.1993 US 109671**

(43) Date of publication of application:
**18.10.1995 Bulletin 1995/42**

(73) Proprietor: **MINNESOTA MINING AND MANUFACTURING COMPANY**
**St. Paul, Minnesota 55133-3427 (US)**

(72) Inventors:
- **ONWUMERE, Fidelis, C.**
**Saint Paul, MN 55133-3427 (US)**
- **FRISCH, Kurt, C.**
**Saint Paul, MN 55133-3427 (US)**
- **HOLLAND, Lowell, W.**
**Saint Paul, MN 55133-3427 (US)**
- **SENGUPTA, Ashok**
**Saint Paul, MN 55133-3427 (US)**

(74) Representative: **VOSSIUS & PARTNER**
**Postfach 86 07 67**
**81634 München (DE)**

(56) References cited:
**EP-A- 0 163 214**
**EP-A- 0 315 006**
**WO-A-90/10026**
**US-A- 4 598 131**
**US-A- 4 628 076**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 677 072 B1

## Description

This invention relates to aqueous dispersions of externally chain extended polyurethane compositions terminated by hydrolyzable and/or hydrolyzed silyl groups and containing anionic solubilizing or emulsifying groups, particularly carboxyl groups. The invention also relates to methods of making both anionically and cationically stabilized polyurethane dispersions. This invention further relates to polyurethane dispersions which are substantially organic solvent free (e.g. less than about 7 weight percent organic solvent) which cure to water and solvent resistant, tough, scratch resistant, preferably light stable (non-yellowing) polyurethane films and which can be formulated to achieve high gloss. Such films are particularly useful as coatings for wood substrates, including wood floorings, furniture, composition vinyl tiles, and marine surfaces.

It is well known to treat substrates such as wood with polyurethanes or alkyd resins. Polymers are generally applied either neat or from solvent solution as one-part or two-part systems. Frequently, isocyanate terminated polymers are used. The toxicological problems associated with free monomeric isocyanates are well known. It is desirable to make a coating where the end user is not exposed to free monomeric isocyanates.

In addition, the use of solvents creates problems of pollution, toxicity, and flammability and increases the cost of formulating and processing polyurethane materials. Solvents, however, are often required in the preparation and handling of polyurethane resins to sustain a controllable and processible viscosity.

Many of the known references emphasize polyurethane materials which are unstable to water and are generally kept from contact with water until after application to the surface being treated, e.g., leather. Thus, U.S. Patent No. 3,179,713 (Brown) describes the surface treatment of leather with polysiloxanes containing isocyanate radicals as terminal groups. These are employed in amounts of 10-75% by weight with triorganosilyl endblocked diorganopolysiloxanes. The resulting product has all the characteristics of a siloxane-treated leather, except that the reactive isocyanate groups are stated to provide better bonding. Such compositions must be applied from solvent and must be protected from exposure to moisture prior to application to the leather. The compositions are applied at 15% to 25% by weight of the leather.

A class of moisture-curable silyl group-containing polymers is described by Brode et al., U.S. Patent No. 3,632,557. The polymers are described as "vulcanizable" and are formed as films and plaques which cure by exposure to atmospheric moisture. Because of this sensitivity, the patentee taught that care had to be exerted at all times to avoid premature exposure to moisture. A polyurethane sealant containing alkoxysilyl terminating groups is described by Seiter, U.S. Patent No. 3,627,722.

Latex polymers which are vinyl addition polymers formed by free radical polymerization and comprise vinyl hydrolyzable silane, an ester of the group of acrylic, maleic and fumaric esters and/or vinyl acetate are described by Kowalski et al. in U.S. Patent No. 3,814,716. These are dispersed in water using anionic or nonionic surfactants and are said to be useful to give durable coatings on various substrates which are generally rigid. It is known that the introduction of surfactants to such systems enhances the hydrophilicity of latices stabilized in this manner, leading to a reduced moisture resistance and surface adhesion of such coatings.

Gaa et al., U.S. Patent No. 4,582,873 describes a process for making an aqueous dispersible, polyurethane polymer which has internal pendant, siliconate anions. The aqueous dispersion is prepared from a reaction product of polyisocyanates, organic compounds with at least 2 active hydrogens, a hydrophilic additive, and organosilane which is at least monofunctional, preferably difunctional, in reaction with isocyanate groups on at least one organic moiety of the organosilane and also has at least one hydrolyzed or hydrolyzable groups associated with the silicone atom. The hydrophilic additive, which is present at a level of up to about 10 weight percent of the prepolymer or polymer depending on the hydrophilicity of the polyisocyanates employed, assists in promoting the emulsification and stability of the disclosed aqueous dispersions. The aqueous dispersion of the polyurethane resin is used in coating a variety of substrates such as inorganic oxide substrates.

Gaa, European Patent Appl. 0305833 Bl, discloses a silane terminated hydrophilic material based on vinyl alcohol and copolymers thereof as well as sugars, which may be a solution or dispersion.

U.S. Patent No. 5,041,494 (Franke et al.) discloses a cationically stabilized silane terminated polyurethane made with hydrophilic polyether compounds and, optionally, externally added alcoholic, aminic and/or hydrazinic chain lengthening agents. These polyurethanes are made via a volatile organic solvent process, wherein the volatile organic solvent is introduced early in the polyurethane prepolymer formation and which must be stripped from the final product via an additional step.

One means for reducing the moisture sensitivity that arises due to the addition of these dispersant stabilizers in polyurethane dispersions, such as nonionic, cationic, and anionic surfactants and other hydrophilic additives, is through the use of external crosslinkers. Such external crosslinking agents, added to improve hydrophobicity of the coatings stabilized using these hydrophilic additives, can lead to other handling and processing problems, including limited potlife and potential toxicity problems associated with some of the commonly employed crosslinking agents.

U.S. Patent No. 3,941,733 (Chang) describes dispersions of polyurethane containing pendant water-solubilizing groups and terminated by hydrolyzable or hydrolyzed silyl groups which can form self-supporting films and coatings on webs. Such water-solubilizing groups are introduced to the polyurethane through the reaction of a stoichiometric excess of an isocyanate-terminated prepolymer with a water-solubilizing compound which, in addition to the water-solubilizing group, has two isocyanate-reactive hydrogen atoms. To form higher molecular weight poly(urethane-ureas), Chang internally chain extends with the water to form multiplicities of chain extending urea linkages rather than incorporating externally added chain extenders. Leather coated with one of these compositions has excellent wear-resistance.

The inclusion of water-solubilizing compounds, such as diol acids, in conjunction with salt-forming compounds, such as tertiary amines, in polyurethane compositions has been described by Herman et al., in U.S. Patent No. 3,640,924. The intermediates are emulsified in the presence of salt-forming compounds and thickeners are added to give curable adhesives.

Polyurethanes have also achieved commercial acceptance in wood finishing systems because of their overall balance of properties, such as abrasion resistance, flexibility, toughness, high gloss, as well as mar and solvent resistance. Early commercial systems were either solvent based reactive high solids prepolymers reacted with a second component, solvent-based moisture curing compositions, or fully reacted urethane lacquers generally dissolved in alcohols and/or aromatic solvents.

In an effort to eliminate solvents and their associated emission and handling problems, waterborne urethane wood coatings were developed. One means established for approaching the performance of solventborne polyurethanes in a waterborne composition has been to add an external crosslinker to the polyurethane dispersions. While these additives do improve the durability of such two-part coatings, crosslinked compositions unfortunately also present problems of limited pot life and potential toxicity due to the chemical nature of many of the standard external crosslinkers (e.g., multifunctional isocyanate and aziridine crosslinking agents).

The primary function of clear wood finishes is to enhance the natural beauty and protect wood surfaces from cumulative weathering effect of sunlight and moisture. Silicone containing finishes are preferred for use in harsh marine applications to protect wood above the water line from exposure to sun, rain, and salt-fog. However, the adhesion of silicones to oil woods, like teak, is poor. For teak, known polyurethane coatings adhere well but experience degradation upon exposure to sunlight. Wood continually undergoes dimensional changes caused by fluctuations in humidity and temperature in the use environment. The rate and magnitude of these changes can be controlled to some degree by the moisture permeability of the coating. Therefore, a wood coating must have sufficient elasticity to expand and contract with the wood, yet have adequate adhesion to resist the interfacial stress generated by the differential movement between the coating and wood surface. Coatings having a low modulus of elasticity will generate less interfacial stress for a given amount of movement than those with a high modulus. Hydrophilic coatings are plasticized by adsorbed water which increases their elasticity and peel tendency.

The weathering of wood proceeds by a series of complex, free-radical chemical reactions. The free radicals are photolytically generated in wood by both ultraviolet (UV) and visible light. Small amounts of moisture (0 to 6%) increase the concentration of free-radicals. These radicals rapidly react with atmospheric oxygen to oxidize (degrade) the wood surface. While UV light stabilized, clear wood finish coatings can slow the ingress of moisture and light and thus retard the degradation process to some degree, eventually the wood at the interface deteriorates causing the coating to flake and chip-off the surface. The rate of these degradation reactions is a function of the finish film composition and moisture adsorption/permeation.

Widespread paving of roadways has failed to eliminate the paint chipping problems caused by gravel and other small particles on the road surface being hurled against the painted surfaces of motor vehicles. Boats, trailers, airplanes, trains, tanks, towers, and the like are subjected to similar damage from the impact of high velocity particles from various sources. These chipping problems are perhaps most acute on automobiles having the so-called European body style where the front or "leading edge" of the car is swept down at an increasingly greater angle. This creates a larger exposed paint surface that can be damaged by gravel and other debris flung from tire surfaces.

Chip-resistant coatings must be able to dissipate the impact-induced stresses associated with high velocity particles prior to coating fracture and therefore must be formulated to provide the proper combination of toughness, texture, flexibility, and impact strength. The fluid compositions from which these coating are derived generally contain flow control agents such as thickeners to control viscosity and sprayability, and levelling agents to control coating texture.

Attempts have been made to produce tougher, more chip-resistant coatings and paints for automobiles, but these have not been generally completely satisfactory for the following reasons. The coatings must be hard enough to permit use of the wet sanding process yet sufficiently elastomeric to prevent chipping. They should be effective at low coating thickness (about 100 micrometers) to minimize weight and cost and should adhere to most corrosion inhibiting primer coatings applied over the base metal, or increasingly plastics, from which the automotive body part is formed. Finally, the chip-resistant coating should be water dispersable to reduce volatile organic carbon (VOC) and should cure at low temperatures to save energy and prevent damage to plastic parts.

Poly(urethane/urea)s have been found to be particularly effective in meeting these demanding requirements and thus have found utility as chip-resistant coatings where it is necessary to feather and sand the coating edge to provide an invisible border. A new generation of water dispersable, crosslinkable poly(urethane/urea)s such as those described in U.S. Patent No. 5,047,294 are thought to be especially useful for this purpose. The chemistry used to cure these coatings requires cure times of about 30 minutes at temperatures of about 200°C. Other chemistries such as (epoxy, aziridine, and carbodiimide) can be used to cure water dispersable poly(urethane/urea) anti-chip coatings at room temperature; however, on a practical basis these chemistries require two part compositions. Such two part compositions are inconvenient to use because they must be accurately measured and thoroughly blended just prior to application. Furthermore, if such two-part compositions are pre-packaged in rupturable barrier packages, once the two parts are mixed the entire contents must be used or the remainder discarded, which makes pre-packaged systems uneconomical for those repairs where only a small quantity of coating is needed.

Therefore, a need exists for a one-part, water dispersable, poly(urethane/urea) chip-resistant coating composition that is curable at room temperature.

There is also a need in the floor finishing industry for a polymeric coating that is removable from vinyl tiles without also damaging the tile.

Acrylic coatings are known which comprise acrylic polymers having pendant $COO^-$ moieties which are neutralized by tertiary amines. When combined with a $Zn^{2+}$ containing compound, two tertiary amines are displaced by one $Zn^{2+}$ ion to form a plurality of coordination sites which effectively crosslinks the composition. This crosslinking can be reversed by exposing the coating to an aqueous amine, but not by acidic compositions. However, typical hard surface cleaning chemicals are alkaline in order to effectively remove grease substances from the surface. Alkaline cleaning chemicals may actually dull the surface of a zinc-crosslinked polymer because they tend to remove a small amount of coating from the surface. If it is desired to maintain a glossy surface, the cleaned-and-dulled coating would have to be polished to restore the luster.

Despite the presence of the above compositions, to the inventor's knowledge, previously known aqueous silane-terminated polyurethanes are not easily removed with any known aqueous composition. Therefore, there continues to be a need in the art of polyurethane coatings for an aqueous silane-terminated polyurethane composition that can be removed easily with aqueous compositions.

<u>Summary of the Invention</u>

It would be desirable to have the advantages of silicon-containing groups, particularly curability, in a polyurethane composition which is not sensitive to water. A need thus exists for a stable, curable composition containing polyurethane and silyl groups which is not sensitive to moisture before application and which reduces the content of expensive and polluting solvents for application. A need also exists for silyl group-containing polyurethanes which are film-forming. A need also exists for a method of producing low viscosity polyurethane dispersions which are stable to shear as to be mechanically pumpable. A need also exists for substantially organic solvent free water and solvent resistant, scratch resistant, and non-yellowing polyurethane films, which may optionally be removed by aqueous compositions having pH varying from 2 to 5, more preferably from 3 to 4.

We have discovered that hydrolyzable and/or hydrolyzed silyl-terminated polyurethanes in aqueous dispersion have excellent stability and are useful as film-forming and coating materials. The term polyurethane, or sometimes polyurethane-polyurea, refers to a polymeric material, the backbone of which comprises a multiplicity of urethane linkages,

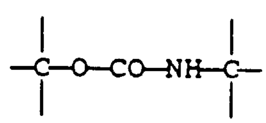

and may also contain one or more urea linkages:

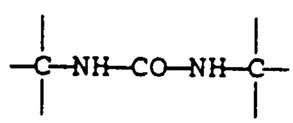

and may also contain one or more thiocarbamate linkages:

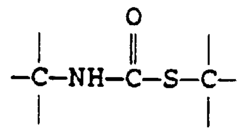

and combinations thereof.

Aqueous polyurethane dispersions of the invention are found to be stable to shear, to have enhanced chemical and mechanical stability, and to have relatively low viscosities even at high polymer concentrations. They present reduced hazards and costs as compared to known polyurethane solutions because of their lower solvent contents. Because they are aqueous, there are no problems associated with continuous maintenance of anhydrous conditions prior to use. Films formed from these dispersions are free from the problems associated with the presence of surfactants which are encountered with films formed from conventional externally emulsified dispersions. External crosslinking agents (the toxicity problems of which were discussed in the Background of the Invention), may be used, but are not required.

The aeqeuous dispersion of an anionically stabilized polymer composition of the invention comprises polymer of the formula (I)

$$[SIL\text{-}X]\text{-}ISO\text{-}Y\text{-}[POL\text{-}X\text{-}ISO\text{-}Y]_n \sim [CE\text{-}X\text{-}ISO\text{-}Y]_m \sim [WSC\text{-}X\text{-}ISO\text{-}Y]_q\text{-}[SIL] \qquad (I)$$

wherein [POL-X-ISO-Y], [CE-X-ISO-Y] and [WSC-X-ISO-Y] can be randomly distributed or form blocks:
wherein
SIL represents

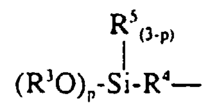 ;

$R^3$ is selected from the group consisting of hydrogen, alkyl radicals comprising 1 to 4 carbon atoms; acyl groups comprising 2 to 5 carbon atoms; and oxime groups of the formula $-N=CR^5R^6$, wherein $R^5$ is a monovalent alkyl group comprising 1 to 12 carbon atoms and wherein $R^6$ is a monovalent alkyl group comprising 1 to 12 carbon atoms;
$R^4$ is a divalent radical comprising 2 to 20 carbon atoms, wherein said radical contains no isocyanate reactive functional groups;
p represents an integer of 1 to 3;
X is a divalent radical selected from the group consisting of

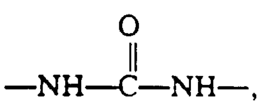, 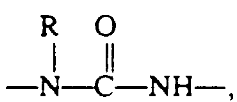, 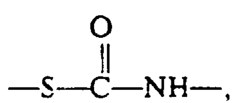, 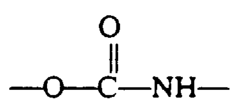 ,

wherein R is independently selected from the group consisting of phenyl, linear aliphatic groups comprising 1 to 12 carbon atoms, branched aliphatic groups comprising 1 to 12 carbon atoms, and cycloaliphatic groups;
ISO represents a moiety derived from a polyisocyanate component comprising a compound having 2 isocyanate groups and optionally further comprising a compound having greater than 2 isocyanate groups;
Y is a divalent radical selected from the group consisting of

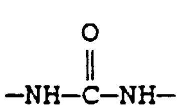, 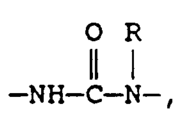, 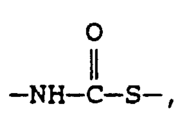, and 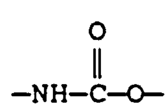,

wherein R is as defined above;
POL represents a moiety derived from a polyol component comprising a compound having 2 isocyanate reactive

functional groups and optionally a compound having greater than 2 isocyanate reactive functional groups, each isocyanate reactive functional group having at least one active hydrogen;
n represents an integer of 2 to 85;
CE represents a moiety derived from a chain extender component comprising a difunctional chain extender having 2 isocyanate reactive functional groups and optionally a polyfunctional chain extender having at least 3 isocyanate reactive functional groups each isocyanate reactive functional group having at least one active hydrogen; and polymer compositions of Formula (I) are to be easily removed by aqueous compositions having pH ranging from 2 to 5, CE is a divalent sterically hindered amine having the general formula

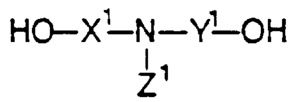

wherein $X^1$, $Y^1$, and $Z^1$ are independently selected from the group consisting of cyclic and aliphatic organic radicals free of reactive functional groups, and with the proviso that at least 75%, preferably 100% of the $Z^1$ groups have at least 4 carbon atoms;
m represents an integer of 1 to 84;
WSC represents a moiety derived from a water-solubilizing compound, wherein the water solubilizing compound possesses at least one water solubilizing group and at least two isocyanate reactive functional groups, each isocyanate reactive functional group containing at least one active hydrogen wherein the water solubilizing group is reacted with a basic salt forming compound to anionically stabilize the polymer;
q represents an integer of 2 to 85;
wherein the urethane branching coefficient of the polymer is 1.7 to 2.25; and wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component.

The symbol "~" represents a chemical bond and indicates that the monomer units can be randomly distributed or form blocks.
The invention also relates to protective coatings for wood substrates prepared from the polyurethane dispersions of the present invention. Such wood coatings, particularly for wood furniture, floorings, and marine surfaces, possess superior shelf stability, stain resistance, solvent resistance, durability, toughness over the one-part and two-part waterborne polyurethane coatings currently available. The wood coatings of the present invention also possess unlimited pot-life and are free from the potential toxicity hazard encountered with polyurethane materials which require external crosslinking agents.
The invention also relates to methods of making hydrolyzable and/or hydrolyzed silyl-terminated polyurethanes in aqueous dispersions and the polyurethanes made therefrom.
A first method of making a silyl-terminated polyurethane in an aqueous dispersion comprises the steps of:

(a) reacting a mixture comprising:

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen; and
(iii) a polyisocyanate component comprising a compound having 2 isocyanate groups and optionally further comprising a compound having greater than 2 isocyanate groups; wherein sufficient polyisocyanate component is included to provide an excess on an isocyanate equivalent basis of 1.4 to 4 times the combined active hydrogen equivalent of the isocyanate reactive functional groups of the polyol component and the water-solubilizing compound;
(iv) optional polar organic coalescing solvent; and
(v) optional catalyst;

at a sufficient temperature in order to facilitate reaction of the mixture to form an isocyanate-terminated

polyurethane prepolymer; wherein the ratio of the isocyanate groups of the polyisocyanate component to the water solubilizing groups of the water solubilizing compound is such that the prepolymer can provide a stable dispersion upon combination with a water phase;

(b) preparing a stable silyl-terminated polyurethane dispersion by combining under sufficient agitation and at a sufficient temperature and pH the isocyanate terminated polyurethane prepolymer prepared according to the step of element (a) with a water phase comprising:

(i) deionized water;
(ii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iii) an isocyanate reactive silane compound having at least one active hydrogen; and
(iv) a salt forming compound selected from the group consisting of basic salt forming compounds and acidic salt forming compounds, wherein the salt forming compound is selected such that the salt forming compound is reactive with the water solubilizing group(s) in the water solubilizing compound; wherein some or all of the salt forming compound is alternatively added to the mixture of step (a) prior to or during reaction, or to the isocyanate terminated polyurethane prepolymer prior to the combination of the isocyanate terminated polyurethane prepolymer with the water phase;

wherein a sufficient amount of the chain extender component and the isocyanate reactive silane is present relative to excess polyisocyanate component such that the active hydrogen to isocyanate group ratio is 0.85:1 to 1:1; and wherein the optional polar organic coalescing solvent of step (a) (iv) can optionally be added to the water phase prior to the formation of the dispersion.

A second method of making a hydrolyzable, silyl-terminated polyurethane in an aqueous dispersion comprises the steps of:

(a) reacting a mixture comprising :

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iv) a polyisocyanate component comprising a compound having 2 isocyanate groups and optionally further comprising a compound having greater than 2 isocyanate groups; wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component;
(v) optional polar organic coalescing solvent; and
(vi) optional catalyst;

at a sufficient temperature in order to facilitate reaction of the mixture of step (a) to form a chain extended isocyanate-terminated polyurethane prepolymer; wherein the ratio of the isocyanate groups of the polyisocyanate component to the water solubilizing group(s) of the water solubilizing compound is such that the prepolymer can provide a stable dispersion upon combination with a water phase;

(b) preparing a stable silyl-terminated polyurethane dispersion by combining under sufficient agitation and at a sufficient temperature and pH the chain extended isocyanate terminated polyurethane prepolymer of step (a) with a water phase comprising:

(i) deionized water;
(ii) an isocyanate reactive silane compound having at least one active hydrogen; and
(iii) a salt forming compound selected from the group consisting of basic salt forming compounds and acidic salt forming compounds, wherein the salt forming compound is selected such that the salt forming compound

is reactive with the water solubilizing group(s) in the water solubilizing compound; wherein some or all of the salt forming compound is alternatively added to the mixture of step (a) prior to or during reaction, or to the isocyanate terminated polyurethane prepolymer prior to the combination of the isocyanate terminated polyurethane prepolymer with the water phase;

wherein a sufficient amount of the isocyanate reactive silane is present relative to excess polyisocyanate component such that the active hydrogen to isocyanate group ratio is 0.85:1 to 1:1; and wherein the optional polar organic coalescing solvent of step (a)(v) can optionally be added to the water phase prior to the formation of the dispersion.

A third method of making a hydrolyzable, silyl-terminated polyurethane in an aqueous dispersion comprises the steps of:

(a) reacting a mixture comprising :

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen; and
(iv) a polyisocyanate component comprising a compound having 2 isocyanate groups and optionally further comprising a polyisocyanate having at least 3 isocyanate groups;
(v) optional polar organic coalescing solvent; and
(vi) optional catalyst;

at a sufficient temperature in order to facilitate reaction of the mixture to form a chain extended isocyanate-terminated polyurethane prepolymer; wherein the ratio of the isocyanate groups of the polyisocyanate component to the water solubilizing groups of the water solubilizing compound is such that the prepolymer can provide a stable dispersion upon combination with a water phase;
(b) when the reaction of the mixture of step (a) is 80 to 90 % complete, adding to the mixture of step (a) a polyisocyanate adduct having greater than 2 isocyanate groups to form a branched chain extended isocyanate terminated polyurethane prepolymer; wherein sufficient polyisocyanate component and polyisocyanate adduct is included to provide an excess on an isocyanate equivalent basis of 1.4 to 4 times the combined active hydrogen equivalent of the isocyanate reactive functional groups of the polyol component, the water-solubilizing compound, and the chain extender component;
(c) preparing a stable silyl-terminated polyurethane dispersion by combining under sufficient agitation and at a sufficient temperature and pH the branched chain-extended isocyanate-terminated polyurethane prepolymer of step (b) with a water phase comprising:

(i) deionized water;
(ii) an isocyanate reactive silane compound having at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen; and
(iv) a salt forming compound selected from the group consisting of basic salt forming compounds and acidic salt forming compounds, wherein the salt forming compound is selected such that the salt forming compound is reactive with the water solubilizing group(s) in the water solubilizing compound wherein some or all of the salt forming compound is alternatively added to the mixture of step (a) or the mixture of step (b) prior to combination of the branched chain-extended isocyanate-terminated polyurethane prepolymer with the water phase;

wherein a sufficient amount of the isocyanate reactive silane is present relative to excess polyisocyanate such that the active hydrogen to isocyanate group ratio is 0.85:1 to 1:1; wherein (a)(v) can optionally be added to the water phase prior the formation of the dispersion.

A fourth method of making a hydrolyzable, silyl-terminated polyurethane in an aqueous dispersion comprising the steps of:

(a) reacting a mixture comprising :

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iv) a polyisocyanate component comprising a compound having 2 isocyanate groups and optionally further comprising a compound having greater than 2 isocyanate groups wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component;
(v) optional polar organic coalescing solvent; and
(vi) optional catalyst;

at a sufficient temperature in order to facilitate reaction of the mixture to form a chain-extended isocyanate-terminated polyurethane prepolymer,
(b) reacting at least a stoichiometrically equivalent amount of an isocyanate blocking agent with the reaction product of step (a) comprising chain extended isocyanate-terminated polyurethane prepolymer to form a blocked chain extended isocyanate-terminated polyurethane prepolymer; wherein the ratio of the isocyanate groups of the polyisocyanate component to the water solubilizing groups of the water solubilizing compound is such that the prepolymer can provide a stable dispersion upon combination with a water phase;
(c) preparing a stable silyl-terminated polyurethane dispersion by displacing the isocyanate blocking agent on the blocked chain extended isocyanate-terminated polyurethane prepolymer of step (b) by reacting under sufficient agitation and at a sufficient temperature and pH the blocked chain extended isocyanate terminated polyurethane prepolymer of step (b) with a water phase comprising:

(i) deionized water;
(ii) an isocyanate reactive silane compound having at least one active hydrogen; and
(iii) a salt forming compound selected from the group consisting of basic salt forming compounds and acidic salt forming compounds, wherein the salt forming compound is selected such that the salt forming compound is reactive with the water solubilizing group in the water solubilizing compound which is reacted into the the chain extended polyurethane prepolymer of step (a), wherein some or all of the salt forming compound is alternatively added to the mixture of step (a) or the mixture of step (b) prior to combination of the blocked chain extended isocyanate terminated polyurethane prepolymer with the water phase;

wherein a sufficient amount of the isocyanate reactive silane is present relative to excess polyisocyanate component such that the active hydrogen to isocyanate group ratio is 0.85:1 to 1:1; and wherein the optional polar organic coalescing solvent of step (a)(v) can optionally be added to the water phase prior the formation of the dispersion.

A fifth method of making a hydrolyzable, silyl-terminated polyurethanes in an aqueous dispersion comprises the steps of:

(a) reacting a mixture comprising :

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional

group containing at least one active hydrogen; and
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iv) a polyisocyanate component comprising a compound having 2 isocyanate groups and optionally further comprising a compound having greater than 2 isocyanate groups wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component;
(v) optional polar organic coalescing solvent; and
(vi) optional catalyst; and

at a sufficient temperature in order to facilitate reaction of the mixture to form a chain-extended isocyanate-terminated polyurethane prepolymer, wherein the ratio of the isocyanate groups of the polyisocyanate component to the water solubilizing groups of the water solubilizing compound is such that the prepolymer can provide a stable dispersion upon combination with a water phase;
(b) reacting the chain extended isocyanate-terminated polyurethane prepolymer of step (a) with an isocyanate-reactive silane compound having at least one active hydrogen to produce a silyl-terminated chain-extended polyurethane prepolymer;
wherein a sufficient amount of the isocyanate reactive silane compound is present relative to excess polyisocyanate component such that the active hydrogen to isocyanate group ratio is 0.85:1 to 1:1;
(c) preparing a stable silyl-terminated polyurethane dispersion by combining under sufficient agitation and at a sufficient temperature and pH the silyl-terminated chain extended isocyanate terminated polyurethane prepolymer of step (b) with a water phase comprising:

(i) deionized water;
(ii) a salt forming compound selected from the group consisting of basic salt forming compounds and acidic salt forming compounds, wherein the salt forming compound is selected such that the salt forming compound is reactive with the water solubilizing group in the water solubilizing compound which is reacted into the chain-extended isocyanate terminated polyurethane prepolymer; wherein some or all of the salt forming compound is alternatively added to the mixture of step (a) or the mixture of step (b) prior to combination of the silyl-terminated chain-extended polyurethane prepolymer with the water phase; wherein the optional polar organic coalescing solvent of step (a)(v) can optionally be added to the water phase prior the formation of the dispersion.

A sixth method of making a hydrolyzable, silyl-terminated polyurethane in an aqueous dispersion comprises the steps of:

(a) reacting a mixture comprising:

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iv) a polyisocyanate component comprising a compound having 2 isocyanate groups and optionally further comprising a compound having greater than 2 isocyanate groups wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component;
(v) optional polar organic coalescing solvent; and
(vi) optional catalyst;

at a sufficient temperature in order to facilitate reaction of the mixture to form a chain-extended isocyanate

terminated polyurethane prepolymer, wherein the ratio of the isocyanate groups of the polyisocyanate component to the water solubilizing groups of the water solubilizing compound is such that the prepolymer can provide a stable dispersion upon combination with a water phase;

(b) preparing a stable silyl-terminated polyurethane dispersion by combining under sufficient agitation and at a sufficient temperature and pH the chain extended isocyanate terminated polyurethane prepolymer of step (a) with a water phase comprising:

(i) deionized water;
(ii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iii) an isocyanate reactive silane compound having at least one active hydrogen; and
(iv) a salt forming compound selected from the group consisting of basic salt forming compounds and acidic salt forming compounds, wherein the salt forming compound is selected such that the salt forming compound is reactive with the water solubilizing group(s) in the water solubilizing compound, wherein some or all of the salt forming compound is alternatively added to the mixture of step (a) prior to combination of the chain extended isocyanate terminated polyurethane prepolymer with the water phase;

wherein a sufficient amount of the chain extender component and the isocyanate reactive silane compound is present relative to excess polyisocyanate component such that the active hydrogen to isocyanate group ratio is 0.85:1 to 1:1; wherein (a)(v) can optionally be added to the water phase prior to the formation of the dispersion.

Applicants have also found that the silane terminated poly(urethane/urea) dispersions have utility in one-part, storage stable, water dispersable poly(urethane/urea) chip-resistant coating compositions that can be chemically crosslinked at room temperature (about 20°C).
The chip-resistant coating composition of the invention comprises a dispersion comprising:

(a) 0.5 to 99.9 weight percent of an anionically stabilized aqueous polymer dispersion comprising polymer of the formula (I);
(b) 0.1 to 15 weight percent of a thickening agent;
(c) 0 to 70 weight percent of a pigment;
(d) 0 to 10 weight percent of a surfactant;
(e) 0 to 80 weight percent of an aqueous thermoplastic polymer dispersion; and
(f) 0 to 15 weight percent of an additive(s);

wherein the weight percentages are based upon 100% solids and the total of the weight percentages of (a) plus (b) plus (c) plus (d) plus (e) plus (f) equal 100%, and a sufficient amount of water, if necessary, such that the composition has a weight percent solids of 5% to 60%.
The invention also relates to a chip-resistant coating made from the chip-resistant coating composition of the invention. The chip-resistant coating of the invention comprises:
a cured mixture comprising

(a) 0.5 to 99.9 weight percent of the poly(urethane/urea) polymer of formula I;
(b) 0.1 to 15 weight percent of a thickening agent;
(c) 0 to 70 weight percent of a pigment;
(d) 0 to 10 weight percent of a surfactant;
(e) 0 to 80 weight percent of a thermoplastic polymer; and
(f) 0 to 15 weight percent of an additive(s);

wherein the weight percentages are based upon 100% solids and the total weight of the percentages (a) plus (b) plus (c) plus (d) plus (e) plus (f) equals 100%.
The invention also relates to a chip-resistant coated substrate. The composition of the invention can be coated onto a number of substrates such as metal or plastic. The chip-resistant composition of the invention can also be coated onto composite materials, such as fiber reinforced plastics wherein the plastics are toughened by the addition of glass, boron, graphite, ceramic, or dissimilar polymer fibers; and filled plastics wherein the plastic properties are modified by the addition of inorganic powders, (such as calcium carbonate, talc, titanium dioxide, carbon black, etc.), flakes (such as aluminum, mica, etc.), and microspheres/beads (such as glass or polymeric). The chip-resistant composition of the invention can be coated onto a number of articles such as vehicle body parts (vehicle exteriors) and

appliance cabinets.

"Chip-resistant" coatings in general are capable of absorbing and subsequently dissipating impact induced stresses prior to macroscopic fracture or debonding/delamination from the underlying substrate. Chip-resistant coatings typically contain a tough polymeric component. In the present invention this component is a polyurethane, polyurea, and/or poly(urethane-urea), The term "tough" as used in describing a polymeric component is the area under the stress-strain curve and has the units of energy per unit volume.

A further aspect of the invention lies in flowable coating precursor formulations comprising the inventive aqueous dispersions including polymer of formula I and a plasticizer. The inventive coating precursor formulations may optionally include leveling agents, antifoam agents, surfactants, and the like, as known in the art. The coating precursor formulations are especially useful in forming coatings for vinyl floors, and are preferably formulated with the inventive aqueous dispersion, plasticizer and other additives so that the resulting coatings (also an aspect of the invention) have a glass transition temperature ($T_g$) no less than about 30°C.

The externally chain-extended silyl-terminated polyurethanes contained in the dispersions of the invention are composed of several moieties. Urethane moieties, optional urea moieties, and optional thiocarbamate moieties link together generally divalent polyisocyanate-derived moieties, polyol-derived moieties, chain extender-derived moieties, solubilizing moieties, and optional sterically hindered amine moieties in the chain, along with monovalent terminal silyl moieties. Polyisocyanate-derived moieties are the radicals derived from polyisocyanates having at least two isocyanate functional groups and polyisocyanate adducts having at least two isocyanate functional groups by the reaction of the isocyanate groups. Polyol-derived moieties are the radicals formed by reaction of isocyanate-reactive functional groups on the polyols. Similarly, chain extender-derived moieties are the radicals derived from poly(active hydrogen), isocyanate-reactive organic compounds (e.g., polyols, polyamines and polythiols). Water-solubilizing ionic compounds and silyl compounds yield solubilizing moieties and silyl moieties by elimination of isocyanate-reactive groups. The polyurethane molecule as a whole is thus made up of recurring polyisocyanate-derived moieties, polyol-derived moieties, chain extender derived moieties, interspersed solubilizing moieties and optional sterically hindered amine moieties (for removeability by aqueous compositions having pH ranging from 2 to 5), generally terminated by silyl moieties. To some extent, of course, two or more molecules in aqueous dispersion may be connected by siloxane linkages.

In general, the silane-terminated polyurethane dispersions are prepared by first forming a polyurethane prepolymer by combining a polyisocyanate component with isocyanate reactive compounds. This prepolymer is then dispersed in a water phase which typically provides chain extension and silane termination of the polyurethane prepolymer. A summary of basic polyurethane chemistry and technology which explains and summarizes these reactions and processes can be found, for example, in Polyurethanes: Chemistry and Technology, Saunders and Frisch, Interscience Publishers (New York, 1963 (Part I) and 1964 (Part II)).

The polyurethane prepolymers useful in the present invention can be prepared by reacting an excess of a polyisocyanate component on an isocyanate equivalent basis with one or more polyols and at least one isocyanate-reactive water-solubilizing compound in the presence of an optional catalyst and/or a coalescing solvent. One or more additional optional components, such as chain extenders, sterically hindered amines, blocking agents and isocyanate-reactive silane compounds, may be included in the polyurethane prepolymer. For example, isocyanate-terminated polyurethane prepolymers may be modified to include a chain extender to form a chain extended isocyanate-terminated polyurethane prepolymer, a blocking agent to form a blocked isocyanate terminated polyurethane prepolymer, a polyfunctional chain extender or polyisocyanate adduct to form a branched isocyanate terminated polyurethane prepolymer, and/or an isocyanate-reactive silane compound to form a silane-terminated polyurethane prepolymer.

In various instances multifunctional components with functionality greater than two may be incorporated into the urethane dispersion in limited amounts. Examples of these materials are: multifunctional polyols (e.g., TONE™ 0305, a trifunctional polyol available from Union Carbide), polyisocyanates with functionality greater than two (e.g., DESMODUR™ N-100, the biuret of hexamethylene diisocyanate available from Miles Coating Division, a trifunctional isocyanate adduct such as Cythane™ 3160 based on TMXDI available from American Cyanamid), and multifunctional chain extenders, (e.g., trimethylolpropane). The introduction of multifunctional components may provide advantages to a coating made from the finished dispersion such as improved solvent resistance. The multifunctionality may cause a reduction in freeze-thaw stability when incorporated in modestly high amounts. Generally if too much multifunctionality is introduced, it may be difficult or impossible to make a dispersion without some coagulation occurring.

The "urethane branching coefficient" (U.B.C.) is a calculation used to express the total amount of branching provided by multifunctional polyisocyanates, polyols and chain extenders in the urethane portion of the silane-terminated urethane dispersion, i.e., it excludes the silane linkage(s) (Si-O-Si) and (Si-OH) but will include other active hydrogen groups of the silane such as amine, mercaptan, etc. The calculation assumes unreacted isocyanate reacts with water. Aminopropyltriethoxysilane, for example would have a branching coefficient (B.C.) of 1. Similarly, diols and diisocyanates would each have a branching coefficient of 2, triols and triisocyanates would each have a branching coefficient of 3, etc. The urethane branching coefficient of a silane-terminated urethane made with 1 mole of aminopropyltriethoxysilane, 1 mole of a diol, 2 moles of difunctional chain extender, 1 mole of triol, and 5 moles of a diisocyanate would be calculated in this manner:

| MATERIAL | B.C. | MOLES | MOLE % | MOLE % B.C. |
|---|---|---|---|---|
| Aminopropyltriethoxysilane | 1 | 1 | 0.1 | 0.1 |
| Diol | 2 | 1 | 0.1 | 0.2 |
| Difunctional Chain Extender | 2 | 2 | 0.2 | 0.4 |
| Triol | 3 | 1 | 0.1 | 0.3 |
| Diisocyanate | 2 | 5 | 0.5 | 1.0 |
| URETHANE BRANCHING COEFFICIENT = | | | | 2.0 |

Using this measurement, the amount of branching in the silane-terminated polyurethane dispersions of the present invention (the U.B.C.) typically ranges from 1.7 to 2.25, preferably from 1.85 to 2.01.

It is important that the prepolymer prepared contain more than one isocyanate radical in the reaction mixture for each active hydrogen radical contributed by the polyol component, the water solubilizing compound, and other isocyanate reactive compounds in the prepolymer. "Active hydrogens" are those nucleophilic hydrogen atoms which conform to the Zerewitinoff determination of hydrogen atoms; i.e., compounds which, when reacted with a solution of methylmagnesium iodide in purified n-butyl ether, produce methane. Typically, isocyanate reactive groups having at least one active hydrogen include but are not limited to those selected from the group consisting of -OH, $-NH_2$, -SH, and -NHR, wherein R is selected from the group consisting of phenyl, straight or branched aliphatic groups comprising from 1 to 12 carbon atoms, and cycloaliphatic groups. Isocyanate equivalent to active hydrogen equivalent ratios of 1.4:1 to 4:1 are suitable in the polyurethane prepolymers. Ratios of less than 1.4:1 tend to produce films formed from the polyurethane dispersions of the present invention which can have low cohesive strength and are softer than desirable for most applications. Ratios higher than 4:1 provide a high combined chain extender/isocyanate-reactive silane content when these components are added in the water phase of the polyurethane dispersion. As a result, the final coatings tend to be hard and stiff.

This required excess of isocyanate present in the prepolymer is then consumed by condensation with the active-hydrogen containing isocyanate reactive compounds in the water phase when the polyurethane prepolymer is dispersed. If an external chain extender is introduced in the water phase and little or no chain extension due to water is desired, then the active-hydrogens contributed by either difunctional or polyfunctional chain extenders typically represent on an equivalent basis from 65 to 95% on an equivalent basis of the excess of isocyanate, while the isocyanate-reactive silane compound is present in the amount of 5% to 30% of the excess isocyanate. If no chain extender is incorporated in the water phase of the dispersion, then theoretically 100% of the remaining isocyanate groups react with the active hydrogens found in the isocyanate reactive silane compounds. However, if a minor degree of chain extension due to water is desired, then from 85 to 100 percent, preferably 95 to 100 percent, of the isocyanate excess can be reacted with the active hydrogens supplied by the chain extenders and isocyanate reactive compounds. In this situation, the remainder of the isocyanate excess can form urea linkages with other prepolymers by a well-known secondary reaction, first reacting with water to form a carbamic acid which then converts to a primary amine and carbon dioxide. This primary amine then forms a urea linkage with any available isocyanate group in the dispersion.

The dispersions of the invention form useful and processible coatings at solids content ranging from 3 to 45% by weight solids, generally from 3 to 40% by weight solids.

Polyisocyanates

The polyisocyanate component must comprise a compound having two isocyanate groups (i.e., diisocyanates and/or adducts thereof) and may optionally comprise compounds having greater than 2 isocyanate groups (e.g., triisocyanates and/or adducts thereof). Adducts of the polyisocyanate compounds as defined herein refer to isocyanate functional derivatives of polyisocyanate compounds and polyisocyanate prepolymers. Examples of adducts include but are not limited to those selected from the group consisting of ureas, biurets, allophanates, dimers and trimers of isocyanate compounds, uretonimediones, and mixtures thereof. Any suitable organic polyisocyanate, such as an aliphatic, cycloaliphatic, araliphatic or aromatic polyisocyanate, may be used either singly or in mixtures of two or more. The aliphatic isocyanates provide generally better light stability than the aromatic compounds. Aromatic polyisocyanates, on the other hand, are generally more economical and reactive toward polyols and other poly(active hydrogen) compounds than aliphatic polyisocyanates. Suitable aromatic polyisocyanates include but are not limited to those selected from the group consisting of 2,4-toluene diisocyanate, 2,6-toluene diisocyanate, a dimer of toluene diisocyanate (available under the trademark Desmodur™ TT from Miles Coating Division), diphenylmethane 4,4'-diisocyanate (MDI),

1,5-diisocyanato-naphthalene, 1,4-phenylene diisocyanate, 1,3-phenylene diisocyanate, and mixtures thereof. Examples of useful cycloaliphatic polyisocyanates include but are not limited to those selected from the group consisting of dicyclohexylmethane diisocyanate ($H_{12}$MDI, commercially available as Desmodur™W from Miles Coating Division), isophorone diisocyanate (IPDI), 1,4-cyclohexane diisocyanate (CHDI), 1,4-cyclohexanebis(methylene isocyanate) (BDI), 1,3-bis(isocyanatomethyl)cyclohexane ($H_6$XDI), and mixtures thereof. Examples of useful aliphatic polyisocyanates include but are not limited to those selected from the group consisting of hexamethylene 1,6-diisocyanate (HDI), 1,12-dodecane diisocyanate, 2,2,4-trimethyl-hexamethylene diisocyanate (TMDI), 2,4,4-trimethyl-hexamethylene diisocyanate (TMDI), 2-methyl-1,5-pentamethylene diisocyanate, dimer diisocyanate, the urea of hexamethyl diisocyanate, and mixtures thereof. Examples of useful araliphatic polyisocyanates include but are not limited to those selected from the group consisting of m-tetramethyl xylylene diisocyanate (m-TMXDI), p-tetramethyl xylylene diisocyanate (p-TMXDI), 1,4-xylylene diisocyanate (XDI), 1,3-xylylene diisocyanate, and mixtures thereof. Preferred polyisocyanates, in general, include those selected from the group consisting of isophorone diisocyanate, toluene diisocyanate, dicyclohexylmethane 4,4'-diisocyanate, MDI, derivatives of all the aforementioned, and mixtures thereof.

Polyisocyanates or polyisocyanate adducts containing more than two isocyanate groups in the molecule can be included to introduce branching into the prepolymer which enhances the solvent resistance, water resistance and hardness of coatings made from these polyurethane dispersions; however, a predominance of diisocyanates is required. Limited amounts of polyisocyanates containing greater than 2 isocyanate groups can be employed subject to the urethane branching coefficient calculation discussed previously. Typical isocyanates from this group include but are not limited to those selected from the group consisting of triphenylmethane 4,4',4"-triisocyanate, tris-(4-isocyanatophenyl)-thiophosphate, and the like. Similarly, limited amounts of polyisocyanate adducts containing more than two isocyanate groups can be employed subject to the urethane branching coefficient calculation discussed previously including but not limited to those selected from the group consisting of trimer of isophorone diisocyanate (Polyisocyanate IPDI-T 1890, commercially available from Hüls America), trimer of HDI (commercially available as Desmodur™N3300 from Miles Polymer Division), trimer of m-tetramethylxylene diisocyanate (a trifunctional polyisocyanate adduct of trimethylolpropane and m-tetramethylxylene diisocyanate available as Cythane™ 3160 from American Cyanamid Co.).

The isocyanate-derived moiety of the polyurethane is thus a polyvalent organic radical of from 2 to 40 carbon atoms free from isocyanate-reactive or hydroxyl-reactive groups, e.g.,-OH, -SH, $-NH_2$ -NHR, $-CO_2H$, -COCl, $-SO_3H$, $-SO_2Cl$, etc., wherein R is selected from the group consisting of phenyl, straight or branched aliphatic groups comprising from 1 to 12 carbon atoms, and cycloaliphatic groups. Preferably,R is a lower alkyl group comprising 1 to 4 carbon atoms.

In addition, blocked polyisocyanates made from the above can be used. A blocked polyisocyanate can be prepared by reacting one of the above polyisocyanates with a blocking agent. Typical isocyanate blocking agents include but are not limited to those selected trom the group consisting of phenol, nonyl phenol, methylethyl ketoxime, sodium bisulfate, and ε-caprolactam. These blocked prepolymers can be used in conjunction with diamines or diamine precursors such as ketamines.

Polyols

The polyol component comprises a compound having 2 isocyanate reactive functional groups (diols and derivatives thereof) and optionally further comprises a compound having greater than 2 isocyanate reactive groups (triols, tetrols, etc. and/or derivative thereof), each isocyanate reactive group having at least one active hydrogen.

Illustrative polyols include the following classes of compounds:

(i) the polyester polyols, including lactone polyols and the alkylene oxide adducts thereof;
(ii) the polyether polyols, including polyoxyalkylene polyols, polyoxycycloalkylene polyols, polythioethers, and alkylene oxide adducts thereof; and
(iii) specialty polyols including but not limited to those selected from the group consisting of polybutadiene polyols, hydrogenated polybutadiene polyols, polycarbonate polyols, hydroxy alkyl derivatives of bisphenol A such as bis (2-hydroxyethyl) bisphenol A, polythioether polyols, fluorinated polyether polyols, amine-terminated polyether polyols, amine terminated polyester polyols, and acrylic polyols.

The term "alkylene oxide" includes, for example, ethylene oxide, 1,2-epoxypropane, 1,2-epoxybutane, 2,3-epoxybutane, isobutylene oxide, epichlorohydrin, mixtures thereof, and the like.

Preferred polyols are the polyester polyols and polyoxyalkylene polyols.

Polyester polyols are esterification products which range from liquids to non-crosslinked solids, i.e., solids which are soluble in many of the more common inert normally liquid organic media, and which are prepared by the reaction of polycarboxylic acids, their anhydrides, their esters or their halides, with a stoichiometric excess of a polyol. Preferred examples of polycarboxylic acids which can be employed to prepare the polyester polyols include dicarboxylic

acids and tricarboxylic acids, such as maleic acid, succinic acid, glutaric acid, adipic acid, pimelic acid, suberic acid, azelaic acid, sebacic acid, chlorendic acid, 1,2,4-butane-tricarboxylic acid, phthalic acid, terephthalic acid, and the like. The esterification reaction followed in preparing polyester polyols from polyfunctional acids and polyols is well known in the art. Examples of specific useful polyester polyols include but are not limited to those selected from the group consisting of polyglycol adipates, polyethylene terephthalate polyols, polycaprolactone polyols.

Lactone polyols are known in the art and may be prepared, for example, by reacting a lactone such as epsilon-caprolactone or a mixture of epsilon-caprolactone and an alkylene oxide with a polyfunctional initiator such as polyhydric alcohol. The term "lactone polyols" also includes the various "copolymers" such as lactone copolyesters, lactone polyester/polycarbonates, lactone polyester/polyethers, lactone polyester/polyether/polycarbonates, and the like.

Polyether polyols include polyoxyalkylene polyols including alkylene oxide adducts of, for example, water, ethylene glycol, diethylene glycol, propylene glycol, butylene glycol, dipropylene glycol, glycerol, polycaprolactone triols, tetra substituted hydroxypropyl ethylene diamine available under the tradename Quadrol™ from BASF and the like. The alkylene oxides employed in producing polyoxyalkylene polyols normally comprise from 2 to 4 carbon atoms. Grafted polyether polyols such as styrene/acrylonitrile grafted polyether polyols and polyurea polyols are also examples of useful polyether polyols. Polyethylene oxide, propylene oxide and mixtures thereof are preferred. Such polyalkylene polyols are well known in the art.

Another useful class of polyether polyols is the polyoxytetramethylene glycols, which may be prepared, for example, by polymerizing tetrahydrofuran in the presence of acidic catalyst. Random copolymers of poly(tetramethylene oxide)/poly(ethylene oxide), such as those available under the trademark PolyTHF™ ER1250 (commercially available from BASF), are also useful polyether polyols. Examples of useful specific polyether polyols include but are not limited to those selected from the group consisting of poly(oxypropylene) glycols, ethylene oxide (eo) capped poly (oxypropylene) glycol, $\alpha,\omega$-diamino poly(oxypropylene), aromatic amine-terminated poly(oxypropylene), graft-polyether polyols, poly(oxyethylene) polyols, $\alpha,\omega$-diamino poly(tetramethylene ether), polybutylene oxide polyols, poly (butylene oxide-ethylene oxide) random copolymers, and mixtures thereof.

Other variants, adducts, and derivatives of polyether polyols, are useful including but not limited to those selected from the group consisting of amine-terminated polyoxyalkylene and polyoxymethylene compounds such as $\alpha,\omega$-diamino poly(oxypropylene), POLAMINE™ (an aromatic amine-terminated poly(oxytetramethylene) glycol commercially available from Air Products Co.), polythioether polyols such as LP series of materials commercially available from Morton-Thiokol Co., fluorinated polyether polyols, and mixtures thereof.

The molecular weight of the polyol component is one significant factor in determining the final properties of the polyurethane; generally, the higher the molecular weight of the polyol component, the softer the resulting polyurethane. The term "molecular weight" is used herein to refer to the number average molecular weight ($\overline{M}_n$). Polyols of molecular weight as low as 250 and as high as about 35,000 produce useful products, molecular weight ranges of 500 to 3000 being preferred and most readily commercially available.

The polyol-derived moiety of the polyurethane is thus a polyvalent organic radical of from 10 to 1000 carbon atoms free from isocyanate-reactive or hydroxyl reactive groups.

<u>Water-Solubilizing Compounds</u>

Another component used in preparing the isocyanate terminated prepolymer is a water-solubilizing compound. The water solubilizing compound possesses at least one water solubilizing group and at least one isocyanate reactive functional group, each isocyanate reactive functional group containing at least one active hydrogen. Preferably, each compound has two isocyanate reactive groups which are connected through an organic radical to each other and to a water-solubilizing group. Suitable water-solubilizing groups, such as carboxyl, sulfate, sulfonate, phosphonate, ammonium, including quaternary ammonium, and the like, are those which ionize in water when combined with a corresponding salt-forming compound. Preferred isocyanate-reactive hydrogen atoms are those which react readily with an isocyanate group at or below about 75°C such as the hydrogen atoms of aliphatic hydroxyl, aliphatic mercapto, aliphatic amino, and aromatic amino groups and are not those hydrogens present in the water solubilizing group which could be considered active hydrogens under certain circumstances. Hydrogen atoms which react slowly, such as the "acidic" hydrogen atoms in amido groups, and sterically hindered or very slow reacting acidic hydrogen atoms such as the carboxylic acid group of dimethylpropionic acid are not included.

A suitable water-solubilizing compound is represented by the formula $(HB)_2R^1A$ in which $R^1A$ is a water-solubilizing moiety; B is selected from the group consisting of O, S, NH, and NR; $R^1$ represents a trivalent organic linking group comprising 2 to 25 carbon atoms which may include tertiary nitrogen or ether oxygen atoms and is free from isocyanate-reactive hydrogen containing groups; A is a water solubilizing ionic group such as those selected from the group consisting of $-SO_3M$, $-OSO_3M$, $-CO_2M$, $-PO(OM)_3$, $-NR_2{\cdot}HX$, and $-NR_3X$, wherein M is H or one equivalent of a monovalent or divalent soluble cation such as sodium, potassium, calcium, and $NR_3H^+$, wherein X is a soluble anion such as those selected from the group consisting of halide, hydroxide, and deprotonated carboxylic acid, and R

is selected from the group consisting of a phenyl group, cycloaliphatic group, or a straight or branched aliphatic group having from 1 to 12 carbon atoms. Preferably, R is a lower alkyl group comprising I to 4 carbon atoms. The group $-NR_3X$ represents a quaternary ammonium substituent which is a salt of water soluble acid, such as trimethyl ammonium chloride, pyridinium sulfate, etc. or ammonium substituent and the group $-NR_2 \cdot HX$ is a salt of a water soluble acid, such as dimethyl ammonium acetate or propionate. A representative suitable solubilizing molecule would be α,α-bis (hydroxymethyl) propionic acid ammonium salt. The amount of water-solubilizing group provided should be sufficient to self-emulsify the prepolymer, typically in the range of isocyanate-to-solubilizing group ratio of from 4:1 to 16:1, preferably at a proportion of from 5:1 to 11:1.

Illustrative solubilizing compounds include but are not limited to those selected from the group consisting of:

$$(HOCH_2)_2C(CH_3)COOH;$$

$$H_2N—C_2H_4—NH—C_2H_4—SO_3H;$$

$$H_2N\text{-}C_3H_6\text{-}N(CH_3)\text{-}C_3H_6\text{-}SO_3H;$$

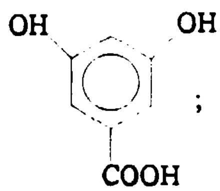 ; 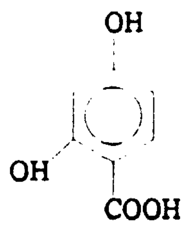 ; 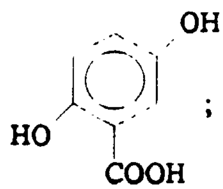 ; 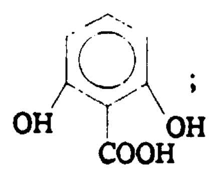 ;

$$HOCH_2\text{-}CH(OH)\text{-}CO_2Na;$$

$$[(HOCH_2)_2CHCH_2—COO]^-[NH(CH_3)_3]^+;$$

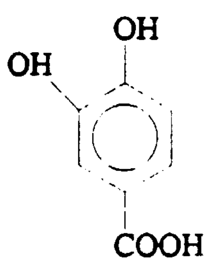 ; 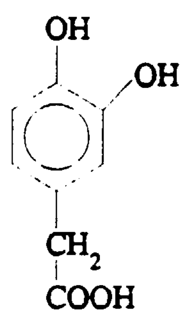 ; 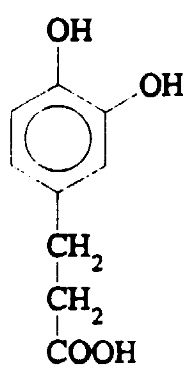 ;

$$CH_3(CH_2)_2CH(OH)—CH(OH)(CH_2)_3CO_2K;$$

$$(HOC_2H_4)_2N—C_3H_6—OSO_3Na;$$

$$(HOCH_2CH_2)_2NC_6H_4OCH_2CH_2OSO_2OH;$$

and mixtures thereof.

Isocyanate-Reactive Silane Compounds

In addition to the isocyanate-terminated polyurethane prepolymer discussed supra, isocyanate-reactive silane compounds are useful in forming the dispersion of the invention. Silane compounds containing one, two, or three hydrolyzable groups on the silicon and one organic group including an isocyanate-reactive radical are most suitable for forming the terminal groups. As has been pointed out above any of the conventional hydrolyzable groups, such as those selected from the group consisting of hydrogen, alkoxy, acyloxy, halogen, amino, oxime, and the like, can be used. The hydrogen halide liberated from halogen-containing silanes may be disadvantageous when cellulose substrates are used and amino containing silazines are relatively unstable and difficult to handle. The alkoxy group is the most preferred hydrolyzable group and particularly preferred compounds are those of the structure $(R^3O)_3SiR^4$-Z, wherein $(R^3O)_3SiR^4$- is a silyl moiety, $R^3$ is selected from the group consisting of hydrogen, lower alkyl radicals of one to four carbon atoms, preferably one or two (i.e., methoxy, ethoxy); lower acyl groups of 2 to 5 carbon atoms, preferably 2 or 3 (i.e., acetyl or propionyl), and lower oxime groups of the formula $-N=CR^5R^6$, wherein $R^5$ and $R^6$ are monovalent lower alkyl groups comprising 1 to 12 carbon atoms, which can be the same or different, preferably selected from the group consisting of methyl, ethyl, propyl, and butyl; $R^4$ is a divalent organic bridging radical of 2 to 20 carbon atoms free from isocyanate reactive groups, preferably 3 to 10 carbon atoms, selected from the group consisting of divalent hydrocarbyl radicals free from olefinic unsaturation and free from isocyanate-reactive groups, and divalent polyoxyalkylene mono- or poly-oxyalkylene radicals containing not more than one ether oxygen per two carbon atoms; and Z is an isocyanate reactive group such as those selected from the group consisting of -OH, -SH, -NHR, $-NH_2$, $-N(C_2H_4OH)_2$, and other active hydrogen terminated compounds, wherein R is selected from the group consisting of phenyl, straight or branched aliphatic groups comprising from 1 to 12 carbon atoms, and cycloaliphatic groups.

Representative divalent alkylene radicals (i.e., $R^4$) include but are not limited to those selected from the group consisting of $-CH_2CH_2-$, $-CH_2CH_2CH_2-$, $-CH_2CH_2CH_2OCH_2CH_2-$, and $-CH_2CH_2C_6H_4CH_2CH_2-$. Other preferred compounds are those which contain one or two hydrolyzable groups, such as those having the structures

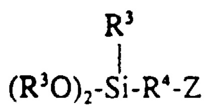
and
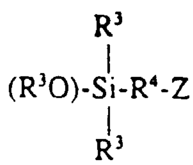

wherein $R^3$ and $R^4$ are as previously defined.

Following the hydrolysis of some of these terminal silyl groups, the polymers are curable by mutual interreaction to form siloxane linkages, e.g.,

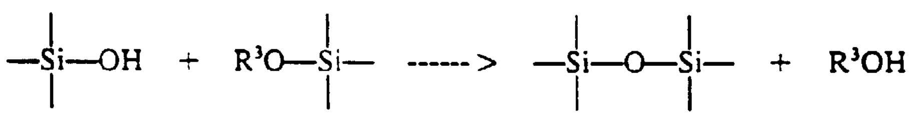

Such silicon compounds are well known in the art and many are commercially available or are readily prepared. Representative isocyanate-reactive silanes include but are not limited to those selected from the group consisting of:

$$H_2NCH_2CH_2CH_2Si(OC_2H_5)_3 \,;$$

$$H_2NCH_2CH_2CH_2Si(OCH_3)_3 \,;$$

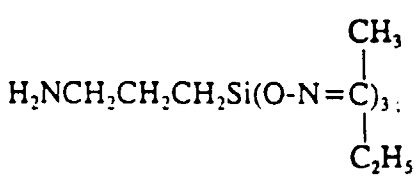

$$HSCH_2CH_2CH_2Si(OCH_3)_3 ;$$

$$HO(C_2H_4O)_3C_2H_4N(CH_3)(CH_2)_3Si(OC_4H_9)_3 ;$$

$$H_2NCH_2C_6H_4CH_2CH_2Si(OCH_3)_3 ;$$

$$HSCH_2CH_2CH_2Si(OCOCH_3)_3 ;$$

$$HN(CH_3)CH_2CH_2Si(OCH_3)_3 ;$$

$$HSCH_2CH_2CH_2SiCH_3(OCH_3)_2;$$

$$(H_3CO)_3SiCH_2CH_2CH_2NHCH_2CH_2CH_2Si(OCH_3)_3 ;$$

and mixtures thereof.

Salt-Forming Compounds

When acidic functional water-solubilizing compounds are employed in the isocyanate-terminated prepolymer, basic salt-forming compounds, such as tertiary amines, inorganic bases including but not limited to those selected from the group consisting of sodium hydroxide, potassium hydroxide, cesium hydroxide, lithium hydroxide, calcium hydroxide, magnesium hydroxide, zinc hydroxide, and barium hydroxide are used in a sufficient amount (i.e., in a quantity to maintain a pH of greater than about 8) preferably in the water phase, but optionally in the preparation of the prepolymer, to anionically stabilize the dispersions of the present invention through the formation of salts with the incorporated, pendant acidic water-solubilizing groups on the resultant polyurethane. Examples of useful salt-forming compounds include but are not limited to those selected from the group consisting of ammonia, trimethylamine, triethylamine, tripropylamine, triisopropylamine, tributylamine, triethanolamine, diethanolamine, and mixtures thereof. Preferred salt forming compounds include those selected from the group consisting of ammonia, trimethylamine, triethylamine, tripropylamine, and triisopropylamine, since dispersions containing polyurethanes prepared therefrom are less hydrophilic upon coating and cure.

When an amine functional or other basic water-solubilizing compound is used, the polyurethane dispersions preferably maintain a pH of less than about 6 to be cationically stabilized. Examples of useful acidic compounds include but are not limited to those selected from the group consisting of acetic acid, formic acid, citric acid, octanoic acid, phenols and substituted phenols, hydrochloric acid, hydrobromic acid, hydrofluoric acid, and mixtures thereof. These acidic salt-forming compounds are generally a component of the water phase when the polyurethane dispersions of the present invention are prepared; however, they may alternatively be added to the polyurethane prepolymer prior to the dispersion of the prepolymer in the water phase.

However, when straight chain aliphatic or aromatic compounds containing 2 or more isocyanate groups are used it is preferred to add the salt forming compound to the water phase. Certain salts formed by the reaction of salt forming compounds and water solubilizing groups such as potassium hydroxide in combination with a carboxylic acid solubilizing group could result in an undesired isocyanate reaction.

Chain Extenders

The term "chain extender" as used herein includes external chain extenders and blocked external chain extenders such as ketamines and oxazolines. The term chain extender as used refers to externally added chain extenders and excludes those generated in situ. Thus, the chain extension resulting from the reaction of the polyisocyanate compounds with the water of the water phase of the polyurethane dispersions is not denoted by this term and water is not considered an "external" chain extender. Chain extenders are employed to enhance the mechanical properties of the polyurethane of the present invention. Polyols and polyamines useful as chain extenders as the term is used herein are those usually having a number average molecular weight of about 249 or less. The chain extender component

must comprise a difunctional chain extender and may optionally comprise a chain extender having a functionality of three or greater. Generally, due to the kinetics involved in the prepolymer and dispersion stages of the methods of the present invention, it is preferable to incorporate hydroxy functional chain extenders in the prepolymer and primary amine functional chain extenders in the water phase when preparing the silyl-terminated polyurethane dispersions. Through proper and judicious selection of reaction conditions, starting materials and additives known in the polyurethane art, such as blocked amines, catalysts, temperature, etc., reaction kinetics can be adapted to allow for the use of primary amines in the prepolymer reaction mixture and hydroxy functional chain extenders in the water phase.

Difunctional Chain Extenders

Examples of useful diol chain extenders include but are not limited to those selected from the group consisting of 1,4-butanediol, ethylene glycol, diethylene glycol, dipropylene glycol, neopentyl glycol, 1,6-hexanediol, 1,4-cyclohexane dimethanol, bis(2-hydroxylethyl)hydroquinone (HQEE), and mixtures thereof.

Difunctional sterically hindered amines are included in the definition of "difunctional chain extender" as used herein. However, the difunctional stericallv hindered amines having the general formula

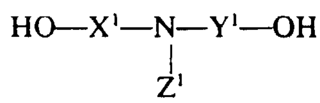

wherein:

$X^1$, $Y^1$, $Z^1$ are independently selected from the group consisting of cyclic and aliphatic organic radicals free of isocyanate reactive functional groups, and with the proviso that at least 75% of the $Z^1$ groups have at least 4 carbon atoms are preferred difunctional chain extenders only when coatings in accordance with the invention are to be removed by aqueous compositions having pH ranging from 2 to 5. Specific examples of sterically hindered amines are the following: phenyldiethanolamine, n-butyldiethanolamine, and the like.

Examples of useful diamine chain extenders for coatings which are not readily removed by aqueous compositions having pH ranging from 2 to 5 include but are not limited to those selected from the group consisting of 4,4'-methylene bis(o-chloroaniline)(MOCA or MBOCA), 2,5-diethyl-2,4-toluene diamine (DETDA), 4,4'-methylene bis (3-chloro-2,6-diethylaniline)(MCDEA), propylene glycol bis(4,4'-aminobenzoate), 3,5-di(thiomethyl)-2,4-toluene diamine, methylene bis(4,4'-aniline)(MDA), ethyl-1,2-di(2-amino thiophenol), 4-chloro-3,5-diamino isobutylbenzoate, 1,2-diaminoethane, 1,4-diaminobutane, 1,6-diaminohexane, N,N'-dialkyl(methylene dianiline), N,N'-dialkyl(1,4-diaminobenzene), and mixtures thereof.

Polyfunctional Chain Extenders

Chain extenders and/or chain extender adducts having more than two isocyanate reactive functional groups, each functional group in the molecule having at least one active hydrogen (i.e., polyfunctional chain extenders) can be included in the polymer; however, difunctional chain extenders are required. Thus triols, tetrols, etc., can be used to introduce branching into the polyurethanes of the invention. These polyfunctional chain extenders are preferably low molecular weight and best utilized with short chain extenders such as 1,4-butanediol or the chain extenders as described infra. Small amounts of branching in the polyurethane backbone improve tensile strength and solvent resistance and decrease cold-flow of the final coatings prepared from the dispersions of the invention. On the other hand, excessive amounts of branching in the polyurethane of the dispersion cause poor flow and thus less desirable film formation, freeze/thaw stability and processibility. Examples of useful polyfunctional chain extenders include but are not limited to those selected from the group consisting of 1,2,6-hexanetriol, 1,1,1-trimethylolethane or propane, pentaerythritol, triisopropanol amine, and triethanol amine.

Catalysts

The polyurethane prepolymer compositions of the present invention may be prepared without the use of a catalyst when the reaction is performed at a sufficient temperature (i.e., 20° to 100°C) to cause the reaction between the polyisocyanate component and the active hydrogen containing compounds of the polyurethane prepolymer mixture. However, a catalyst may optionally be used according to the method of the invention. Depending on reaction conditions (e.g., reaction temperature and/or polyisocyanate used), a catalyst at the level of up to about 0.5 part by weight of the isocyanate-terminated prepolymer typically 0.00005 to 0.5 part by weight may be required to form the prepolymer by

the methods of the present invention. Examples of useful catalysts include but are not limited to those selected from the group consisting of tin II and IV salts such as stannous octoate and dibutyltin dilaurate, respectively, tertiary amine compounds such as triethyl amine and bis(dimethylaminoethyl) ether, morpholine compounds such as β,β'-dimorpholinodiethyl ether, bismuth carboxylates, zinc-bismuth carboxylates, iron (III) chloride, potassium octoate, and potassium acetate. Examples of other useful catalysts can also be found in Polyurethanes: Chemistry and Technology, Part I, Table 30, Chapter 4, Saunders and Frisch, Interscience Publishers, New York, 1963.

Solvents

Although the polyurethanes of the present invention can be prepared without the use of solvents, solvents can be used to control the viscosity of the isocyanate-terminated prepolymer. Examples of useful solvents (which are typically volatile organic compounds) added for this purpose include but are not limited to those selected from the group consisting of ketones, tertiary alcohols, ethers, esters, amides, hydrocarbons, chlorohydrocarbons, chlorocarbons, and mixtures thereof. These are usually stripped at the end of the reaction by vacuum heating.

Solvents may also be required to promote the coalescence of the silyl-terminated polyurethane particles of the dispersion to form a continuous film. Examples of such coalescing solvents for use in the dispersion include but are not limited to those selected from the group consisting of n-methyl pyrrolidinone (NMP), n-butyl acetate, dimethyl formamide, toluene, methoxypropanol acetate (PM acetate), dimethyl sulfoxide (DMSO), ketones, alcohols, dimethyl acetamide, and mixtures thereof.

A polyurethane prepolymer is prepared in the first step of the process of making the silyl-terminated polyurethane dispersions of the present invention. To a reactor equipped with a stirrer, a heater, and a dry gas purge (for example, nitrogen, argon, etc.), the polyisocyanate component is added to the reactor with optional coalescing solvent and optional dry solvent (e.g. anhydrous methylethyl ketone, having $H_2O$ levels of 0.05% or less). The reactor is heated to the reaction temperature (generally from 20°C to 100°C) and the polyol component, optional catalyst, optional sterically hindered amine and the water solubilizing compound is added slowly, keeping the reaction exotherm below 100°C to minimize unwanted side reactions. Optionally all or a portion of the chain extender component and the isocyanate reactive silane compound can be added at this point. If such optional compounds are included, then the isocyanate reactive functional groups on the chain extender and silane should not contain large amounts of a primary amine because there can be an unacceptable viscosity increase in the prepolymer which could make the dispersion step in water difficult.

As the polyurethane prepolymer is made, additional chain extender and polyisocyanate components can optionally be incorporated into the reaction mixture. In a preferred embodiment of the present method, a polyisocyanate adduct having greater than 2 isocyanate groups can be added after about 80% of the polyisocyanate, polyol and optional chain extender components have converted to the prepolymer. The reaction is then allowed to proceed until the desired excess on an isocyanate equivalent basis of 1.4 to 4 times the combined active hydrogen equivalent as contributed by the polyol component, the water solubilizing compound, and optional chain extender component and isocyanate reactive silane compound is achieved.

Optionally the salt forming compound can be added to this polyurethane prepolymer reaction mixture. If the salt forming compound is added, care should be taken to reduce temperature and/or disperse the polyurethane prepolymer in the water phase shortly after this addition. The product of the salt forming compound with the water-solubilizing compound can produce a salt which may in some cases catalyze an unwanted side reaction. This side reaction could result in an undesired viscosity increase making the dispersion step difficult. This rise in viscosity can be minimized or avoided by taking the precautions listed above. Optional solvent can be added at this point to modify the viscosity and/or enhance the processibility of the polyurethane prepolymer. The viscosity of the prepolymer should be low enough (about 70,000 cPs or less) to facilitate the dispersion step.

The second step is to make a water phase. The water phase typically comprises water, the salt forming compound, and all or the remainder of the chain extender component and the isocyanate reactive silane compound. Deionized water is used to prevent instability and agglomeration of the polyurethane prepolymer when it is subsequently dispersed into the water phase. Primary amine functional chain extenders and isocyanate reactive silane compounds are preferred in the water phase due to their relatively rapid reactivity with the isocyanate groups of the polyurethane prepolymer. If the final amount of the chain extender component, isocyanate reactive silane compound or salt forming compound has been added previously to the prepolymer, then they need not be added to the water phase. If partial additions of these components and compounds have occurred in the prepolymer, the remaining material may be added to the water phase, assuming compatibility with the water can be achieved, i.e., the components are either water soluble or water dispersible. The pH of the water phase is then measured to assure that the dispersion will be stable. For cationic dispersions, enough salt forming compound is added to assure that the dispersion will be stable. Usually a pH of about 6 or lower is required, with a pH of about 4.5 or less preferred. An anionic dispersion is adjusted to achieve a pH of about 7 or higher, preferably a pH of about 8 or more.

The third step is to disperse the polyurethane prepolymer of the first step into the water phase of the second step. The water phase is added to the holding tank of a homogenizer and sufficient air pressure is supplied to pump the water phase through the homogenizer's high shear rotor. The polyurethane prepolymer is slowly injected into the circulating water phase just prior to the high shear rotor. Care should be taken not to inject material too quickly or the high shear rotor will stop the dispersion process. The dispersed material is then transferred back into the water phase holding tank. On the average two or three passes through the homogenizer typically yields a mean particle size in the range of 0.06 to 0.3 microns. However, particle size can vary with equipment, viscosity, presence of solvent temperature, etc. The particle size can be controlled by the viscosity of the first step. The higher the viscosity, generally the larger the particle size.

Introduction of solvents into polyurethane prepolymer reaction mixture will have the result of lowering the particle size. If such an optional solvent was introduced, e.g., methylethyl ketone, the final step would be to strip off the unwanted solvent. This can be accomplished using a wiped film evaporator which applies heat and vacuum to a thin film of the material efficiently stripping off the solvent. Under laboratory conditions, a Haake Rotoevaporator or other similar equipment can be used to remove the solvent.

Optional Additives

One or more additives may be added to the dispersion of the invention including but not limited to those selected from the group consisting of crosslinking agents, plasticizers, thixotropic agents, biocides, adhesion promoters such as silane adhesion promoters, corrosion inhibitors, pigments, colorants, photostabilizers, antioxidants, and anti-fouling agents. To further enhance the moisture resistivity of the formulated silane terminated polyurethane dispersions 0 to 5 parts by weight of a crosslinking agent, preferably 3 to 5 parts by weight, based upon 100 parts by weight of the dispersion may be added. Many salt forming compounds contribute to the hydrophilicity of coatings containing polyurethanes prepared therefrom. The crosslinker makes the coating containing such a polyurethane more hydrophobic.

Plasticizers are used in weight % ranging from 1-6 wt %, based on total weight of composition, when the compositions are used as coatings on composition vinyl and other substrates where the coating is to be removed by aqueous compositions having pH of 2 to 5. Suitable plasticizers include typical and preferable plasticizers for use in the present invention are mono- and dialkyl phthalates, sebacates, and phosphates, such as dinonyl phthalate, dioctyl phthalate, tributoxyethyl phosphate, dioctyl sebacate, and the like.

Particularly useful additives in the wood coating formulations of the present invention include but are not limited to defoaming agents such as Surfynol™ DF110L (a high molecular weight acetylenic glycol nonionic surfactant available from Air Products & Chemicals, Inc.), SWS-211 (a polydimethylsiloxane aqueous emulsion, available from Wacker Silicone Corp.), Dehydran™ 1620 (modified polyol/polysiloxane adducts available from Henkel Corp.), and DB-31 (a silicone additive available from Dow Corning), and DB-65 (a silicone additive available from Dow Corning); mar aids such as Byk® 301, Byk® 321 and Byk® 341 (polyether modified polydisiloxane copolymers, all available from Byk Chemie); flow and levelling agents such as Igepal™ CO-630 (an ethoxylated nonylphenol nonionic surfactant available from Rhone-Poulenc Surfactant & Specialty Div.), Surfynol™ 104H (a nonionic surfactant comprising a solution of tetramethyl decynediol in ethylene glycol available from Air Products & Chemicals, Inc.), Surfynol™ 465 (an ethoxylated tetramethyl decynediol nonionic surfactant available from Air Products & Chemicals, Inc.), Fluorad™ FC-129 (a potassium fluorinated alkyl carboxylate anionic surfactant avaible from 3M Co.), Fluorad™ FC-171 (a fluorinated alkyl alkoxylate nonionic surfactant available from 3M Co.), Fluorad FC-430 (a fluorinated alkyl ester nonionic surfactant available from 3M Co.), and Rexol™ 25/9 (an alkyl phenol ethoxylate nonionic surfactant available from Hart Chemical Ltd.); coalescing solvents such as those described supra to assist in film formation; thickening agents such as the associative thickeners Acrysol™ ASE-60, Acrysol™ RM-825, Acrysol™ TT-935 and Acrysol™ 615, all available from Rohm and Haas Co.; and photostabilizers including but not limited to ultraviolet light (UV) stabilizers such as Tinuvin™ 144 (a hindered amine photostabilizer), Tinuvin™ 292 (a hindered amine photostabilizer) and Tinuvin™ 328 (an ultraviolet absorber), all commercially available from Ciba-Geigy Ltd. For marine wood coatings of the present invention which are often subject to intense UV exposure, at least about 0.1 part by weight of an ultraviolet light stabilizer per 100 parts by weight silyl-terminated polyurethane dispersion can be used to inhibit and retard the yellowing and photodegradation of such formulations, typically 0.1 to 10 parts, preferably 1 to 10 parts.

Uses

The dispersions of the invention can be coated on a variety of substrates to form high gloss, water and solvent resistant, tough, scratch resistent, preferably light stable (non-yellowing) films.

Substrates such as leather, woven and nonwoven webs, glass, glass fibers, wood (including oil woods such as teak, etc.), metals (such as aluminum), treated metal such as primed and painted metals (such as those comprising automobile and marine surfaces), polymeric materials and surfaces, such as plastics (appliance cabinets, for example),

composition vinyl, etc., can be coated with the dispersions or films.

The composition of the invention has utility as an intermediate coating. It is generally applied over the several primer and sealer layers (well known to those skilled in the art) used to coat metal (including primed metal and painted metal), plastic, and fiber-reinforced plastic composite substrates used in the fabrication of vehicular bodyparts and appliance cabinets. Vehicular bodyparts include, for example, hoods, fenders, bumpers, grills, rocker panels and the like; and appliance cabinets include, for example, washers, clothes dryers, refrigerators, and the like. Examples of vehicles on which the compositions can be used include automobiles, trucks, bicycles, airplanes, etc. The composition of the invention can be used as an intermediate coating because it is applied under top/finish coatings which typically comprise paints, enamels, and lacquers and the like that in many cases are chemically crosslinked to provide durable, scratch-resistant surface finishes. The composition of the invention adheres to most body filler compositions and thus also has utility in the autobody repair trade.

The composition of the invention can also be coated onto composite materials, such as fiber reinforced plastics wherein the plastics are toughened by the addition of glass, boron, graphite, ceramic, or dissimilar polymer fibers; and filled plastics wherein the plastic properties are modified by the addition of inorganic powders, (such as calcium carbonate, talc, titanium dioxide, carbon black, etc.), flakes (such as aluminum, mica, etc.), and microspheres/beads (such as glass or polymeric). The composition of the invention can be coated onto a number of articles such as vehicular body parts and appliance cabinets.

The compositions of the invention may also be coated on surfaces such as concrete, asphalt, etc. (roadways, patios, sidewalks, etc.). An adhesive backed pavement marking tape may be adhered thereto.

Compositions of the present invention for use as UV stabilized coatings such as furniture and/or marine finishes can be formulated to retard or eliminate the effects of UV degradation by combining cycloaliphatic isocyanates, such as isophorone and bis(cyclohexyl)diisocyanate, with UV stabilizers and antioxidants. Moisture adsorption/permeation can be minimized by the use of the relatively more hydrophobic polyester based polyols. Coating elasticity can be controlled by adjusting the isocyanate equivalent to active hydrogen ratio, chain extender content and the crosslink density of the cured film. The crosslink density can be controlled by adjusting such parameters as the urethane branching coefficient and molecular weight per crosslink.

The UV stabilized coating composition of the invention comprises 85 to 99.9 % by weight dispersion of the invention, 0.1 to 10 % by weight of a photostabilizer, 0 to 10 % by weight of a surfactant, and 0 to 10 % by weight of a thickening agent based upon the total weight of the coating composition, and total 100%. Preferably the wood coating composition comprises 90 to 97 % by weight dispersion of the invention, and 0.2 to 5 % by weight photostabilizer, 0.1 to 6 % by weight of a surfactant, and 0.1 to 1 % by weight of a thickening agent based upon the total weight of the coating composition. Most preferably, the wood coating composition of the invention comprises 92 to 96 percent by weight dispersion of the invention, 1 to 3 % by weight photostabilizer, 1 to 5 % by weight surfactant and 0.1 to 0.5 percent by weight thickening agent, based upon the total weight of the coating composition.

When used in a chip-resistant coating composition, the composition comprises

(a) 0.5 to 99.9 weight percent of polymer dispersion of formula (I) devoid of Z groups,
(b) 0.1 to 15 weight percent of a thickening agent;
(c) 0 to 70 weight percent of a pigment;
(d) 0 to 10 weight percent of a surfactant;
(e) 0 to 80 weight percent of an aqueous thermoplastic polymer dispersion; and
(f) 0 to 15 weight percent of an additive(s);

wherein the weight percentages are based upon 100% solids and the total of the weight percentages of (a) plus (b) plus (c) plus (d) plus (e) plus (f) equal 100%, and a sufficient amount of water, if necessary, such that the composition has a weight percent solids of 5% to 60%.

In dispersions of the invention including sterically hindered amine monomer Z, the mole % of the total moles of reactants is preferably no less than 2 but no more than 20. Below a molar percentage of about 2, coatings made using the dispersions of the invention will be difficult to remove by aqueous removing agents having pH ranging from 2 to 5. Above about 20 mole percent, dispersions of the invention may have poor rheological properties, and coatings made therefrom may exhibit intolerable sensitivity to water and mildly acidic materials. It may be possible to coat dispersions of the invention having greater than 20 mole percent hindered amine using elevated temperatures and/or by adding plasticizers, but increasing the heating temperature adds a heating step, which is feasible but not as preferred. The water solubilizing compound will preferably range from 5 to 15 mole percent of the total moles of reactants (i)-(iv). Below about 5 mole percent, chain extended polyurethanes produced may be difficult to disperse, and dispersions produced may be unstable (i.e. subject to demulsification at temperatures above room temperature, or 20°C). On the other hand, employing more than about 15 mole percent may produce a water-sensitive coating. Molar percentages of polyol in the prepolymers are preferably no more than about 20 percent, more preferably ranging from 4 to 12 percent

of the total moles of reactants. Exceeding the upper limit may produce polyurethane coatings which have less resistance to abrasion, scuffing, and the like, for most coating applications, while using less than 4 mole percent in conjunction with a polyisocyanate mole percentage exceeding about 60 produces polyurethane polymers which may be difficult to disperse and may result in coatings which are undesirable for floor finish applications.

Thermoplastic Polymer

The chip-resistant coating composition optionally further comprises a compatible aqueous thermoplastic polymer dispersion to optimize the mechanical and flow properties, and to reduce the cost of the coating. The thermoplastic polymer dispersion generally decreases chip resistance of the coating because it is not as tough as the silane terminated poly(urethane-urea) dispersion when coated and cured. Useful thermoplastic polymers typically have glass transition temperatures (Tg) of -60°C to 25°C. If the Tg of the thermoplastic polymer is too high the coating of the invention could become brittle. If the Tg is too low the coating of the invention could become soft.

Suitable thermoplastic dispersions include, but are not limited to, those selected from the group consisting of acrylic polymer dispersions such as the ACRONAL™ series, available from BASF or the NeoCryl™ series, available from ICI Chemical Industries, Inc.; dispersions of vinyl/acrylic copolymers such as the Hal-O-Flex™ series, available from ICI; epoxy polymer dispersions such as the Matrimid™ series, available from Ciba-Geigy and Terlyran™ series, available from BASF; copolymer dispersions derived from acrylonitrile, butadiene, and styrene monomers (ABS dispersions), and polyurethane dispersions. When used, the amount of thermoplastic polymer dispersion should not exceed about 80 weight percent based upon the weight of the composition solids.

Surfactants

Surfactants may be used to improved the stability and flow properties of the chip-resistant composition. Anionic, cationic, amphoteric, and non-ionic surfactants have utility in stabilizing the inventive compositions. Mixtures of non-ionic surfactants with anionic surfactants have proven especially effective.

Suitable non-ionic surfactants include but are not limited to those selected from the group consisting of the polyoxyethylene/polyoxypropylene block copolymers, such as the Tergitol™ X series, available from Union Carbide Corp., Danbury, CT 06817, or the Pluronic™ series available from BASF Wyandotte Inc., Parsippany, NJ; polyoxyalkylene alkyl ethers such as polyoxyethylene lauryl ether and polyoxyethylene stearyl ether, such as the Brij™ series, available from ICI Specialty Chemicals, or the Tergitol™ TMN Series, available from Union Carbide; polyoxyalkylene alkyl phenol ethers such as polyoxyethylene octyl phenol ether and polyoxyethylene nonyl phenol ether for example the TRITON™ X-Series, available from Union Carbide or Igepal™ CTA-639W, available from Rhone-Poulenc, Carnbury, NJ 08512; sorbitan fatty acid esters such as sorbitan monolaurate, sorbitan monostearate, and sorbitan trioleate; polyoxyalkylene fatty acid esters such as polyoxyethylene monolaurate and polyoxyethylene monostearate; and glycerin fatty acid esters such as oleic acid monoglyceride and stearic acid monoglyceride.

Suitable anionic surfactants include, but are not limited to, those selected from the group consisting the alkylaryl polyether sulfonates and their monobasic salts, such as TRITON™ X-200 available from Union Carbide, or the WITCONATE™ series, available from Witco Corp., Houston, TX 77045; the anionic salts of acrylic acid copolymers, for example the BYK™-150 series, available from BYK-Chemie USA, Wallingford, CT 06492, or SOKALAN™ CP-10, available from BASF, or similar polymers derived from unsaturated carboxylic acids, for example the BYK™-P100 series, available from BYK-Chemie USA. Suitable cationic surfactants include but are not limited to those selected from the group consisting of alkyl quaternary amines and alkaryl quaternary amines such as the EMCOL™ series available from Witco Corporation, New York, New York 10022.

The total amount of surfactant included in the chip-resistant composition ranges from 0 to 10 weight percent, preferably 0.1 to 3 weight percent, and most preferably 0.5 to 2 weight percent, based upon the weight of the composition solids.

Surfactants are preferably used when pigments are included in the chip-resistant composition.

Pigments

Pigments may be included in the chip-resistant composition to improve the "hiding power", color, mechanical properties, and flow of the composition. Pigments increase the solids content of the composition but only slightly increase the viscosity. They also reduce the cost of the composition. Pigments suitable for practicing the invention include, but are not limited to those selected from the group consisting of calcium carbonate, titanium dioxide, talc, clay, carbon black, iron oxide, mixtures thereof, and the like. Preferably, the surfaces of the pigments are free of functional groups that react with the siloxy groups of the silane terminated poly(urethane/urea), such as hydroxyl groups. Under some conditions such chemically reactive pigments can cause stability problems when used in the inventive compositions.

However, such reactive pigments can be treated with low molecular weight surface modifying or coupling agents such as organosilanes, organotitanates, organozirconates, and the like, using methods well known to those skilled in the art. These surface modifying agents react with the surface functional groups, effectively modifying the surface properties of the pigments so that they have utility in the inventive composition. The total amount of pigment in the composition should not exceed about 70 weight percent based upon the weight of the composition solids, because at high pigment loadings the surface coatings derived from the composition exhibit "mud cracking" resulting in unacceptable surface roughness and adhesion.

Thickening Agents

Thickening agents, in general, are substances used to increase the viscosity of liquid mixtures and solutions and to aid in maintaining their stability by their emulsifying properties. Thickening agents are used to adjust the composition viscosity and sprayability according to the present invention. Thickening agents useful herein are those capable of thickening (increasing the viscosity of) water based systems (such as water based dispersions, etc.). Suitable thickening agents include but are not limited to those selected from the group consisting of associative thickeners, including but not limited to acrylic emulsions, styrene acrylic emulsions, vinyl acrylic emulsions, etc. specific ones including Rheolate™ acrylic emulsions available from Rheox, Acrysol™ acrylic emulsions, available from Rohm and Haas, and Alcogum™ acrylic emulsions, available from Alco Chemical; fiber thickeners, such as Kevlar™ Ultrathix™ aromatic polyamides, available from DuPont, and Natrosol™ cellulose thickener available from Aqualon; and clay thickeners, such as BENAQUA™, available from Rheox, and Laponite™, available from Southern Clay. An especially preferred thickening agent is BENAQUA™ clay thickener, available from Rheox, Heightstown, NJ. Thickening agents are typically used in the range of from 0.01 to 15 weight percent, based upon the weight of the composition solids, preferably 0.1 to 3 weight percent, and most preferably 0.5 to 2 weight percent.

Additives

The chip-resistant compositions may optionally further comprise one or more additives such as those used in the area of paint technology, which can be added to enhance various properties of the composition. Such additives include, but are not limited to those selected from the group consisting of defoamers, colorants, crosslinking agents, plasticizers, adhesion promoters, pH control agents, leveling agents, biocides, fungicides, antioxidants, corrosion inhibitors, flash rust inhibitors, freeze control agents, coalescing agents, ultraviolet radiation absorbers, solvents, ionizable salts, and mixtures thereof. Leveling agents may be added to the compositions to increase coating smoothness by increasing the leveling and reducing the slumping and sagging properties of the coated composition. Effective leveling agents include, but are not limited to fluorocarbon surfactants such as the FC series available from 3M Company, Saint Paul, MN 55144. Especially preferred is 3M fluorocarbon surfactant FC-430. The total amount of additives used in the inventive composition should not exceed 15 weight percent, based upon the weight of the composition solids. Typically, if included, the amount of additive ranges from .01 to 15 weight percent, based upon the weight composition solids, depending upon the additive. A defoamer, if included is typically used at a range of 0 to 2 weight percent, preferably 0.001 to 1 weight percent and preferably 0.001 to 0.2 weight percent based upon the weight of the composition solids.

The stability and rheology of the chip-resistant compositions is pH dependent, especially for embodiments of the invention containing pigments. A pH control agent, if included, is typically used at a range of 0 to 2 weight percent, preferably 0.1 to 0.8 weight percent, and most preferably 0.4 to 0.6 weight percent based upon the weight of the composition solids. Typically the composition of the invention has a pH greater than about 7, preferably 7.5 to 10, and most preferably 8.5 to 9.5. Examples of useful pH adjusters include but are not limited to those selected from the group consisting of bases such as sodium hydroxide, ammonium hydroxide, tertiary amines, etc. Tertiary amines are preferred to adjust the pH of the composition. Useful tertiary amines include, but are not limited to, the trialkylamines having alkyl groups with from 1 to 4 carbon atoms, triethanolamine, diethanolamine, and mixtures thereof. A preferred trialkylamine is triethylamine.

Auxiliary Solvents

Auxiliary solvents, if included in the coating chip-resistant composition of the invention at all, are used in amounts as small as possible not exceeding 15 weight percent, preferably 1 to 5 weight percent, based upon the total weight of the coating composition. Such solvents are of two types-volatile solvents and coalescing solvents. Volatile solvents are added to increase the freeze-thaw stability of the composition, and the evaporation of water and subsequent cure of the coatings. These solvents should be more volatile than n-butanol (they should have a vapor pressure of greater than 400 mm at 100°C) and include but are not limited to those selected from the group consisting of alcohols

comprising less than 5 carbon atoms, ketones such as acetone and methyl ethyl ketone, cyclic ethers such as tetrahydrofuran, and esters such as butyl acetate. Coalescing solvents are added to assist film formation. However, use of excessive amounts of coalescing solvents, which do not evaporate completely, can over plasticize the coating thus decreasing the moisture resistance of the cured coating. Useful coalescing solvents include but are not limited to those selected from the group consisting of N-methyl pyrrolidone; glycols, such as diethyl glycol, dimethyl diglycol, diethyl diglycol; ketones, such as cyclohexanone; and glycol esters and ether esters, such as ethyl glycol acetate, methyl glycol acetate, and methoxypropyl acetate.

Coating Hardness and Elasticity

As mentioned in the "Background of the invention", chip-resistant coatings must be hard enough to permit use of wet sanding processes yet sufficiently elastomeric to prevent chipping. Coating hardness and elasticity can be "fine-tuned" to accommodate these product requirements through judicious selection of: the silane terminated poly (urethane/urea) polymer dispersion's isocyanate-to-active hydrogen equivalent ratio (I:AH), the type and/or amount of pigment, and the type and/or amount of thermoplastic polymer dispersion used in the chip-resistant coating. Soft films characteristic of silane terminated poly(urethane/urea) polymer dispersions with low (I:AH) ratios may require more pigment or a hard thermoplastic dispersion containing polymers, like polyacrylate or poly(styrene-acrylonitrile) dispersions, for example, to provide extra reinforcement of the soft silane terminated poly(urethane/urea) polymer dispersions in order to produce acceptable chip-resistant coatings. On the other hand, hard films resulting from silane terminated poly(urethane/urea) polymer dispersions with high (I:AH) ratios may require no pigment at all but instead may need to be "flexibilized" by the addition of a dispersions containing rubbery polymers, like poly(styrenebutadiene) rubber, for example, in order to produce acceptable chip-resistant coatings.

The inventive chip-resistant coating has utility as an intermediate coating. It is generally applied over the several primer and sealer layers (well known to those skilled in the art) used to coat metal (including primed metal and painted metal), plastic, and fiber-reinforced plastic composite substrates used in the fabrication of vehicle bodyparts and appliance cabinets. Vehicle bodyparts include, for example, hoods, fenders, bumpers, grills, and rocker panels; and appliance cabinets include, for example, washers, clothes dryers, refrigerators, and the like. Examples of vehicles on which the compositions can be used include automobiles, trucks, bicycles, airplanes, etc. The inventive chip-resistant coating is an intermediate coating because it is applied under top/finish coatings which typically comprise paints, enamels, and lacquers and the like that in many cases are chemically crosslinked to provide durable, scratch-resistant surface finishes. The inventive chip-resistant coating adheres to most body filler compositions and thus also has utility in the autobody repair trade.

The inventive compositions are thinnable with water (typically deionized water). However, the amount of water in the compositions is usually 40 to 80 weight percent, preferably 45 to 70 weight percent, most preferably from 45 to 60 weight percent based upon the total weight of the composition. The total solids (measured at 125°C, for 2 hours) of the composition are 5 to 60%, preferably, 30 to 55%, and most preferably 40 to 55%. The viscosity of the composition should be 50 to 100,000 centipoise, preferably 500 to 10,000, and most preferably 700 to 3,000 centipoise. Typically, the solids and viscosity are adjusted to yield the required coating thickness.

The coating thickness is in the range of from 10 to 1200 micrometers preferably 20 to 500 micrometers, most preferably 50 to 200 micrometers. The compositions of the invention are advantageous in that they are effective at low coating thickness (for example 10 to 100 micrometers). Compositions comprising essentially all anionically stabilized silane terminated poly(urethane-urea) dispersion (99.9 weight percent) produce coatings with the maximum level of chip-resistance. Acceptable levels of chip-resistance are achieved with coatings as thin as 10 micrometers (more preferably in the range of from 20 to 100 micrometers). However, these coatings are glossy, transparent, and relatively smooth. Pigments can be added to the composition to produce textured, colored, opaque coatings; and such pigmented coatings have thicknesses in the range of from 50 to 200 micrometers. Preferably, when very thick, textured coatings are desired, in the range of from 500 to 1200 micrometers, it may become necessary to reduce the amount of pigment in the composition to prevent "mudcracking" of the coating during drying and cure. As the coating thickness is increased, it becomes possible to replace part of the silane terminated poly(urethane-urea) dispersion, with less expensive, less tough dispersions of other compatible thermoplastic polymers. This wide effective range of thicknesses and compositions provides the coating designer with numerous possibilities for tradeoffs among coating thickness, weight, texture, and cost. The solids and viscosity vary depending on the application method used. The dried coating compositions yield uniform coatings. The coatings are preferably applied by spraying using pressure, airless, or electrostatic (rotating bell) methods. The composition can also be applied by coating (roll, knife, and slide), brushing, or dipping-methods which are well known to those skilled in the art.

The coatings cure upon evaporation of water from the coating compositions. Following the hydrolysis of some of the terminal silyl groups, the polymers crosslink by mutual inter-reaction to form siloxane linkages among poly(urethane/urea) and polyurea polymer molecules as shown in the following chemical reactions:

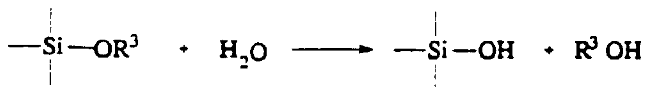

(Hydrolysis)

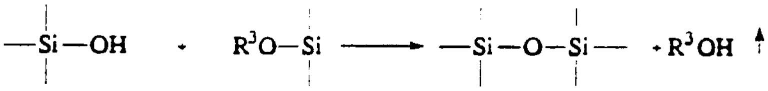

(Crosslinking)

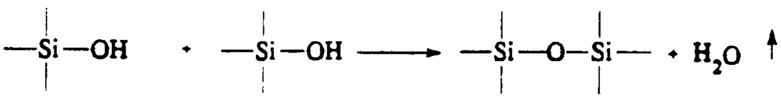

(Crosslinking)

The rate of these crosslinking reactions is controlled by the rate of water evaporation. Temperature and humidity have a second order effect on the rate of crosslinking, temperature having a greater effect than humidity. The inventive anti-chip coating compositions are cured at temperatures in the range of from 5 to 200°C, preferably from 5 to 95°C, more preferably from 10 to 60°C, and most preferably from 20 to 50°C. At elevated cure temperatures care must be exercised to prevent surface roughening caused by rapid drying. At temperatures near freezing (0 to 10°C) cure times may become unacceptably long.

TEST METHODS

Stability

The long term stability of the polyurethane dispersions was assessed both at room temperature (23°C) and at elevated temperature (71°C) according to a modification of American Society for Testing and Measurement (ASTM) Test Method D 1791-87. A 100 mL sample of polyurethane dispersion was placed in a clean, dry test bottle. The test bottle was then capped and inverted and placed in either a drying oven capable of maintaining a temperature of the dispersion at 71°C or in a device capable of maintaining room temperature. At the end of a 30-day storage period, the sample dispersions rated "good" were those which did not gel or separate over that storage period. Samples dispersions rated "poor" gelled or separated over this 30-day period under these storage conditions.

Viscosity Measurements

The bulk viscosity of each polyurethane dispersion was determined by using Brookfield Viscometer Model RVF. Approximately 1 liter of the dispersion was poured into the chamber and placed in the thermostat. The measurement was taken after thermal equilibrium was reached. Spindles #1-#4 were used depending on the viscosity of the sample. The data are included in Table 1.

Water/Solvent Resistance

A 2" x 3" rectangular area on an unpolished, cold rolled, 10.16 cm (4 inch) x 30.48 cm (12 inch) x 0.0126 cm (.032 inch) steel test panel (available from Advanced Coating Technologies, Inc. as test panel BEPI P60 DIW) was coated with the polyurethane dispersion. The dispersion was then cured on the test panels for 7 days at 21°C and 50% relative humidity. The dried film thickness was approximately 100 µm (4 mils). About 1/3 of the coating was immersed in deionized water at 21°C with no water circulation. After 8 hrs. the panels were removed from the water, dried and visually inspected for blistering, swelling, loss of adhesion or any other visually discernable changes. The above procedure was repeated by immersing the coated steel test panels in a solvent (methyl ethyl ketone).

Mechanical Properties

Mechanical testing (i.e., tensile and elongation) was performed on an Sintech Model 10 tensile tester. Testing

was performed according to a modification of American Society for Testing and Measurement (ASTM) Test Method D 412-87. Samples were prepared according to Method A (dumbbell and straight specimens) of this test method. Dumbbell specimens approximately 0.318 cm (0.125 inch) in width and approximately 0.159 cm (0.0625 inch) in thickness (cross-sectional area of approximately 0.051 $cm^2$) were tested at a crosshead speed of 5.08 cm/min (2 inches/min) and the results of these measurements recorded and listed in Table 1.

Adhesion to Wood

The adhesion of polyurethane wood finishes prepared from polyurethane dispersions to wood test panels was measured according to a modification of Method B of American Society for Testing and Measurement (ASTM) Test Method D3359-83. Oak plywood panels 0.635 cm (1/4 inch) in thickness which were pretreated with an acrylate based sealer (High Bond Sealer commercially available from Bona Kemi USA Inc.) and then coated with a polyurethane finish (3-4 coats applied using a brush, allowing a minimum of 45 minutes dry time and light sanding with 120 grit sandpaper between coats). The dried cured polyurethane coating was approximately 125µm in thickness. Using a razor blade, 6 cuts of about 20 mm in length spaced 2 mm apart were made in the cured coating, followed by similarly spaced cuts at 90° to and centered on the original cuts. An about 75 mm piece of a transparent cellophane pressure-sensitive adhesive tape (610 tape, commercially available from 3M Co.) was placed in firm contact with the cross-cut area, allowed to dwell for about 90 seconds on the sample, and peeled rapidly from the cross-cut area at approximately 180°. The cross-cut grid area was then examined under magnification and rated using the following scale:

5B The edges of the cuts were completely smooth; none of the squares of the lattice is detached.
4B Small flakes of the coating were detached at intersections; less than 5% of the area was affected.
3B Small flakes of the coating were detached along edges and at intersections of cuts. The area affected was 5 to 15% of the lattice.
2B The coating was flaked along the edges and on parts of the squares. The area affected was 15 to 35 % of the lattice.
1B The coating was flaked along the edges of cuts in large ribbons and whole squares were detached. The area affected was 35 to 65 % of the lattice.
0B Flaking and detachment were worse than grade 1B.

Impact Resistance

The impact resistance of wood panels coated with a polyurethane finish prepared from the polyurethane dispersions of the present invention was measured in the following manner: Oak plywood panels 0.635 cm (1/4 inch) in thickness were pretreated with an acrylate based sealer (High Bond Sealer commercially available from Bona Kemi USA Inc.) and then coated with a polyurethane finish (3-4 coats applied using a brush, allowing a minimum of 45 minutes dry time and light sanding with 120 grit sandpaper between coats). The dried cured polyurethane coating was approximately 125µm in thickness. A 500 gram stainless steel rod was dropped through a cylinder from set distances. The rod hits the impinger which in turn hits the coated panels. The distance in centimeters at which the impact of this 500 gram rod on coatings did not cause any crack of the coatings was recorded.

Taber Abrasion

Wood finishes prepared from the polyurethane dispersions of the present invention were coated (3-4 coats applied using a brush, allowing a minimum of 45 minutes dry time and light sanding with 120 grit sandpaper between coats) on laminated kitchen counter tops and cured for 6 weeks at 21°C (Formica™ high pressure laminated sheets of melamine and phenolic plastics). These coatings were subjected to abrasion using either H-22 wheel, 500 gm weight or CS-17 wheel, 1 kg weight for 50-1000 cycles. The amount of weight loss from these coatings due to abrasion of these wheels in a Taber abrader was determined by weighing the samples before and after abrasion and weight loss was recorded. This test provides information on wear properties of coatings and is an indirect measurement of durability.

Solvent Resistance

The solvent resistance of wood finishes prepared from the polyurethane dispersions of the present invention was measured in the following manner: Oak plywood panels 0.635 cm (1/4 inch) in thickness were pretreated with an acrylate based sealer (High Bond Sealer commercially available from Bona Kemi USA Inc.) and then coated with a polyurethane finish (3-4 coats applied using a brush, allowing a minimum of 45 minutes dry time and light sanding with 120 grit sandpaper between coats). The dried cured polyurethane coating was approximately 125µm in thickness. The coated test panels were allowed to cure at ambient conditions (21°C and 60-75% relative humidity) for six weeks.

Paper dots having a diameter of 0.953 cm (3/8 inch) were applied on the coated surface and the dots were saturated with 14 different test solvents, including 100% methyl ethyl ketone, a range of binary mixtures of ethanol and water or methyl ethyl ketone and water, and ternary mixtures of ethanol, methyl ethyl ketone and water. The dots were then dried for four hours. The following rating scheme for solvent resistance was applied:

2 points - paper dots were removed cleanly from the coatings;
1 point - paper dots removed, but paper residue was left on the coating; and,
0 point - paper dots did not remove from the coating.

According to this test method, the maximum attainable rating was a score of 28.

Gloss of Wood Finishes

The gloss of wood finishes prepared from the polyurethane dispersions of the present invention was measured in the following manner: Oak plywood panels 0.635 cm (1/4 inch) in thickness were pretreated with an acrylate based sealer (High Bond Sealer commercially available from Bona Kemi USA Inc.) and then coated with a polyurethane finish (3-4 coats applied using a brush, allowing a minimum of 45 minutes dry time and light sanding with 120 grit sandpaper between coats). The dried cured polyurethane coating was approximately 125µm in thickness. The gloss of such prepared polyurethane finish surfaces was then measured using a reflectometer (Lange Reflectometer, Model RB-60) against a calibration standard at a 60° angle of reflection. The calibration standard was a polished, high gloss plate defined in accordance with the stipulations of DIN 67530.

Gloss Measurement for Composition Vinyl

For the purposes of the following test procedure, "gloss value" means a glossmeter reading using a 20° or 60° glossmeter geometry, in accordance with ASTM D-523. The 20° and 60° glossmeter geometry gloss measurements, five per sample, were made after buffing, and the average of these recorded. Test method ASTM D-523 was followed for determining specular gloss values. Note that "60° glossmeter geometry gloss" value (i.e., incident light reflected from the test surface at incident angle measured 60° from vertical) relates to the "shininess" of the surface and correlates to the appearance of the floor about 3 meters in front of the observer. A "20° glossmeter geometry gloss" value relates to the depth of the reflection and correlates to the appearance of the floor about 60 cm in front of the observer. A reading off a glossmeter is an indexed value, with a value of "100" given to the glossmeter reading (from any angle) from a highly polished, plane, black glass with a refractive index of 1.567 for the sodium D line. The incident beam is supplied by the tester itself. A value of 0 is no or very low gloss, while "high gloss" at 60° geometry is about 75 or greater (or 30 or greater at 20° geometry). A glossmeter known under the trade designation "Micro-TRI", from BYK Gardner, was used.

Coating Removability from Composition Vinyl

In a variation of ASTM 1792-82, polyurethane-coated vinyl tiles were mounted onto the fixed bed of a durability tester known under the trade designation "Gardner Abrasion Tester" (Pacific Scientific, CA). This machine essentially comprised a horizontal surface to which the test tiles were attached, and a reciprocating holder for a nonwoven surface treating article. A 8.9 cm x 3.8 cm square white nonwoven pad (trade designation "Scotch-Brite Super Polish", #9030, from 3M) was attached to the reciprocating holder (narrow boat with fitted weight) so that the pad rubbed across the surface of the coated test tile. The weight of the holder and fitted weight was approximately 500 g.

In preparation for each test, one black composition vinyl tile for each two coating samples to be tested was scribed into halves with a wax pencil. For each coating to be tested, one half of the tile was coated with four coatings (2.2 milliliters per coat), with 30-45 minutes drying time between coatings. After allowing the coated tiles to dry overnight, the coated tiles were aged in an oven at 49°C for three days. After three days aging, the tiles were removed from the oven and let cool at least one hour at room temperature before proceeding with the removability test.

In each test, the weight was removed from the sample holder, and the sample holder subsequently attached to the cables of the abrasion tester. A #9030 pad (as above described) was placed into a Petri dish and enough acidic stripper solution poured over the pad into the Petri dish to cover the pad. The pad was then allowed to soak for at least one minute. The tile having the polyurethane coating to be tested was then placed in position on the abrasion machine. Using a forceps, the pad was then removed from the stripper solution, letting the excess stripper composition drain from the pad into the dish. The pad was then placed onto the sample holder, and secured therein by fasteners known under the trade designation "Instalok", from 3M. The sample holder/pad assembly was then inverted so that the pad touched the sample surface, after which the weight was placed back onto the sample holder. The abrasion machine

was then run for one or two cycles so that the stripper-soaked pad wetted the coated tile. The wetted tiles were allowed to soak for 1 minute. The abrasion tester was then allowed to run for an additional 49 cycles or until 50 cycles had been completed.

Samples were then removed from the machine, rinsed well with water, and allowed to dry. The test area of the tile was then inspected to determine if the polyurethane finish had been removed. If so, the test was complete. If the finish remained on the tile, the tile was placed back in the machine and 50 more cycles run as described above until the finish was removed or 150 cycles had been completed whichever occurred first.

Stain Resistance

The stain resistance of wood finishes prepared from the polyurethane dispersions of the present invention was measured in the following manner in accordance with ANSI A 161.1-1985 ("Recommended Performance Standard for Kitchen and Vanity Cabinets"): Oak plywood panels 0.635 cm (1/4 inch) in thickness were pretreated with a sealer (typically High Bond Sealer commercially available from Bona Kemi USA Inc.) and then coated with a polyurethane finish (3-4 coats applied using a brush, allowing a minimum of 45 minutes dry time and light sanding with 120 grit sandpaper between coats). The dried cured polyurethane coating was approximately 125µm in thickness. 3 cc samples of vinegar, lemon juice, grape juice, tomato catsup, coffee, milk, were applied to the polyurethane wood finishes for 24 hours and then wiped off and examined for stain development. Similarly, 3 cc samples of mustard, permanent marker and 3% ammonia were applied to the sample finishes, removed after one hour, and the finish was examined for stain development from these samples. Stain resistance was ranked according to the following scale: 2 points for no indication of these staining agents and 0 points for any degree of staining. Thus, the maximum recorded stain resistance ranking according to this test method is 22.

Weathering Resistance

The weathering resistance of wood finishes prepared from the polyurethane dispersions of the present invention was measured in the following manner in accordance with American Society for Testing and Materials (ASTM) Test Method G-26 ("Standard Practice for Operating Light-Exposure Apparatus (Xenon-Arc Type) With and Without Water Exposure of Nonmetallic Materials"): Teak panels 30.5 cm (12 inches) in length, 3.81 cm (1.5 inches) in width and 0.381 cm (0.15 inch) in thickness were coated with a polyurethane finish (3 coats applied using a soft brush, allowing a minimum of 1 hour dry time between coats). Although not required, each coating can be followed by light sanding with a 600 grit sandpaper between coats; however, at least 4 hours must be allowed between sanding and the application of a subsequent coat. For comparative solventborne coatings, at least 24 hours between sanding and application of the next coat was required. All examples were then allowed to cure for one week at room temperature (21°C) and 50% relative humidity and cut into six 5 cm test sections.

The coated test sections were then placed in a xenon-arc light-exposure apparatus as described in Test Method A ("Continuous Exposure to Light and Intermittent Exposure to Water Spray") of ASTM - G 26 (1988) using a Type BH humidity controlled light-exposure device and exposed to repeated cycles of 102 minutes of light from this xenon-arc source, followed by a 18 minute cycle of light and water spray. A black panel temperature of 63°C was maintained throughout the test. For each coating sample, a coated teak wood test section was then removed from the test apparatus at 250, 500, 1000, 2000 and 3000 hours and the weathering of the coating was assessed and recorded.

Chipping Test

The coatings were also tested for chip resistance using the chip resistance test described in the Society of Automotive Engineer's Technical Report J400 (SAE J400) (ASTM 3170-74). The test consists of projecting a standardized road gravel by means of a control air blast onto a suitable test panel. The testing apparatus is contained in a box on wheels, called a gravelometer, designed to contain road gravel, a test holder, and a gravel projecting mechanism. The gravel was water-worn gravel rather than crushed limestone or rock, which will pass through 5/8 inch (15mm) screen when graded, but be retained on a ⅜ inch (9 mm) screen. The projecting mechanism, located in the front of the test panel, consists of an air nozzle in the base of a pipe T. The stem of the pipe T points upward and is connected to a funnel into which the gravel is poured. The gravel, falling into the air blast, is projected toward and impacts upon the test panel, which is usually held perpendicular to the impinging gravel. All testing is conducted at room temperature. After gravel impact, masking tape is applied to remove any loose chips remaining on the panel, and the degree of chipping is determined by counting the number and size of all chips.

The test panel is prepared as described hereinbelow. In the test, one pint of gravel is applied over a 5 to 10 second period of time employing an air pressure of about 70 psi (485 kPa) as the propelling means.

The number of chips is a numerical rating selected from the range of 0 to 10 as described in Table A to indicate

the number of chips in a 4 inch (10cm) square area.

TABLE A

| Rating Number | Number of Chips |
|---|---|
| 10 | 0 |
| 9 | 1 |
| 8 | 2-4 |
| 7 | 5-9 |
| 6 | 10-24 |
| 5 | 25-49 |
| 4 | 50-74 |
| 3 | 75-99 |
| 2 | 100-149 |
| 1 | 150-250 |
| 0 | > 250 |

Useful chip resistant coatings have rating numbers of 5 to 10, preferably 6 to 10, most preferably 7 to 10.

The size of the chips are rated A through D, according to Table B.

TABLE B

| Rating Letter | Chip Diameter | |
|---|---|---|
| A | < 1 mm | (< approximately 0.03 in.) |
| B | 1-3 mm | (approximately 0.03 - 0.12 in.) |
| C | 3-6 mm | (approximately 0.12 - 0.25 in.) |
| D | >6 mm | (> approximately 0.25 in.) |

Useful chip resistant coatings have rating letters of A to B, preferably A.

Sprayability

"Sag Test" - An uncoated test panel of the type described hereinbelow is placed upright and sprayed with a single coat of chip-resistant coating composition. A tongue depressor is used to scribe a line across the coating. After 5 minutes the coating is observed. "No Sag" - means the scribed line is unchanged. "Some Leveling" - means the scribed line has partially filled in. "Leveling" - means the scribed line has completely filled in. "Flow off the Panel" - means coating continues to flow and runs off the panel. "Cratering" - means the number of small "craters" visually observed on the coated surface. Craters are caused by imperfections on the uncoated panel surface by particles of airborne debris. "Coverage" - means the number of passes of coating spray required to adequately cover the panel. "Texture" - means the visual surface appearance of the coating-smooth, mottled, bumpy, etc. "Orange Peel" - is a term commonly used in the paint industry to describe surface textures that look like an orange peel.

| ABBREVIATIONS | |
|---|---|
| A-1110 | γ-aminopropyltrimethoxysilane commercially available from OSi |
| AA | acetic acid |
| CHDM | cyclohexanedimethanol |
| Cythane™ 3160 | a trifunctional polyisocyanate adduct of trimethylolpropane and m-tetramethylxylene diisocyanate, commercially available from American Cyanamid Co. |
| DES W | 4,4'-dicyclohexylmethane diisocyanate commercially available from Miles Coating Division under the tradename "Desmodur W" |
| DMPA | α,α-(bishydroxy methyl) propionic acid |

(continued)

| ABBREVIATIONS | |
|---|---|
| EDA or ED | 1,2-diaminoethane |
| Excess NCO | an excess on an isocyanate equivalent basis when compared to the combined active hydrogen equivalent of other components in the polyurethane prepolymer or dispersion |
| eq. or EQ | equivalent |
| EQ WT | equivalent weight |
| HCA | hydrocaffeic acid |
| IPDI | isophorone diisocyanate |
| Irganox™ 245 | a hindered phenolic antioxidant commercially available from Ciba-Geigy Lid. |
| Irganox™ 1010 | a hindered phenolic antioxidant commercially available from Ciba-Geigy Lid. |
| LEX1130-30 | Lexorez™ 1130-30, a linear poly(1,6-hexanediol-adipate) of 1870 average equivalent weight commercially available from Inolex |
| LEX 1130-55 | Lexorez™ 1130-55, a linear poly(1,6-hexanediol-adipate) of 1020 average equivalent weight commercially available from Inolex |
| LEX1400-35 | Lexorez™ 1400-35, a linear poly(1,6-hexanediol-neopentyl glycol-adipate) of 1600 average equivalent weight commercially available from Inolex |
| LEX1400-120 | Lexorez™ 1400-120, a linear poly(1,6-hexanediol-neopentyl glycol-adipate) of 470 average equivalent weight commercially available from Inolex |
| MDEA | methyldiethanol amine |
| BCAR | diethylene glycol mono n-butyl ether |
| BCEL | ethylene glycol mono n-butyl ether |
| MEK | methyl ethyl ketone |
| NCO | isocyanate |
| OH | hydroxyl |
| NCO/OH | molar ratio of isocyanate to hydroxy groups |
| NBDEA | n-butyldiethanolamine |
| NMP | n-methyl pyrrolidone |
| ARCOL™ 2025 | poly(oxypropylene) glycol of 1000 average equivalent weight commercially available from ARCO Chemical. |
| Silane Q2-8038 | γ-aminopropylmethyl dimethoxysilane commercially available from Dow Corning Co. |
| T-9 | a stannous octanoate catalyst commercially available from Air Products Co. |
| T-12 | a dibutyltin dilaurate catalyst commercially available from Air Products Co. |
| TDI | toluene diisocyanate |
| TEA | triethylamine |
| Terethane™-2000 | a poly(tetramethylene ether glycol) of 1000 average equivalent weight commercially available from duPont |
| Tinuvin™ 144 | a hindered amine photostabilizer commercially available from Ciba-Geigy Lid. |
| Tinuvin™ 292 | a hindered amine photostabilizer commercially available from Ciba-Geigy Lid. |
| Tinuvin™ 328 | an ultraviolet absorber commercially available from Ciba-Geigy Lid. |
| TMP | 1,1,1-trimethylolpropane |
| Tone™ 201 | a caprolactone-based diol of 265 average equivalent weight commercially available from Union Carbide Chemicals and Plastics Co. |
| Tone™ 210 | a caprolactone-based diol of 425 average equivalent weight commercially available from Union Carbide Chemicals and Plastics Co. |
| Tone™ 230 | a caprolactone-based diol of 623 average equivalent weight commercially available from Union Carbide Chemicals and Plastics Co. |
| Tone™ 260 | a caprolactone-based diol of 1500 average equivalent weight commercially available from Union Carbide Chemicals and Plastics Co. |

Examples

The invention is further illustrated by the following nonlimiting examples. All parts, percentages, ratios, etc.

in the examples and the rest of the specification are by weight unless otherwise specified.

Example 1

A prepolymer was made in a 1 liter reaction flask equipped with a heating mantel, condenser, stirring blade, nitrogen inlet and thermometer equipped with a temperature controller. 308.23 grams (2.3351 eq.) of 4,4'-dicyclohexylmethane diisocyanate (DES W), 360.72 grams (0.5787 eq.) of Tone™ 230 (a caprolactone-based polyol), 40.10 grams (0.5976 eq.) of 2,2-bis(hydroxymethyl) propionic acid (DMPA) and 125.10 grams of n-methyl pyrrolidone (NMP) were heated with stirring to 40-50°C. 0.081 gram of dibutyl tin dilaurate (T-12) was added and the mixture was heated to 80°C and allowed to react for 2 hours.

A premix was made with 325.00 grams of distilled water, 5.28 grams of triethylamine (TEA), 6.00 grams (0.1997 eq.) of EDA and 6.00 grams (0.0335 eq.) of gamma-aminopropyltrimethoxysilane (A-1110).

170.15 grams (0.2363 eq.) of the prepolymer was added over 10 minutes to the premix solution in a Microfluidics Homogenizer Model # HC-5000 at an air line pressure of .621 MPa . A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity (R.H.) and the cured composition's water resistance, solvent (methyl ethyl ketone) resistance, tensile strength, and elongation was measured. These properties were recorded and can be found in Table 1. The U.B.C. was calculated to be 1.868.

Comparative Example C-1

Comparative Example C-1 was prepared according to the "Best Mode of the Invention" in U.S. Patent No. 4,582,873 (Gaa et al.) with a few minor variations. The silylated isocyanate-containing-prepolymer was prepared in an anhydrous reaction conducted in the presence of a solvent and a catalyst. A slight nitrogen blanket was maintained during the reaction. To a clean and dry kettle reactor having an agitator there was added 236.50 grams of the polyester diol commercially available under the trade designation "Tone 200" from Union Carbide Corporation. This material has a molecular weight of around 530 and was premelted at 180°C. Also added was 10.20 grams of the hydrophilic ethylene oxide-containing material, which is a polyoxyethylene polyol homopolymer available under the trade designation "Carbowax 1450" material. This material is also available from Union Carbide Corporation and was also premelted at 180°C. Also added was 1.24 grams of 1,4-butanediol as the hardening segment polyol. The difunctional organosilane, N-(β-aminoethyl),γ-aminopropyl trimethoxysilane available from Union Carbide Corporation under the trade designation "A-1120" was added in an amount of 4.59 grams. As a solvent n-methyl-pyrrolidone (NMP) was added in an amount of 46.05 grams. These materials were heated to 140°F (60°C).

Over a period of 30 minutes while the temperature was maintained between 140°F (60°C) to 150°F (66°C), 258.35g of 4,4'-dicyclohexylmethane diisocyanate) were added to the kettle reactor with agitation. This cycloaliphatic diisocyanate is available under the trade designation Desmodur W material from Miles Coating Division. An additional amount of NMP (35.15g) was used to rinse the beaker and added to the mixture. This mixture was held at 140°F (60°C) to 150°F (66°C) for 10 minutes.

An amount of 26.75 grams of DMPA was added and the temperature was maintained between 170°F (77°C) and 175°F (79°C) for 30 minutes.

0.25 grams of the catalyst dibutyl tin dilaurate was added. The temperature was held at 77-79°C (170-175°F) until a constant NCO equivalent of around 1045 to 1087 was obtained.

An amount of 15.20 grams of n-methyl pyrrolidone was added while cooling to 71-74°C (160-165°F). Over 10 minutes, 20.20 grams of triethylamine were added to neutralize the mixture. The beaker was rinsed with 2.25 g NMP which was then added to the mixture.

A premix was made with 9.04 grams ethylenediamine and 526.44 grams of water.

340.30 grams of the prepolymer was injected into the premix in a Microfluidics Homogenizer Model #HC-5000 at an air line pressure of 0.621 mPa over a period of 10 minutes. The amounts and types of neutralizer and chain extender used in the production of the aqueous dispersion of the chain-extended polymer gave the dispersion a pH of 8.3. No particles formed in the dispersion. The viscosity of the dispersion was 32,000 centipoise.

Comparative Example C-2

Comparative Example C-2 was prepared according to Example I of U.S. Patent No. 3,941,733 (Chang) with a few minor variations. Into a 2-liter round-bottom glass flask equipped for heating, cooling, agitation and vacuum stripping were charged 675.15 grams of polyoxypropylene diol (average equivalent wt. 490) and 17.15 grams of polyoxypropylene triol (average equivalent wt. 137). A vacuum was applied and the solution was heated to 130-140°C for 30 minutes. The solution was then cooled to 40°C and 235.30 grams of toluene diisocyanate (80:20 percent mixture

of 2,4-toluene diisocyanate and 2,6-toluene diisocyanate) were added. The solution temperature increased to 65°-70°C and was maintained in that range for 2 hours. To the reaction mixture was added 0.15 grams of a 25% solution of stannous octoate in dioctyl phthalate and stirring was continued, temperature being maintained at 65°-70°C for an additional 3 hours. The solution was cooled to 60°-65°C and diluted with 100.00 grams of methyl ethyl ketone to decrease the viscosity.

A solution of isocyanate-reactive water-soluble salt was prepared by dissolving 72.18 grams of the triethylamine salt of α,α-bis(hydroxymethyl) propionic acid in 21.21 grams of methyl ethyl ketone.

To 1027.75 grams of the vigorously stirred intermediate prepolymer solution under a dry nitrogen blanket are added 18.69 grams of an isocyanate-reactive trialkoxysilane, triethoxysilylpropyl amine $H_2N(CH_2)_3Si(OC_2H_5)_3$ and mixed 10-15 minutes followed by 93.39 grams of the above triethylamine salt solution. Stirring is continued for 2 minutes followed by the addition of 15 g MEK. A 340.30 gram aliquot of the reaction mixture is dispersed in 557.86 grams water in the range of 20°-65°C by a high-shear mechanical homogenizer (Microfluidics Homogenizer Model # HC-5000 at an air line pressure of .621 MPa).

Example 2

A prepolymer having a lower molecular weight polyester polyol segment was made in a 1 liter reaction flask equipped with a heating mantel, condenser, stirring blade, nitrogen inlet and thermometer equipped with a temperature controller to monitor temperature. 426.78 grams (3.233 eq.) of 4,4'-dicyclohexylmethane diisocyanate (DES W), 212.40 grams (0.8015 eq.) of Tone™ 201 (a caprolactone-based polyol), 55.53 grams (0.8276 eq.) of 2,2-bis(hydroxymethyl) propionic acid (DMPA) and 122.76 grams of n-methyl pyrrolidone (NMP) were heated with stirring to 40-50°C. 0.112 gram of dibutyl tin dilaurate (T-12) was added and the mixture was heated to 80°C and allowed to react for 2 hours.

A premix was made with 325.00 grams of distilled water, 7.48 grams of triethylamine (TEA), 8.50 grams (0.2829 eq.) of ethylene diamine (EDA) and 8.50 grams (0.0474 eq.) of gamma-aminopropyltrimethoxysilane (A-1110).

170.15 grams (0.3338 eq.) of the prepolymer was added over 10 minutes to the premix solution in a Microfluidics Homogenizer Model # HC-5000 at an air line pressure of .621 MPa. A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity (R.H.) to a thickness of 0,1 mm (4 mils) and the cured composition's water resistance, solvent (methyl ethyl ketone) resistance, tensile strength, and elongation was measured. These properties were recorded and can be found in Table 1. The U.B.C. was calculated to be 1.867.

Example 3

A prepolymer having a high molecular weight polyester polyol was made in a 1 liter reaction flask equipped with a heating mantel, condenser, stirring blade, nitrogen inlet and thermometer equipped with a temperature controller to monitor temperature. 151.74 grams (1.1495 eq.) of 4,4'-dicyclohexylmethane diisocyanate (DES W), 427.37 grams (0.2849 eq.) of Tone™ 260 (a caprolactone-based polyol), 19.74 grams (0.2942 eq.) of 2,2-bis(hydroxymethyl) propionic acid (DMPA) and 257.60 grams of n-methyl pyrrolidone (NMP) were heated with stirring to 40-50°C. 0.040 gram of dibutyl tin dilaurate (T-12) was added and the mixture was heated to 80°C and allowed to react for 2 hours.

A premix was made with 325.00 grams of distilled water, 2.51 grams of triethylamine (TEA), 2.85 grams (0.0948 eq.) of ethylene diamine (EDA) and 2.85 grams (0.0159 eq.) of gamma-aminopropyltri methoxysilane (A-1110).

170.15 grams (0.1133 eq.) of the prepolymer was added over 10 minutes to the premix solution in a Microfluidics Homogenizer Model #HC-5000 at an air line pressure of .621 MPa. A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity (R.H.) to a thickness of 0.1 mm (4 mils) and the cured composition's water resistance, solvent (methyl ethyl ketone) resistance, tensile strength, and elongation was measured. These properties were recorded and can be found in Table 1. The U.B.C. was calculated to be 1.869.

Example 4

A prepolymer having lower solubilizing acid content was made in a 1 liter reaction flask equipped with a heating mantel, condenser, stirring blade, nitrogen inlet and thermometer equipped with a temperature controller to monitor temperature. 284.52 grams (2.1555 eq.) of 4,4'-dicyclohexylmethane diisocyanate (DES W), 418.86 grams (0.6720 eq.) of Tone™ 230 (a caprolactone-based polyol), 27.77 grams (0.4139 eq.) of 2,2-bis(hydroxymethyl) propionic acid (DMPA) and 129.00 grams of n-methyl pyrrolidone (NMP) were heated with stirring to 40-50°C. 0.075 gram of dibutyl tin dilaurate (T-12) was added and the mixture was heated to 80°C and allowed to react for 2 hours.

A premix was made with 322.00 grams of distilled water, 4.75 grams of triethylamine (TEA), 4.80 grams (0.1797 eq.) of ethylene diamine (EDA) and 5.40 grams (0.0301 eq.) of gamma-aminopropyltrimethoxysilane (A-1110).

170.15 grams (0.2116 eq.) of the prepolymer was added over 10 minutes to the premix solution in a Microfluidics Homogenizer Model #HC-5000 at an air line pressure of .621 MPa. A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity (R.H.) to a thickness of 0.1 mm (4 mils) and the cured composition's water resistance, solvent (methyl ethyl ketone) resistance, tensile strength, and elongation was measured. These properties were recorded and can be found in Table 1. The U.B.C. was calculated to be 1.867.

Example 5

A prepolymer having higher solubilizing acid content was made in a 1 liter reaction flask equipped with a heating mantel, condenser, stirring blade, nitrogen inlet and thermometer equipped with a temperature controller to monitor temperature. 403.07 grams (3.0536 eq.) of 4,4'-dicyclohexylmethane diisocyanate (DES W), 228.06 grams (0.3659 eq.) of Tone™ 230 (a caprolactone-based polyol), 78.68 grams (1.1726 eq.) of 2,2-bis(hydroxymethyl) propionic acid (DMPA) and 304.00 grams of n-methyl pyrrolidone (NMP) were heated with stirring to 40-50°C. 0.106 gram of dibutyl tin dilaurate (T-12) was added and the mixture was heated to 80°C and allowed to react for 2 hours.

A premix was made with 248.00 grams of distilled water, 5.72 grams of triethylamine (TEA), 6.50 grams (0.2163 eq.) of ethylene diamine (EDA) and 6.50 grams (0.0363 eq.) of gamma-aminopropyltrimethoxysilane (A-1110).

170.15 grams (0.2543 eq.) of the prepolymer was added over 10 minutes to the premix solution in a Microfluidics Homogenizer Model #HC-5000 at an air line pressure of .621 MPa. A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity (R.H.) to a thickness of 0.1 mm (4 mils) and the cured composition's water resistance, solvent (methyl ethyl ketone) resistance, tensile strength, and elongation was measured. These properties were recorded and can be found in Table 1. The U.B.C. was calculated to be 1.867.

Comparative Example C-3

A prepolymer having insufficient solubilizing acid (DMPA) content was made in a 1 liter reaction flask equipped with a heating mantel, condenser, stirring blade, nitrogen inlet and thermometer equipped with a temperature controller to monitor temperature. 237.1 grams (1.7962 eq.) of 4,4'-dicyclohexylmethane diisocyanate (DES W), 420.76 grams (0.6750 eq.) of Tone 230 (a caprolactone-based polyol), 15.42 grams (0.2298 eq.) of 2,2-bis(hydroxymethyl) propionic acid (DMPA) and 119.00 grams of n-methyl pyrrolidone (NMP) were heated with stirring to 40-50°C. 0.0625 gram of dibutyl tin dilaurate (T-12) was added and the mixture was heated to 80°C and allowed to react for 2 hours.

A premix was made with 318.00 grams of distilled water, 4.31 grams of triethylamine (TEA), 4.90 grams (0.1631 eq.) of ethylene diamine (EDA) and 4.9 grams (0.0273 eq.) of gamma-aminopropyltrimethoxysilane (A-1110).

170.15 grams (0.1914 eq.) of the prepolymer was added over 10 minutes to the premix solution in a Microfluidics Homogenizer Model #HC-5000 at an air line pressure of .621 MPa. The polyurethane dispersion was initially stable, but some of the dispersion settled to the bottom after 5 days storage at room temperature due to partial agglomeration of the dispersion. The U.B.C. was calculated to be 1.867.

Comparative Example C-4

A prepolymer having no polyester polyol and an excess of solubilizing acid was made in a 1 liter reaction flask equipped with a heating mantel, condenser, stirring blade, nitrogen inlet and thermometer equipped with a temperature controller to monitor temperature. 483.68 grams (3.6642 eq.) of 4,4'-dicyclohexylmethane diisocyanate (DES W), 123.88 grams (1.8462 eq.) of 2,2-bis(hydroxymethyl) propionic acid (DMPA) and 260.4 grams of n-methyl pyrrolidone (NMP) were heated with stirring to 40-50°C. 0.127 gram of dibutyl tin dilaurate (T-12) was added and the mixture was heated to 80°C and allowed to react for 2 hours.

A premix was made with 264.00 grams of distilled water, 7.97 grams of triethylamine (TEA), 9.1 grams (0.3028 eq.) of ethylene diamine (EDA) and 9.1 grams (0.0508 eq.) of gamma-aminopropyltrimethoxysilane (A-1110).

170.15 grams (0.3563 eq.) of the prepolymer was added over 10 minutes to the premix solution in a Microfluidics Homogenizer Model #HC-5000 at an air line pressure of .621 MPa. The material gelled during emulsification. The U.B.C. was calculated to be 1.867.

Comparative Example C-5

A prepolymer having an excess of diisocyanate (NCO/OH=5) was made in a 1 liter reaction flask equipped with a heating mantel, condenser, stirring blade, nitrogen inlet and thermometer equipped with a temperature controller to monitor temperature. 459.92 grams (3.4842 eq.) of 4,4'-dicyclohexylmethane diisocyanate (DES W), 213.66 grams (0.3428 eq.) of Tone 230 (a caprolactone-based polyol), 23.75 grams (0.3539 eq.) of 2,2-bis(hydroxymethyl) propionic acid (DMPA) and 122.43 grams of n-methyl pyrrolidone (NMP) were heated with stirring to 40-50°C. 0.048 gram of dibutyl tin dilaurate (T-12) was added and the mixture was heated to 80°C and allowed to react for 2 hours.

A premix was made with 475.00 grams of distilled water, 12.94 grams of triethylamine (TEA), 6.0 grams (0.1997 eq.) of ethylene diamine (EDA) and 67.3 grams (0.3753 eq.) of gamma-aminopropyltrimethoxysilane (A-1110).

170.15 grams (0.5785 eq.) of the prepolymer was added over 10 minutes to the premix solution in a Microfluidics Homogenizer Model #HC-5000 at an air line pressure of .621 MPa. The material gelled during emulsification. The U.B.C. was calculated to be 1.510.

Example 6

A low molecular weight urethane polymer (average molecular weight 4800) was prepared by emulsifying the 170.15 grams (0.2363 eq.) of the prepolymer of Example 1 with a premix consisting of 340.00 grams of distilled water, 5.28 grams of triethylamine (TEA), 4.67 grams (0.1554 eq.) of ethylene diamine (EDA) and 13.93 grams (0.0777 eq.) of gamma-aminopropyltrimethoxysilane (A-1110). A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity (R.H.) to a thickness of 0.1 mm (4 mils) and the cured composition's water resistance, solvent (methyl ethyl ketone) resistance, tensile strength, and elongation was measured. The U.B.C. was calculated to be 1.718.

Example 7

A high molecular weight (average molecular weight 100,000) urethane polymer was prepared by emulsifying the 170.15 grams (0.2363 eq.) of the prepolymer of Example 1 with a premix consisting of 316.00 grams of distilled water, 5.28 grams of triethylamine (TEA), 6.90 grams (0.2296 eq.) of ethylenediamine (EDA) and 0.64 gram (0.0036 eq.) of gamma-aminopropyltrimethoxysilane (A-1110). A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity (R.H.) to a thickness of 0.1 mm (4 mils) and the cured composition's water resistance, solvent (methyl ethyl ketone) resistance, tensile strength, and elongation was measured. These properties were recorded and can be found in Table 1. The U.B.C. was calculated to be 1.985.

Comparative Example C-6

A urethane polymer of very low molecular weight (average molecular weight 3300) was prepared by emulsifying the 170.15 grams (0.2363 eq.) of the prepolymer of Example 1 with a premix consisting of 351.00 grams of distilled water, 5.28 grams of triethylamine (TEA), 3.55 grams (0.1181 eq.) of ethylene diamine (EDA) and 20.6 grams (0.1149 eq.) of gamma-aminopropyltrimethoxysilane (A-1110). A stable dispersion was not formed. The prepolymer immediately agglomerated upon mixing with the water phase. The U.B.C. was calculated to be 1.609.

Example 8

A prepolymer having higher catalyst and solvent content was made using only the heat generated from the exotherm reaction (i.e., no external heat added, maximum temperature from the exotherm=70°C) in a 1 liter reaction flask equipped with a condenser, stirring blade, nitrogen inlet and thermometer. 308.23 grams (2.3351 eq.) of 4,4'-dicyclohexylmethane diisocyanate (DES W), 360.72 grams (0.5787 eq.) of Tone™ 230 (a caprolactone-based polyol), 40.10 grams (0.5976 eq.) of 2,2-bis(hydroxymethyl) propionic acid (DMPA), 305.50 grams of n-methyl pyrrolidone (NMP), and 4.16 grams of dibutyl tin dilaurate (T-12) were combined and the mixture was allowed to react for 2 hours.

A premix was made with 238.00 grams of distilled water, 4.32 grams of triethylamine (TEA), 4.90 grams (0.1631 eq.) of ethylene diamine (EDA) and 4.90 grams (0.0273 eq.) of gamma-aminopropyltrimethoxysilane (A-1110).

170.15 grams (0.1935 eq.) of the prepolymer was added over 10 minutes to the premix solution in a Microfluidics Homogenizer Model #HC-5000 at an air line pressure of .621 MPa. A stable dispersion was formed, pH and viscosity were recorded, and the dispersion was subjected to both room temperature (RT) and elevated temperature

(71°C) stability testing. The dispersion was then cured for 1 week at 21°C (70°F) and 50% Relative Humidity (R.H.) to a thickness of 0.1 mm (4 mils) and the cured composition's water resistance, solvent (methyl ethyl ketone) resistance, tensile strength, and elongation was measured. These properties were recorded and can be found in Table 1. The U. B.C. was calculated to be 1.868.

Example 9

A prepolymer was made using an alternative catalyst (i.e. triethylamine) in a 1 liter reaction flask equipped with a heating mantel, condenser, stirring blade, nitrogen inlet and thermometer equipped with a temperature controller to monitor temperature. 308.23 grams (2.3351 eq.) of 4,4'-dicyclohexylmethane diisocyanate (DES W), 360.72 grams (0.5787 eq.) of Tone™ 230 (a caprolactone-based polyol), 40.10 grams (0.5976 eq.) of 2,2-bis(hydroxymethyl) propionic acid (DMPA) and 125.10 grams of n-methyl pyrrolidone (NMP) were heated with stirring to 40-50°C. 4.16 grams of triethylamine (TEA) was added and the mixture was heated to 80°C and allowed to react for 2 hours.

A premix was made with 325.00 grams of distilled water, 5.28 grams of triethylamine (TEA), 6.00 grams (0.1997 eq.) of ethylene diamine (EDA) and 6.00 grams (0.0335 eq.) of gamma-aminopropyltrimethoxysilane (A-1110).

170.15 grams (0.2352 eq.) of the prepolymer was added over 10 minutes to the premix solution in a Microfluidics Homogenizer Model #HC-5000 at an air line pressure of .621 MPa . A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity (R.H.) to a thickness of 0.1 mm (4 mils) and the cured composition's water resistance, solvent (methyl ethyl ketone) resistance, tensile strength, and elongation was measured. These properties were recorded and can be found in Table I. The U. B.C. was calculated to be 1.867.

Example 10

A prepolymer was made using an alternative solubilizing compound (i.e., methyldiethanol amine) in a I liter reaction flask equipped with a heating mantel, condenser, stirring blade, nitrogen inlet and thermometer equipped with a temperature controller to monitor temperature. 308.23 grams (2.3351 eq.) of 4,4'-dicyclohexylmethane diisocyanate (DES W), 360.72 grams (0.5787 eq.) of Tone™ 230 (a caprolactone-based polyol), 35.61 grams (0.5976 eq.) of methyldiethanol amine (MDEA) and 124.30 grams of n-methyl pyrrolidone (NMP) were heated with stirring to 40-50°C. 0.081 gram of dibutyl tin dilaurate (T-12) was added and the mixture was heated to 80°C and allowed to react for 2 hours.

To a 170.15 gram (0.2378 eq.) aliquot of the prepolymer at 50°C was added 10.00 grams methyl ethyl ketone (MEK) and 25.00 grams (0.8326 eq.) glacial acetic acid. This prepolymer mixture was then emulsified in 200.00 grams of distilled water.

A premix was made with 125.00 grams of distilled water, 25.00 grams of acetic acid, 6.00 grams (0.1997 eq.) of ethylene diamine (EDA) and 6.00 grams (0.0335 eq.) of gamma-aminopropyltrimethoxysilane (A-1110).

Dropwise and with stirring, 162.00 grams of the premix was added to 405.15 grams of the prepolymer dispersion. The MEK was then stripped off under heat and vacuum. A stable dispersion was formed, pH and viscosity were recorded, and the dispersion was subjected to both room temperature (RT) and elevated temperature (71°C) stability testing. A pH of 4.5 was measured and a viscosity of 10 cps. The U.B.C. was calculated to be 1.868.

Example 11

A prepolymer was made using an alternative solubilizing compound (i.e., hydrocaffeic acid) in a 1 liter reaction flask equipped with a heating mantel, condenser, stirring blade, nitrogen inlet and thermometer equipped with a temperature controller to monitor temperature. 308.23 grams (2.3351 eq.) of 4,4'-dicyclohexylmethane diisocyanate (DES W), 382.00 grams (0.6129 eq.) of Tone™ 230 (a caprolactone-based polyol), 51.25 grams (0.5626 eq.) of hydrocaffeic acid (HCA) and 130.80 grams of n-methyl pyrrolidone (NMP) were heated with stirring to 40-50°C. 0.081 grams of dibutyl tin dilaurate (T-12) was added and the mixture was heated to 80°C and allowed to react for 2 hours.

To a 170.15 gram (0.2262 eq.) aliquot of the prepolymer at 50°C was added 10.00 grams methyl ethyl ketone (MEK) and 5.28 grams triethylamine. This prepolymer mixture was then emulsified in 200.00 grams of distilled water.

A premix was made with 125.00 grams of distilled water, 5.75 grams (0.1913 eq.) of ethylene diamine (EDA), and 5.75 grams (0.0321 eq.) of gamma-aminopropyltrimethoxysilane (A-1110).

Dropwise and with stirring 136.50 grams of the premix was added to 385.43 grams of the prepolymer dispersion. The MEK was then stripped off under heat and vacuum. The dispersion remained stable for 5 days at a recorded pH of 10.5. The U.B.C. was calculated to be 1.867.

Example 12

A prepolymer was made in a 1 liter reaction flask equipped with a heating mantel, condenser, stirring blade, nitrogen inlet and thermometer equipped with a temperature controller to monitor temperature. 200.00 grams (1.8002 eq.) of isophorone diisocyanate (IPDI), 277.48 grams (0.4452 eq.) of Tone™ 230 (a caprolactone-based polyol), 30.85 grams (0.4598 eq.) of 2,2-bis(hydroxymethyl) propionic acid (DMPA) and 225.00 grams of methyl ethyl ketone (MEK) were heated with stirring to 40-50°C. 0.25 gram of dibutyl tin dilaurate (T-12) was added and the mixture was heated to 80°C and allowed to react for 2 hours.

A premix was made with 325.00 grams of distilled water, 5.28 grams of triethylamine (TEA), 5.21 grams (0.1734 eq.) of ethylene diamine (EDA) and 5.16 grams (0.0288 eq.) of gamma-aminopropyltrimethoxysilane (A-1110).

170.15 grams (0.2076 eq.) of the prepolymer was added over 10 minutes to the premix solution in a Microfluidics Homogenizer Model #HC-5000 at an air line pressure of .621 MPa. A stable dispersion was formed. The MEK was then stripped off under heat and vacuum. The U.B.C. was calculated to be 1.870.

Example 13

A prepolymer was made in a 1 liter reaction flask equipped with a heating mantel, condenser, stirring blade, nitrogen inlet and thermometer equipped with a temperature controller to monitor temperature. 156.27 grams (1.7962 eq.) of toluene diisocyanate (TDI), 157.21 grams (0.1121 eq.) of Arcol E-351 polyether polyol (an ethylene oxide capped polyoxypropylene diol of 1402.5 av. eq. weight commercially available from Arco Chemical Company), 30.85 grams (0.4598 eq.) of 2,2-bis(hydroxymethyl) propionic acid (DMPA) and 300 grams of methyl ethyl ketone (MEK) were heated with stirring to 40-50°C. Next, 0.06g of bis(lauryl,dibutyltin)oxide was added and the mixture was heated to 80°C and allowed to react for 2 hours.

The prepolymer was chain extended with 50.00 grams 1,4-butanediol and the reaction was allowed to run for another 30 minutes. The prepolymer was then capped with 22.22 grams (0.1131 eq.) of $\gamma$-mercaptopropyltrimethoxysilane (A-189). The end capping reaction was catalyzed with 1 gram of Dabco 33LV (triethylene diamine at 33% solids in dipropylene glycol) for 30 minutes.

173.00 grams (0.2363 eq.) of the polymer was emulsified in 325 grams of distilled water and 5.28 grams of triethylamine. The polymer was added to the water-amine solution over 2-4 minutes. The solvent was then removed from the emulsion with a roto-evaporator. The U.B.C. was calculated to be 1.937.

Table 1

| Ex. No. | RT Stability | 71°C (160°F) Stability (days to gel) | pH | Viscosity (cps) | $H_2O$ Resistance | MEK Resistance | Tensile (psi) | Elongation (%) |
|---|---|---|---|---|---|---|---|---|
| 1 | Good | 18 | 8.5 | 20 | Good | Good | 4834 | 177 |
| C-1 | Good | 18 | 8.3 | 32,000 | Poor | Poor | 447 | 319 |
| 2 | Good | 7 | 7.5* | 22 | Good | Good | 2466 | 102 |
| C-2 | Poor | 18 | 7.5* | 12.5 | -- | -- | 208** | >500 |
| 3 | Good | 28 | 9.8 | 18 | Good | Good | 2115 | 7 |
| C-3 | Poor | -- | 10.1 | 15 | -- | -- | -- | -- |
| 4 | Good | 25 | 8.0* | 22 | Good | Good | 1890 | 235 |
| C-4 | Gelled during emulsification | | | | | | | |
| 5 | Good | 7 | 7.4* | 25 | Good | Good | -- | -- |
| C-5 | Gelled during emulsification | | | | | | | |
| C-6 | Gelled during emulsification | | | | | | | |
| 7 | Good | 18 | 7.4* | 15 | Good | Good | 2820 | 331 |
| 8 | Good | 11 | 9.4 | 15 | Good | Good | 3234 | 226 |
| 9 | Good | 25 | 8.9 | 200 | Good | Good | 2358 | 211 |

* pH adjusted to approx. 8.5 using 28% $NH_4OH$

** Tensile strength at 500% elongation - not at failure or break

WOOD COATING EXAMPLES

Example 14

A wood furnishing coating was made in the following manner: A prepolymer having a lower molecular weight polyester polyol segment was made in a 0.5 liter reaction flask equipped with a heating mantel, condenser, stirring blade, nitrogen inlet and thermometer. 170.95 grams (1.533 eq.) of isophorone diisocyanate (IPDI), 121.07 grams (0.291 eq.) of Tone™ 210 (a caprolactone-based diol), 19.32 grams (0.288 eq.) of 2,2-bis(hydroxymethyl) propionic acid (DMPA), 10.34 grams (0.229 eq.) of 1,4-butanediol, 6.65 grams (0.147 eq.) of TMP, and 11.14 grams of N-methyl pyrrolidone (NMP) were heated with stirring to 60-80°C. 0.04 gram of T-9 (a stannous octanoate catalyst) was added and the mixture was allowed to heat at 80°C for an 1 hour. After 80% of the monomers in this mixture were converted to prepolymer as measured by standard titrametric procedures with a dibutylamine and HCl indicator solution, 13.95 grams (0.0367 eq.) of Cythane™ 3160 (a trifunctional polyisocyanate adduct) were then added and the mixture was reacted for another 45 minutes.

A premix was made with 402.00 grams of deionized water, 7.44 grams of triethylamine (TEA), 6.40 grams (0.2133 eq.) of ethylene diamine (EDA) and 6.83 grams (0.061 eq.) of Silane Q2-8038 (γ-aminopropylmethyl dimethoxy silane).

200.00 grams (0.305 eq.) of the prepolymer was emulsified in the premix solution. The polyurethane dispersion was made into finish by incorporating the proper levelling, wetting, defoaming, thickening, surface active, and mar resistant agents and other additives as given below. This finish was then coated and cured on an oak panel as specified in the above test methods and tested for solvent resistance, stain resistance and gloss. The results of these tests may be found in Table 2 The U.B.C. was calculated to be 1.84.

| | |
|---|---|
| Polyurethane Dispersion | 100.0 grams |
| Byk™ 301[1] | 0.27 grams |
| FC-129 (1%)[2] | 0.92 grams |
| Igepal™ CO-630[3] | 0.22 grams |
| SWS 211[4] | 0.55 grams |
| Acrylsol™ TT935[5] | 0.82 grams |
| Butyl Carbitol[6] | 3.5 grams |
| Propylene Glycol[6] | 2.5 grams |
| D.I. Water | 2.73 grams |
| Adjusted pH | 8.5 |

[1] a mar aid and defoaming agent available from Byk Chemie
[2] a fluorochemical surfactant available from 3M Co.
[3] a surfactant commercially available from Rhone-Poulenc
[4] an antifoam emulsion available from Wacker Silicone Corp.
[5] a thickener available from Rohm and Haas
[6] optional coalescing agents

Example 15

A wood furniture coating was prepared according to the method of Example 14, except without the incorporation of the polyfunctional isocyanate adduct in the prepolymer. A prepolymer was prepared from 125.00 grams (1.12 eq.) of IPDI, 134.72 grams (0.2161 eq.) of Tone™ 230 (a high molecular weight polycaprolactone diol), 17.00 grams (0.2537 eq.) of DMPA, 7.20 grams (0.1598 eq.) of 1,4-butanediol, 3.00 grams (0.0672 eq.) of TMP, 0.02 grams of T-9 stannous octanoate catalyst, 4.75 grams of stabilizers (3.25 grams Tinuvin™ 144 and 1.50 grams Irganox™ 245), 10.00 grams of NMP, and 30.00 grams of MEK.

The polyurethane dispersion was prepared by adding 250.00 grams of the prepolymer to a premix solution containing 508.00 grams of deionized water, 9.66 grams of triethylamine, 8.10 grams (0.27 eq.) of ethylene diamine, and 5.40 grams (0.0482 eq.) of Silane Q2-8038 (γ-aminopropylmethyl dimethoxysilane) and then the MEK was stripped from the dispersion.

The polyurethane dispersion was made into a finish, which was then coated and cured on an oak panel as specified in the above test methods and tested for solvent resistance, stain resistance and gloss. The results of these

tests may be found in Table 2.

TABLE 2

| Example No. | 14 | 15 |
|---|---|---|
| Solvent Resistance* | 28 | 19 |
| Stain Resistance** | 20 | 18 |
| Gloss | 83.3 | 83.7 |

* Maximum score attainable 28

** Maximum score attainable 22

Examples 14 and 15 demonstrate the improved solvent and stain resistance in these wood furniture coating formulations resulting from the addition of the polyfunctional isocyanate adduct to the polyurethane prepolymer. These wood furniture finishes also exhibit excellent stain resistance and gloss comparable to or exceeding those properties of polyurethane products which are currently commercially available.

Wood Floor Coatings

Example 16

A polyurethane coating employing a mixture of polyether and polyester polyols which is useful as a wood floor finish was made according to the method of Example 14. A prepolymer was prepared from a mixture of polyester and polyether polyols from 131.06 grams (1.175 eq.) of IPDI, 39.40 grams (0.0394 eq.) of Terethane™-2000 (a poly(tetramethylene ether glycol)), 119.84 grams (0.1923 eq.) of Tone™ 230 (a caprolactone-based polyol) , 17.57 grams (0.2622 eq.) of DMPA, 2.54 grams (0.5638 eq.) of 1,4-butanediol, 3.33 grams (0.0746 eq.) of TMP. After 80% of the monomers in this mixture were converted to prepolymer as measured by standard titrametric procedures with a dibutylamine and HCl indicator solution, 15.71 grams (0.0413 eq.) of Cythane™ 3160 (a trifunctional polyisocyanate adduct), 16.00 grams of NMP, 28.0 grams of MEK, 0.04 gram of T-9, and 3.0 grams of stabilizers (2.00 grams Tinuvin™ 292 and 1.00 gram Irganox™ 245) were then added and the mixture was reacted for another 45 minutes.

The dispersion was prepared by adding 150.00 grams (132.45 grams solids) of the above prepolymer into a premix solution containing 305.00 grams of deionized water, 5.00 grams of triethylamine, 5.50 grams (0.1833 eq.) of EDA, and 5.40 grams (0.0482 eq.) of Silane Q2-8038, followed by the stripping of the MEK.

The polyurethane dispersion was made into a wood floor finish, which was then coated and cured on an oak panel as specified in the above test methods and tested for solvent resistance, abrasion resistance, impact resistance and adhesion to a wood flooring sample. The results of these tests may be found in Table 3. The U.B.C. was calculated to be 1.999.

Example 17

A polyurethane wood floor finish was prepared in accordance with Example 16, except that a higher amount of isocyanate-reactive silane compound was incorporated in the premix; i.e., 5.93 grams (0.0529 eq.) of Silane Q2-8038 ($\gamma$-aminopropylmethyl dimethoxysilane).

The polyurethane wood floor finish was then coated and cured on an oak panel as specified in the above test methods and tested for solvent resistance, abrasion resistance, impact resistance and adhesion to a wood flooring sample. The results of these tests may be found in Table 3. The U.B.C. was calculated to be 2.014.

Example 18

A polyurethane coating employing a polyester polyol which is useful as a wood floor finish was made according to the method of Example 14. A prepolymer was prepared from 152.33 grams (1.3482 eq.) of IPDI, 150.68 grams (0.3197 eq.) of LEX1400-120 (a linear poly(1,6-hexanediol-neopentyl glycol-adipate)), 16.38 grams (0.2444 eq.) of DMPA, 4.06 grams (0.090 eq.) of 1,4-butanediol, 6.55 grams (0.1467 eq.) of TMP. After 80% of the monomers in this mixture were converted to prepolymer as measured by standard titrametric procedures with a dibutylamine and HCl indicator solution, 14.75 grams (0.0388 eq.) of Cythane™ 3160 (a trifunctional polyisocyanate adduct), 0.04 gram of T-9 catalyst, 16.00 grams of NMP, 28.00 grams of MEK, and 4.00 grams of stabilizers (2.00 grams Tinuvin™ 292 and 2.00 grams Irganox™ 1010) were then added and the mixture was reacted for another 45 minutes.

The dispersion was prepared by adding 150.00 grams (133.20 grams solids) of prepolymer to a premix solution

containing 305.00 grams of deionized water, 5.03 grams of triethylamine, 5.40 (0.18 eq.) of EDA and 5.40 grams (0.0482 eq.) of Silane Q2-8038 (γ-aminopropylmethyl dimethoxysilane), and the MEK was removed.

The polyurethane dispersion was made into a wood floor finish, which was then coated and cured on an oak panel as specified in the above test methods and tested for solvent resistance, abrasion resistance, impact resistance and adhesion to a wood flooring sample. The results of these tests may be found in Table 3.

Example 19

A polyurethane coating employing a mixture of polyether polyols which is useful as a wood floor finish was made according to the method of Example 14. A prepolymer was prepared from 103.55 grams (0.9287 eq.) of IPDI, 150.19 grams (0.1502 eq.) of ARCOL™ 2025 (a poly(propylene glycol)), 28.37 grams (0.0279 eq.) of Terethane™-2000 (a poly(tetramethylene ether glycol)), 2.27 grams (0.05039 eq.) of 1,4-butanediol, 15.60 grams (0.2328 eq.) of DMPA, 18.00 grams of NMP, 0.04 gram of T-9 catalyst, and total 6.00 grams of stabilizers (2.00 grams Tinuvin™ 292, 2.00 grams Tinuvin™ 328, and 2.00 grams Irganox™ 1010).

The dispersion from this prepolymer was made by adding 125.00 grams (118.00 grams solids) of prepolymer into a premix containing a solution of 250.00 grams of deionized water, 4.49 grams of triethylamine, 4.51 grams (0.1503 eq.) EDA and 3.13 grams (0.0279 eq.) of Silane Q2-8038 (γ-aminopropylmethyl dimethoxysilane), and the MEK was removed.

The polyurethane dispersion was made into a wood floor finish, which was then coated and cured on an oak panel as specified in the above test methods and tested for solvent resistance, abrasion resistance, impact resistance and adhesion to a wood flooring sample. The results of these tests may be found in Table 3.

Example 20

A polyurethane wood floor finish was prepared in accordance with Example 19, except that a higher amount of isocyanate-reactive silane compound was incorporated in the premix; i.e., 4.88 grams (0.0435 eq.) of Silane Q2-8038 (γ-aminopropylmethyl dimethoxysilane).

The polyurethane wood floor finish was then coated and cured on an oak panel as specified in the above test methods and tested for solvent resistance, abrasion resistance, impact resistance and adhesion to a wood flooring sample. The results of these tests may be found in Table 3.

Example 21

A polyurethane coating employing a crystallizable polyester polyol which is useful as a wood floor finish was made according to the method of Example 14. A prepolymer was prepared from 63.00 grams (0.5650 eq.) of IPDI, 130.00 grams (0.06952 eq.) of LEX1130-30 (a linear poly(1,6-hexanediol adipate)), 11.00 grams (0.1642 eq.) of DMPA, 1.3 grams (0.0288 eq.) of 1,4-butanediol, 0.50 grams (0.1119 eq.) of TMP, 0.04 gram of T-9 catalyst, 10.00 grams of NMP, 40.00 grams of MEK, and total stabilizers of 5.08 grams of stabilizers (2.14 grams Tinuvin™ 292, 2.27 grams Tinuvin™ 328, and 0.67 gram Irganox™ 1010).

The dispersion was made from this prepolymer by adding 150.00 grams (121.20 grams solids) of the prepolymer into a premix solution containing 300.00 grams of deionized water, 4.72 grams of triethylamine, 3.89 grams (0.1297 eq.) of EDA, and 4.50 grams (0.0402 eq.) of Silane Q2-8038 (γ-aminopropylmethyl dimethoxysilane), and MEK was removed.

The polyurethane dispersion was made into a wood floor finish which was then coated and cured on an oak panel as specified in the above test methods and tested for solvent resistance, abrasion resistance, impact resistance and adhesion to a wood flooring sample. The results of these tests may be found in Table 3.

Example 22

A polyurethane coating employing a mixture of crystallizable polyester polyols which is useful as a wood floor finish was made according to the method of Example 14. A prepolymer was prepared from 32.00 grams (0.2869 eq.) of IPDI, 49.00 grams (0.0262 eq.) of LEX1130-30 (a higher molecular weight linear poly(1,6-hexanediol adipate)), 12.7 grams (0.1245 eq.) of LEX1130-55 (a lower molecular weight linear poly(1,6-hexanediol adipate)), 5.34 grams (0.0797 eq.) of DMPA, 0.25 grams (0.0559 eq.) of TMP, 0.04 gram of T-9 catalyst, 3.00 grams of NMP, and 12.0 grams of MEK.

The dispersion was prepared by adding 100.00 grams (86.96 grams solids) of the prepolymer into a premix solution containing 200.00 grams deionized water, 3.39 grams triethylamine, 2.54 grams (0.0849 eq.) of EDA, 3.9 grams (0.0348 eq.) of Silane Q2-8038 (γ-aminopropylmethyl dimethoxysilane), and then the MEK was removed.

The polyurethane dispersion was made into a wood floor finish which was then coated and cured on an oak

panel as specified in the above test methods and tested for solvent resistance, abrasion resistance, impact resistance and adhesion to a wood flooring sample. The results of these tests may be found in Table 3.

Example 23

A polyurethane coating employing a mixture of crystallizable polyester polyols which is useful as a wood floor finish was made according to the method of Example 14. A prepolymer was prepared from 35.55 grams (0.3188 eq.) of IPDI, 48.89 grams (0.03055 eq.) of LEX1400-35 (a higher molecular weight poly(1,6-hexanediol adipate)), 8.89 grams (0.0189 eq.) of LEX1400-120 (a higher molecular weight poly(1,6-hexanediol adipate)), 4.89 grams (0.0730 eq.) of DMPA, 1.78 grams (0.0399 eq.) of TMP, 0.04 gram of T-9 catalyst, 5.00 grams of NMP, and 20.00 grams of MEK.

The dispersion was prepared by adding 100.00 grams of prepolymer into a premix solution containing 200.00 grams of deionized water, 3.01 grams of triethylamine, 3.00 grams (0.10 eq.) of EDA, and 3.00 grams of silane Q2-8038 ($\gamma$-aminopropylmethyl dimethoxysilane), and the MEK was removed.

The polyurethane dispersion was made into a wood floor finish which was then coated and cured on an oak panel as specified in the above test methods and tested for solvent resistance, abrasion resistance, impact resistance and adhesion to a wood flooring sample. The results of these tests may be found in Table 3.

TABLE 3

| Ex. | Abrasion Resistance (grams lost) H-22, 50 cycles, 500 grams | Abrasion Resistance (grams lost) CS-17, 1000 cycles, 1000 grams | Solvent Resistance | Impact Resistance, (cm) | Adhesion |
|---|---|---|---|---|---|
| 16 | 6.5 | 27.3 | 28 | 20 | 5B |
| 17 | | 18.3 | 28 | > 80 | 5B |
| 18 | 7.2 | | 28 | | 5B |
| 19 | | 19.8 | 28 | > 80 | 5B |
| 20 | | 14.5 | 28 | > 80 | 5B |
| 21 | | 4.5 | 22 | > 80 | 5B |
| 22 | | 6.4 | 26 | > 80 | 5B |
| 23 | | 18.8 | 28 | > 80 | 5B |
| C4 | 11.3 | 29.2 | 28 | | |
| C5 | 16.2 | | | | |
| C6 | 13.7 | 32.5 | 28 | | |

C4 is Street Shoe, a two part crosslinked waterborne polyurethane floor coating available from Basic Coatings Co.

C5 is Pacific Strong, a one part crosslinked waterborne polyurethane floor coating available from Bona Kemi USA Inc.

C6 is Ultracure Cure, a two part crosslinked waterborne polyurethane floor coating available from Bona Kemi USA Inc.

Table 3 illustrates several significant aspects in formulating wood finishes from the polyurethane dispersions of the present invention. The effect of level of isocyanate reactive silane on the durabilty of these coatings is demonstrated by the superior abrasion resistance of Examples 17 and 20, which contain greater than 3.5 grams of silane/ 100 grams prepolymer, when compared respectively to Examples 16 and 19 which have a lower isocyanate reactive silane content. Furthermore, Table 3 indicates the effect of polyol molecular weight on the durability (i.e., abrasion resistance), solvent resistance and impact resistance of the polyurethane coatings of the present invention. In general, polyurethane coatings containing higher molecular weight polyols, such as Examples 21 and 22, exhibit higher durability and flexibility than similar compositions comprising lower molecular weight polyol segments, such as the compositions of Examples 16-20 and 23. This enhanced toughness, however, comes at the expense of reduced solvent resistance.

Example 24

A marine wood coating was prepared based on the silyl-terminated urethane dispersions of the present invention as follows: A prepolymer was made in a 1 liter reaction flask equipped with a heating mantel, condenser, stirring blade, nitrogen inlet and thermometer equipped with a temperature controller to monitor temperature. 308.23 grams (2.3351 eq.) of 4,4'-dicyclohexylmethane diisocyanate (DES W), 360.72 grams (0.5787 eq.) of Tone™ 230 (a caprolactone-based polyol), 40.10 grams (0.5976 eq.) of 2,2-bis(hydroxymethyl) propionic acid (DMPA) and 125.10 grams of n-methyl pyrrolidone (NMP) were heated with stirring to 40-50°C. 0.081 gram of dibutyl tin dilaurate (T-12) was added and the mixture was heated to 80°C and allowed to react for 2 hours.

A premix was made with 325.00 grams of distilled water, 5.28 grams of triethylamine (TEA), 6.00 grams (0.1997 eq.) of ethylene diamine (EDA) and 6.00 grams (0.0335 eq.) of gamma-aminopropyltrimethoxysilane (A-1110).

170.15 grams (0.2363 eq.) of the prepolymer was added over 10 minutes to the premix solution in a Microfluidics Homogenizer Model #HC-5000 at an air line pressure of .621 MPa . The polyurethane dispersion was made into a coating by blending the proper wetting and light stabilizing agents and other additives as given below with the polyurethane dispersion in a low shear air mixer for 10 minutes. Addition of 0.01 and 0.05 g of a thickening agent to separate dispersions, followed by mixing for 10 minutes, resulted in wood coatings having viscosities of 375 and 6000 cps, respectively.

| | |
|---|---|
| Polyurethane Dispersion | 100.0 grams |
| Mackamine™ CO[1] | 2.0 grams |
| Tergitol™ TMN-3[2] | 1.0 gram |
| Tinuvin™ 292[3] | 1.0 gram |
| Tinuvin™ 1130[4] | 1.0 gram |
| Alcogum™ [5] | 0.01 gram |

[1] an alkyl amine oxide wetting agent available from McIntyre Group, Lid.
[2] a 2,6,8-trimethyl-4-nonyl oxypolyethylene oxyethanol wetting agent available from Union Carbide Co.
[3] a hindered amine photostabilizer commercially available from Ciba-Geigy Lid.
[4] a phenolic based antioxidant commercially available from Ciba-Geigy Lid.
[5] a sodium polyacrylate associative thickener available from Alco Chemical Corp.

This finish was then coated and cured on a teak wood panel as specified in the above test method and tested for weathering resistance. The results of these tests may be found in Table 4, along with weathering resistance test data for solventborne commercially available coating formulations and the unmodified silyl-terminated polyurethane dispersion composition of Example 1.

Table 4

| Example | 250 hours | 500 hours | 1000 hours | 2000 hours | 3000 hours |
|---|---|---|---|---|---|
| 24 | No change | No change | No change | No change | No change |
| 1 | No change | Loss of surface gloss | Coating yellowing and flaking | As at 1000 hours, flaking worse | 50% of coating gone |
| C-7[1] | No change | No change | Losing gloss, coating dull | No change to 1000 hours | As at 2000 hours, but worse |
| C-8[2] | No change | No change | Losing gloss, coating dull | No change to 1000 hours | Loss of gloss, yellowing |
| C-9[3] | No change | No change | Losing gloss, coating dull | No change to 1000 hours | Loss of gloss, yellowing |

[1] Epifanes™, manufactured by W. Heeren en Zoon, B.V., a solventborne one part alkyd resin marine varnish;
[2] Dolphinite™ 1600, manufactured by Kop-Coat Inc., a solventborne one part alkyd resin marine varnish;
[3] Interlux™ #95, manufactured by Cortaulds Coatings, Lid., a solventborne one part alkyd resin marine varnish.

Table 4 illustrates the superior weathering performance of the marine coatings of the present invention, particularly, when formulated with proper light stabilizing, wetting and thickening agents. The dispersion of Example 24 also demonstrates that weathering resistance of the silyl-terminated polyurethane dispersion meets or exceeds the

weatherability of traditional, less desirable solvent based coating compositions.

Silane Terminated Poly(urethane/urea) Dispersion "A"

A prepolymer was made in a 1 liter reaction flask equipped with a heating mantel, condenser, stirring blade, nitrogen inlet and thermometer equpped with a temperature controller. 308.23 grams (2.3351 eq.) of 4,4'-dicyclohexylmethane diisocyanate (DES W), 360.72 grams (0.5787 eq.) of Tone™ 230 (a caprolactone-based polyol), 40.10 grams (0.5976 eq.) of 2,2-bis(hydroxymethyl) propionic acid (DMPA) and 125.10 grams of n-methyl pyrrolidone (NMP) were heated with stirring to 40-50°C. 0.081 gram of dibutyl tin dilaurate (T-12) was added and the mixture was heated to 80°C and allowed to react for 2 hours.

A premix was made with 325.00 grams of distilled water, 5.28 grams of triethylamine (TEA), 6.00 grams (0.1997 eq.) of ethylene diamine (EDA) and 6.00 grams (0.0335 eq.) of gamma-aminopropyltrimethoxysilane (A-1110).

170.15 grams (0.2363 eq.) of the prepolymer was added over 10 minutes to the premix solution in a Microfluidics Homogenizer Model #HC-5000 at an air line pressure of .621 MPa. A stable dispersion was formed, pH and viscosity were recorded, and the dispersion was subjected to both room temperature (RT) and elevated temperature (71°C) stability testing. The dispersion was then cured for 1 week at 21°C (70°F) and 50% Relative Humidity. The U.B.C. was calculated to be 1.868.

Example 25

An anti-chip coating composition was prepared by blending the ingredients set forth in Table 5 in the order listed. The ingredients were mixed with a high shear rate mixer, a Series 2000, Model 90 Dispersator (available from Primer Mill Corp., Reading, PA) equipped with a four centimeter Hi-vis blade and a digital controller that maintained constant spindle rotation independent of the variable torque resulting from the constantly changing viscosity of the composition during formulation.

TABLE 5

| Ingredient | Amount in Grams |
|---|---|
| Dispersion "A" (30% solids) | 150 |
| ACRONAL™ 296D Acrylic Dispersion (50% solids) | 100 |
| Foamaster™ 111 Defoamer | 0.02 |
| Brij™ 35 Nonionic Surfactant | 1.4 |
| TRITON™ X-200 Anionic Surfactant | 0.5 |
| Triethylamine pH control agent | 1.0 |
| Carbon Black Emulsion Tinting Pigment | 0.04 |
| White #1™ Calcium Carbonate | 67 |
| Ti-Pure™ 960 Titanium Dioxide | 1.6 |
| Benaqua™ 4000 Thickening Agent | 2 |
| TOTAL | 323.56 |

ACRONAL™ 296D is available from BASF Corp., Charlotte, NC 28273.(50% solids)
Foamaster™ 111 is available from Henkel Corp., Harrison, NJ.
Brij™ 35 is available from ICI Chemical Industries, Wilmington. DE 19897.
TRITON™ X-200 is available from Union Carbide Corp., Danbury CT 06817.
White #1™ is available from English China Clay America Corp., Atlanta GA.
Ti-Pure™ 960 is available from DuPont, Wilmington, DE 19801-9989.
Benaqua™ 4000 is available from Rheox Corp., Heightstown, NJ 08520.

The silane terminated poly(urethane/urea) dispersion "A" and acrylic dispersion were mixed at a speed of 500 RPM for five (5) minutes. The defoamer, surfactant, pH control agent, and tinting pigment were sequentially added and mixed at a set speed of 500 RPM for five (5) minutes. The calcium carbonate, titanium dioxide, and thickener were sequentially added and mixed into the composition. The mixer set speed was increased to 2000 RPM and high speed mixing continued for twenty (20) minutes. The resulting chip-resistant coating composition had a Brookfield viscosity

of 2,000 centipoise as measured at 75°C with a Brookfield RVT viscometer using a number four spindle at a speed of 20 RPM.

The resulting room temperature curable chip-resistant coating composition was sprayed onto a primed, cold-rolled steel test panel (30 x 10 x 0.08 centimeters) available from Advanced Coatings Technologies Inc., Hillsdale, MI 42942 under the designation APR10161 using a Binks Model 7 spray gun equipped with a 565K nozzle, and supplied with 205 kilopascals air pressure. The wet film coating thickness was 100 micrometers. The coatings were allowed to cure for 24 hours at a temperature of 75°C and a relative humidity of 50%. The cured coatings were tested for chip resistance using a gravelometer in accordance with Society of Automotive Engineer's Technical Report J400 (SAE J400) (ASTM D3170-74) and were rated 4B.

Examples 26-31

Examples 26 to 31 demonstrate the effect of varying the weight ratio of (Dispersion A):(Acrylic Dispersion) on the chip resistance of the coatings. The amounts of Dispersion A, Acronal™ 296D acrylic dispersion, and chip resistance results are shown in Table 6. The coating compositions were prepared, sprayed, cured, and tested following the procedure described in Example 25 and the Chipping Test.

TABLE 6

| Ex. No. | Dispersion "A":Acrylic (approximate weight ratio) | Dispersion "A" (grams) | Acrylic Dispersion (grams) | Chipping Test |
|---|---|---|---|---|
| 26 | 100:0 | 75 | 0 | 7B |
| 27 | 85:15 | 67.5 | 12.5 | 6B |
| 28 | 70:30 | 60 | 25 | 5B |
| 29 | 60:40 | 52.5 | 37.5 | 5B |
| 30 | 45:55 | 45 | 50 | 4B |
| 31 | 40:60 | 37.5 | 62.5 | 4B |
| * based on percent solids | | | | |

The data in Table 6 demonstrate that as the silane terminated poly(urethane/urea) dispersion is replaced with acrylic polymer dispersion the chip resistance of the resultant coating decreases.

Examples 32-38

These examples show the effect of increasing the amount of thickening agent on the viscosity and sprayability of the anti-chip coating composition. The compositions were prepared following the procedure of Example 25, except for the variance in the amount of thickening agent used. The amount of Benaqua™ 4000 thickening agent used in each composition is shown in Table 7.

TABLE 7

| Ex. No. | Thickening Agent | | Viscosity (centipoise) | Sprayability |
|---|---|---|---|---|
| | %WT. | (grams) | | |
| 32 | 0 | 0 | 40 | Poor |
| 33 | 0.25 | 0.8 | 500 | Marginal |
| 34 | 0.50 | 1.6 | 1.500 | Excellent |
| 35 | 0.62 | 2.0 | 1.650 | Excellent |
| 36 | 0.75 | 2.4 | 3.000 | Excellent |
| 37 | 1.0 | 3.2 | 9,600 | None |
| 38 | 1.5 | 4.8 | 13,000 | None |

The data in Table 7 demonstrate that there is an optimum thickening agent concentration (and corresponding

solution viscosity) that provides excellent sprayability.

**Product and Method Examples for Composition Vinyl Coatings**

**Example 39: Two-step Batch Method of Preparation of a Dispersion of a Silane-Terminated Polyurethane Including a Hindered Amine**

The ingredients listed in Table 8 were charged to a 3 liter resin kettle in the following manner: first was charged DES W, after which the kettle vapor space was evacuated and then flushed with nitrogen. NMP was then added with moderate agitation and the mixture heated to 60°C. After the temperature rose to 60°C, TONE 230, CHDM, NBDEA, and DMPA were added, and the temperature held at 80°C for 2 hours.

TABLE 8

| | WT. (g) | EQ WT | EQ |
|---|---|---|---|
| TONE 230 | 187.5 | 623.3 | 0.3 |
| CHDM | 21.5 | 71.7 | 0.3 |
| NBDEA | 24 | 80 | 0.3 |
| DMPA | 27 | 67.5 | 0.4 |
| DES W | 183.5 | 131 | 1.4 |
| NMP | 110 | --- | --- |

From Table 8 it can be seen that NCO EQ/OH EQ = 1.077.

Afterwards and with continued stirring, 20 grams of TEA was added and the reaction continued for another 30 minutes with sufficient cooling to keep the reaction below about 80°C, after which 13.4 grams (0.074 EQ) of A-1110 was slowly added, again being careful to avoid temperature increases beyond 80°C. Immediately following the addition of the silane was the addition of 1600 grams deionized, room temperature water with stirring, which emulsified the composition. The emulsion of partially crosslinked, ungelled, silane-terminated polyurethanes was stable at room temperature, and the polymers had sterically hindered amine monomer randomly distributed in their backbones.

**Example 40: Quasi-continuous Method of Preparation of a Dispersion of a Silane-Terminated Polyurethane Including a Hindered Amine**

Into a first 3 liter resin kettle was charged, in the order substantially as described in Example 39, the ingredients listed in Table 9 with reaction proceeding for 2 hours at 80°C with agitation and under a nitrogen blanket.

TABLE 9

| | WT (g) | EQ WT | EQ |
|---|---|---|---|
| TONE 230 | 487.5 | 623.3 | 0.78 |
| DES W | 582.4 | 131 | 4.45 |
| NBDEA | 83.2 | 80.5 | 1.03 |
| DMPA | 52 | 67.1 | 0.78 |
| TEA | 39 | --- | --- |
| T-12 | 0.1 | --- | --- |
| NMP | 300 | --- | --- |

Thus the NCO EQ/OH EQ = 1.72, and the EQ WT of the prepolymer formed was determined to be 832.4. As the prepolymer weighed 1544 grams, the prepolymer EQ = 1.86.

Meanwhile, in a second 3 liter resin kettle was mixed 3585 grams deionized, room temperature water, 40 grams (0.223 EQ) A-1110, and 46 grams (1.53 EQ) ED with mild agitation at 35°C.

After the reaction in the first resin kettle had proceeded for two hours, the contents of the two kettles were simultaneously fed by positive nitrogen pressure to a high-shear homogenizer known under the trade designation "Homomixer" (Gifford), forming an emulsified product stream which was recycled back to resin kettle two via a pump. The flow rates from each of the first and second resin kettles were about 2.04 kilograms/min. The excess NCO EQ of the recycle stream was 1.86 - (1.53 + 0.223) = 0.10. This procedure was continued until the contents of the first resin kettle had been consumed completely, thereby forming a partially crosslinked, ungelled, emulsified version of a polydisperse mixture of silane-terminated polyurethanes having sterically hindered amine randomly distributed along their backbones.

**Example 41: Non-Silane-Terminated Polyurethanes Containing Pendant Hindered Amines**

Although in most surface coatings it is preferable to utilize an emulsion of cross-linked silane-terminated polyurethanes, it is possible to utilize non-silane-terinated versions for coating applications such as wall coatings which are not subject to repeated abrasion.

Example 40 was repeated with the only change being that A-1110 silane coupling agent was not employed in the second resin kettle and 52.7 g (1.75 EQ) of ethylenediamine (rather than 46 g (1.53 EQ)) was used. The excess NCO EQ in the recycle stream was thus 1.86 - (1.75) = 0.11. When the contents of the second resin kettle had been exhausted, the process was stopped, yielding a polydisperse emulsion of polyurethanes having sterically hindered amines randomly distributed along their backbones.

**Example 42 and Comparative Examples C-10, C-11, and C-12**

To emphasize that the sterically hindered amine monomer must have $Z^1$ having 4 or greater carbon atoms to produce coatings of sufficient removability, Example 39 was repeated four times, the only differences being the substitution of the following amines for NBDEA:

| | |
|---|---|
| Example 28 | phenyldiethanolamine |
| Comp. Ex. C-10 | methyldiethanolamine |
| Comp. Ex. C-11 | ethyldiethanolamine |
| Comp. Ex. C-12 | propyldiethanolamine |

**Comparative Examples C-13 and C-14**

The polyurethane dispersion of Comparative Example C-13 was the same as that prepared in Example 1A of U.S. Pat. No. 3,983,291, the only changes being that TONE 230 was substituted for TONE 0200, and no hardening polyol (known under the trade designation "Carbowax 1450", Union Carbide Corporation), and no 1,4-butanediol were used.

The polyurethane dispersion of Comparative Example C-14 was the same as that prepared in Example 1 of U.S. Pat. No. 4,567,228, the only changes being that TONE 230 was substituted for the polyoxypropylene diol and polyoxypropylene triol used, and NMP was substituted for MEK as solvent.

**Performance Testing (Removability and Gloss of Coatings on Composition Vinyl)**

Polyurethane compositions of the present invention made in accordance with Examples 39-42 and Comparative Examples C-10, C-11, and C-12 were compared with polyurethanes made in accordance with U.S. Pat. Nos. 3,983,291 (Comparative Example C-13) and 4,567,228 (Comparative Example C-14) in terms of gloss and removability.

Table 10 details the gloss and removability results using the tests described in Test Methods. The acidic stripper used consisted of 5 grams BCAR, 7 grams BCEL, 1.7 gram hydroxyacetic acid, and 86.3 grams deionized water, and had a pH of 3.2.

TABLE 10

| Example | Test Method | | |
|---|---|---|---|
| | I (60° Gloss) | | II (Removability)[1] cycles |
| | initial | final | |
| 39 | 60 | 7 | 50 |
| 42 | 66 | 8 | 50 |

[1] Measured in accordance with ASTM 1792-82. except for Example 42 and Comparative Examples C-10, C-11, and C-12. Example 42 coating was not easily wiped off by hand with a rag but was easily removed by the acidic stripper with simple hand wiping with a stripper-soaked rag. Comparative Example coatings C-10, C-11, and C-12 were easily wiped off of the vinyl test tiles with a deionized water-soaked rag. " < " means "less than", "> >" means "much greater than."

TABLE 10 (continued)

| Example | Test Method | | |
|---|---|---|---|
| | I (60° Gloss) | | II (Removability)[1] cycles |
| | initial | final | |
| C-10 | 58 | 5 | < 50 |
| C-11 | 59 | 5 | < 50 |
| C-12 | 61 | 5 | < 50 |
| C-13[2] | 56 | 48 | > > 150 |
| C-14[3] | 59 | 51 | > > 150 |

[1] Measured in accordance with ASTM 1792-82. except for Example 42 and Comparative Examples C-10, C-11, and C-12. Example 42 coating was not easily wiped off by hand with a rag but was easily removed by the acidic stripper with simple hand wiping with a stripper-soaked rag. Comparative Example coatings C-10, C-11, and C-12 were easily wiped off of the vinyl test tiles with a deionized water-soaked rag. " < " means "less than", "> >" means "much greater than."

[2] Modified version of Example 1 of U.S.Pat. No. 3,983,291.

[3] Modified version of Example 1A of U.S.Pat. No. 4,567,228.

**Analysis of Test Results**

It should initially be pointed out that non-coated, "worn" composition vinyl tiles have a 60° gloss of about 5. From Example 39-42 it is apparent that the polyurethanes of the present invention are removable by mild acidic aqueous compositions. Polyurethanes not including a sterically hindered amine having 4 or more carbon atoms (Comparative Examples C-10, C-11, and C-12) were easily removed by water and are thus clearly not suitable for use as surface coatings where exposure to water is expected, such as floors, exterior walls, home decks, and the like. On the other hand, the polyurethanes of U.S. Pat. Nos. 3,983,291 (Comparative Example C-13) and 4,567,228 (Comparative Example C-14) were not removed at all by the acidic stripper and test method employed.

## Claims

**1.** A method of making a silyl-terminated polyurethane in an aqueous dispersion characterized by the steps of:

(a) reacting a mixture comprising:

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen; and
(iii) a polyisocyanate component comprising a compound having 2 isocyanate groups and optionally further comprising a compound having greater than 2 isocyanate groups; wherein sufficient polyisocyanate component is included to provide an excess on an isocyanate equivalent basis of 1.4 to 4 times the combined active hydrogen equivalent of the isocyanate reactive functional groups of the polyol component and the water-solubilizing compound;
(iv) optional polar organic coalescing solvent; and
(v) optional catalyst

at a sufficient temperature in order to facilitate reaction of the mixture to form an isocyanate-terminated polyurethane prepolymer; wherein the ratio of the isocyanate groups of the polyisocyanate component to the water solubilizing groups of the water solubilizing compound is such that the prepolymer can provide a stable dispersion upon combination with a water phase;
(b) preparing a stable silyl-terminated polyurethane dispersion by combining under sufficient agitation and at a sufficient temperature and pH the isocyanate terminated polyurethane prepolymer prepared according to the step of element (a) with a water phase comprising:

(i) deionized water;

(ii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iii) an isocyanate reactive silane compound having at least one active hydrogen; and
(iv) a salt forming compound selected from the group consisting of basic salt forming compounds and acidic salt forming compounds, wherein the salt forming compound is selected such that the salt forming compound is reactive with the water solubilizing group in the water solubilizing compound; wherein some or all of the salt forming compound is alternatively added to the mixture of step (a) prior to or during reaction, or to the isocyanate terminated polyurethane prepolymer prior to the combination of the isocyanate terminated polyurethane prepolymer with the water phase;

wherein a sufficient amount of the chain extender component and the isocyanate reactive silane is present relative to excess polyisocyanate component such that the active hydrogen to isocyanate group ratio is 0.85:1 to 1:1; and wherein the optional polar organic coalescing solvent of step (a) (iv) can optionally be added to the water phase prior to the formation of the dispersion.

**2.** A method of making a hydrolyzable, silyl-terminated polyurethane in an aqueous dispersion characterized by the steps of:

(a) reacting a mixture comprising :

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iv) a polyisocyanate component comprising a compound having 2 isocyanate groups and optionally further comprising a compound having greater than 2 isocyanate groups; wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component;
(v) optional polar organic coalescing solvent; and
(vi) optional catalyst

at a sufficient temperature in order to facilitate reaction of the mixture to form a chain extended isocyanate-terminated polyurethane prepolymer; the ratio of the isocyanate groups of the polyisocyanate component to the water solubilizing groups of the water solubilizing compound being such that the prepolymer can provide a stable dispersion upon combination with a water phase;
(b) preparing a stable silyl-terminated polyurethane dispersion by combining under sufficient agitation and at a sufficient temperature and pH the chain extended isocyanate terminated polyurethane prepolymer of step (a) with a water phase comprising:

(i) deionized water;
(ii) an isocyanate reactive silane compound having at least one active hydrogen; and
(iii) a salt forming compound selected from the group consisting of basic salt forming compounds and acidic salt forming compounds, wherein the salt forming compound is selected such that the salt forming compound is reactive with the water solubilizing group in the water solubilizing compound; wherein some or all of the salt forming compound is alternatively added to the mixture of step (a) prior to or during reaction, or to the isocyanate terminated polyurethane prepolymer prior to the combination of the isocyanate terminated polyurethane prepolymer with the water phase;

a sufficient amount of the isocyanate reactive silane being present relative to excess polyisocyanate component such that the active hydrogen to isocyanate group ratio is 0.85:1 to 1:1; and the optional polar organic coalescing solvent of step (a)(v) optionally being added to the water phase prior to the formation of

the dispersion.

**3.** A method of making a hydrolyzable, silyl-terminated polyurethane in an aqueous dispersion comprising the steps of:

(a) reacting a mixture comprising :

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen; and
(iv) a polyisocyanate component comprising a compound having 2 isocyanate groups and optionally further comprising a polyisocyanate having at least 3 isocyanate groups;
(v) optional polar organic coalescing solvent; and
(vi) optional catalyst;

at a sufficient temperature in order to facilitate reaction of the mixture to form a chain extended isocyanate-terminated polyurethane prepolymer; wherein the ratio of the isocyanate groups of the polyisocyanate component to the water solubilizing groups of the water solubilizing compound is such that the prepolymer can provide a stable dispersion upon combination with a water phase;
(b) when the reaction of the mixture of elements (a) is 80 to 90 % complete, adding to the mixture (a) a polyisocyanate adduct having greater than 2 isocyanate groups to form a branched chain extended isocyanate terminated polyurethane prepolymer; wherein sufficient polyisocyanate component and polyisocyanate adduct is included to provide an excess on an isocyanate equivalent basis of 1.4 to 4 times the combined active hydrogen equivalent of the isocyanate reactive functional groups of the polyol component, the water-solubilizing compound, and the chain extender component;
(c) preparing a stable silyl-terminated polyurethane dispersion by combining under sufficient agitation and at a sufficient temperature and pH the branched chain-extended isocyanate-terminated polyurethane prepolymer of step (b) with a water phase comprising:

(i) deionized water;
(ii) an isocyanate reactive silane compound having at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen; and
(iv) a salt forming compound selected from the group consisting of basic salt forming compounds and acidic salt forming compounds, wherein the salt forming compound is selected such that the salt forming compound is reactive with the water solubilizing group in the water solubilizing compound wherein some or all of the salt forming compound is alternatively added to the mixture of step (a) or the mixture of step (b) prior to combination of the branched chain-extended isocyanate-terminated polyurethane prepolymer with the water phase;

a sufficient amount of the isocyanate reactive silane being present relative to excess polyisocyanate such that the active hydrogen to isocyanate group ratio is 0.85:1 to 1:1; wherein (a)(v) can optionally be added to the water phase prior the formation of the dispersion.

**4.** A method of making a hydrolyzable, silyl-terminated polyurethane in an aqueous dispersion characterized by the steps of:

(a) reacting a mixture comprising :

(i) a polyol component comprising a compound having 2 isocyanate reactive functional groups and optionally a compound having greater than 2 isocyanate reactive functional groups, each isocyanate reactive functional group having at least one active hydrogen;

(ii) a water-solubilizing compound, wherein the water solubilizing compound possesses at least one water solubilizing group and at least one isocyanate reactive functional group, each isocyanate reactive functional group containing at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iv) a polyisocyanate component comprising a compound having 2 isocyanate groups and optionally further comprising a compound having greater than 2 isocyanate groups wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component;
(v) optional polar organic coalescing solvent; and
(vi) optional catalyst;

at a sufficient temperature in order to facilitate reaction of the mixture to form a chain-extended isocyanate-terminated polyurethane prepolymer,
(b) reacting at least a stoichiometrically equivalent amount of an isocyanate blocking agent with the reaction product of (a) comprising chain extended isocyanate-terminated polyurethane prepolymer to form a blocked chain extended isocyanate-terminated polyurethane prepolymer; wherein the ratio of the isocyanate groups of the polyisocyanate component to the water solubilizing groups of the water solubilizing compound is such that the prepolymer can provide a stable dispersion upon combination with a water phase;
(c) preparing a stable silyl-terminated polyurethane dispersion by displacing the isocyanate blocking agent on the blocked chain extended isocyanate-terminated polyurethane prepolymer of (b) by reacting under sufficient agitation and at a sufficient temperature and pH the blocked chain extended isocyanate terminated polyurethane prepolymer of (b) with a water phase comprising:

(i) deionized water;
(ii) an isocyanate reactive silane compound having at least one active hydrogen; and
(iii) a salt forming compound selected from the group consisting of basic salt forming compounds and acidic salt forming compounds, wherein the salt forming compound is selected such that the salt forming compound is reactive with the water solubilizing group in the water solubilizing compound which is reacted into the the chain extended polyurethane prepolymer of step (a), wherein some or all of the salt forming compound is alternatively added to the mixture of step (a) or the mixture of step (b) prior to combination of the blocked chain extended isocyanate terminated polyurethane prepolymer with the water phase;

a sufficient amount of the isocyanate reactive silane being present relative to excess polyisocyanate component such that the active hydrogen to isocyanate group ratio is 0.85:1 to 1:1; and the optional polar organic coalescing solvent of element (a)(v) optionally being added to the water phase prior the formation of the dispersion.

**5.** A method of making a hydrolyzable, silyl-terminated polyurethane in an aqueous dispersion characterized by the steps of:

(a) reacting a mixture comprising:

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen; and
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iv) a polyisocyanate component comprising a compound having 2 isocyanate groups and optionally further comprising a compound having greater than 2 isocyanate groups wherein sufficient polyisocyanate component is included to provide an excess on an isocyanate equivalent basis of 1.4 to 4 times the combined active hydrogen equivalent of the isocyanate reactive functional groups of the polyol component,

the water solubilizing compound, and the chain extender component;
(v) optional polar organic coalescing solvent; and
(vi) optional catalyst;

at a sufficient temperature in order to facilitate reaction of the mixture to form a chain-extended isocyanate-terminated polyurethane prepolymer, wherein the ratio of the isocyanate groups of the polyisocyanate component to the water solubilizing groups of the water solubilizing compound is such that the prepolymer can provide a stable dispersion upon combination with a water phase;
(b) reacting the chain extended isocyanate-terminated polyurethane prepolymer of (a) with an isocyanate-reactive silane compound having at least one active hydrogen to produce a silyl-terminated chain-extended polyurethane prepolymer;
a sufficient amount of the isocyanate reactive silane compound being present relative to excess polyisocyanate component such that the active hydrogen to isocyanate group ratio is 0.85:1 to 1:1;
(c) preparing a stable silyl-terminated polyurethane dispersion by combining under sufficient agitation and at a sufficient temperature and pH the silyl-terminated chain extended isocyanate terminated polyurethane prepolymer of (b) with a water phase comprising:

(i) deionized water;
(ii) a salt forming compound selected from the group consisting of basic salt forming compounds and acidic salt forming compounds, wherein the salt forming compound is selected such that the salt forming compound is reactive with the water solubilizing group in the water solubilizing compound which is reacted into the chain-extended isocyanate terminated polyurethane prepolymer; some or all of the salt forming compound being alternatively added to the mixture of step (a) or the mixture of step (b) prior to combination of the silyl-terminated chain-extended polyurethane prepolymer with the water phase; the optional polar organic coalescing solvent of step (a)(v) optionally being added to the water phase prior the formation of the dispersion.

**6.** A method of making a hydrolyzable, silyl-terminated polyurethane in an aqueous dispersion characterized by the steps of:

(a) reacting a mixture comprising:

(i) a polyol component comprising a compound having 2 isocyanate reactive functional groups and optionally a compound having greater than 2 isocyanate reactive functional groups, each isocyanate reactive functional group having at least one active hydrogen;
(ii) a water-solubilizing compound, wherein the water solubilizing compound possesses at least one water solubilizing group and at least one isocyanate reactive functional group, each isocyanate reactive functional group containing at least one active hydrogen;
(iii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iv) a polyisocyanate component comprising a compound having 2 isocyanate groups and optionally further comprising a compound having greater than 2 isocyanate groups wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component;
(v) optional polar organic coalescing solvent; and
(vi) optional catalyst

at a sufficient temperature in order to facilitate reaction of the mixture to form a chain-extended isocyanate terminated polyurethane prepolymer, the ratio of the isocyanate groups of the polyisocyanate component to the water solubilizing groups of the water solubilizing compound being such that the prepolymer can provide a stable dispersion upon combination with a water phase;
(b) preparing a stable silyl-terminated polyurethane dispersion by combining under sufficient agitation and at a sufficient temperature and pH the chain extended isocyanate terminated polyurethane prepolymer of (a) with a water phase comprising:

(i) deionized water;

(ii) a chain extender component comprising a difunctional chain extender having 2 isocyanate reactive functional groups and optionally a polyfunctional chain extender having at least 3 isocyanate reactive functional groups, each isocyanate reactive functional group having at least one active hydrogen;
(iii) an isocyanate reactive silane compound having at least one active hydrogen; and
(iv) a salt forming compound selected from the group consisting of basic salt forming compounds and acidic salt forming compounds, the salt forming compound being selected such that the salt forming compound is reactive with the water solubilizing group in the water solubilizing compound wherein some or all of the salt forming compound is alternatively added to the mixture of step (a) prior to combination of the chain extended isocyanate terminated polyurethane prepolymer with the water phase;

a sufficient amount of the chain extender component and the isocyanate reactive silane compound being present relative to excess polyisocyanate component such that the active hydrogen to isocyanate group ratio is 0.85:1 to 1:1; wherein (a)(v) can optionally be added to the water phase prior to the formation of the dispersion.

**7.** Method in accordance with any of claims 1-6 wherein said difunctional chain extender is a divalent sterically hindered amine having the general formula

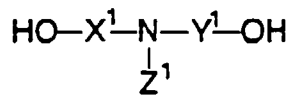

wherein $X^1$, $Y^1$, and $Z^1$ are independently selected from the group consisting of cyclic and aliphatic organic radicals free of reactive functional groups, and with the proviso that at least %75 of the $Z^1$ groups have at least 4 carbon atoms;

**8.** An aequeous dispersion of an anionically stabilized polymer composition characterized by including a polymer of formula (I)

$$[SIL\text{-}X]\text{-}ISO\text{-}Y\text{-}[POL\text{-}X\text{-}ISO\text{-}Y]_n \sim [CE\text{-}X\text{-}ISO\text{-}Y]_m \sim [WSC\text{-}X\text{-}ISO\text{-}Y]_q\text{-}[SIL] \quad (I)$$

wherein [POL-X-ISO-Y], [CE-X-ISO-Y], and [WSC-X-ISO-Y] can be randomly distributed or form blocks;
wherein
SIL represents

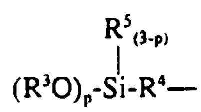
;

$R^3$ is selected from the group consisting of hydrogen; alkyl radicals comprising 1 to 4 carbon atoms; acyl groups comprising about 2 to about 5 carbon atoms; and oxime groups of the formula $-N=CR^5R^6$, wherein $R^5$ is a monovalent alkyl group comprising 1 to 12 carbon atoms and wherein $R^6$ is a monovalent alkyl group comprising 1 to 12 carbon atoms;
$R^4$ is a divalent radical comprising 2 to 20 carbon atoms, wherein said radical contains no isocyanate reactive functional groups;
p represents an integer of 1 to 3;
X is a divalent radical selected from the group consisting of

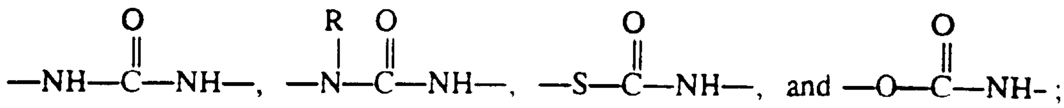

wherein R is independently selected from the group consisting of phenyl, linear aliphatic groups comprising 1 to 12 carbon atoms, branched aliphatic groups comprising 1 to 12 carbon atoms, and cycloaliphatic groups; ISO represents a moiety derived from a polyisocyanate component comprising a compound having 2 isocyanate groups and optionally further comprising a compound having greater than 2 isocyanate groups; Y is a divalent radical selected from the group consisting of

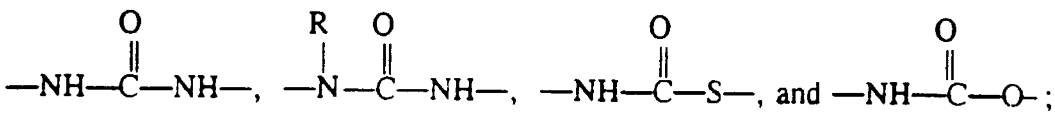

wherein R is as defined above;
POL represents a moiety derived from a polyol component comprising a compound having 2 isocyanate reactive functional groups and optionally a compound having greater than 2 isocyanate reactive functional groups, each isocyanate reactive functional group having at least one active hydrogen;
n represents an integer of 2 to 85;
CE represents a moiety derived from a chain extender component comprising a difunctional chain extender having 2 isocyanate reactive functional groups and optionally a polyfunctional chain extender having at least 3 isocyanate reactive functional groups each isocyanate reactive functional group having at least one active hydrogen;
m represents an integer of 1 to 84;
WSC represents a moiety derived from a water-solubilizing compound, wherein the water solubilizing compound possesses at least one water solubilizing group and at least two isocyanate reactive functional groups, each isocyanate reactive functional group containing at least one active hydrogen wherein the water solubilizing group is reacted with a basic salt forming compound to anionically stabilize the polymer;
q represents an integer of 2 to 85;
the urethane branching coefficient of the polymer being 1.7 to 2.25; and sufficient polyisocyanate component being included to provide an excess on an isocyanate equivalent basis of 1.4 to 4 times the combined active hydrogen equivalent of the isocyanate reactive functional groups of the polyol component, the water solubilizing compound, and the chain extender component.

**9.** Composition in accordance with claim 8 wherein said difunctional chain extender is a divalent sterically hindered amine having the general formula

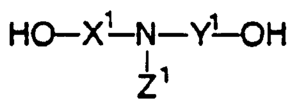

wherein $X^1$, $Y^1$, and $Z^1$ are independently selected from the group consisting of cyclic and aliphatic organic radicals free of reactive functional groups, and with the proviso that at least %75 of the $Z^1$ groups have at least 4 carbon atoms;

**10.** The composition of claim 8 further characterized by n representing an integer of 3 to 65; m representing an integer of 2 to 64, and q representingan integer of 3 to 65.

**11.** The composition of claim 8 further characterized by n representing an integer of 4 to 15; m representing an integer of 2 to 64; and q representing an integer of 4 to 15.

**12.** The composition of claim 8 further characterized by $R^3$ being selected from the group consisting of ethyl and methyl; and p is 3; and $R^4$ comprises 2 to 4 carbon atoms.

**13.** The composition of claim 8 further characterized by said polyol being selected from the group consisting of poly (oxypropylene) glycols, ethylene oxide capped poly(oxypropylene) glycols, poly(oxytetramethylene) glycols, α-omega-diamino poly(oxypropylene), aromatic amine-terminated poly(oxypropylene) glycols, graft-polyether polyols, poly(oxyethylene) polyols, polyglycol adipates, polyethylene terephthalate polyols, polycaprolactone polyols, polybutadiene polyols, hydrogenated polybutadiene polyols, α-omegadiamino poly(oxytetramethylene), polythioether polyols, polybutylene oxide polyols, polyoxytetramethylene/ethylene oxide random copolymer polyols, fluorinated polyether polyols, acrylic polyols, polycarbonate polyols, and mixtures thereof.

**14.** The composition of claim 8 further characterized by said polyol component having a number average molecular weight of 250 to 35,000.

**15.** The composition of claim 8 further characterized by said polyol component having a number average molecular weight of 500 to 3000.

**16.** The composition of claim 8 further characterized by said water solubilizing compound being selected from the group consisting of

$$(HOCH_2)_2C(CH_3)COOH;$$

$$H_2N{-}C_2H_4{-}NH{-}C_2H_4{-}SO_3H;$$

$$H_2N\text{-}C_3H_6\text{-}N(CH_3)\text{-}C_3H_6\text{-}SO_3H;$$

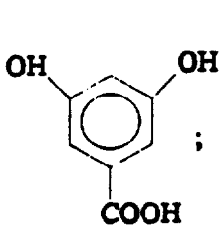 ; 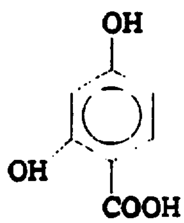 ; 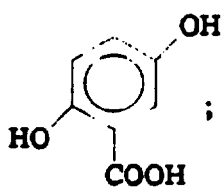 ; 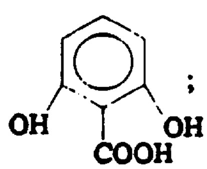 ;

$$HOCH_2\text{-}CH(OH)\text{-}CO_2Na;$$

$$[(HOCH_2)_2CHCH_2\text{-}COO]^-[NH(CH_3)_3]^+;$$

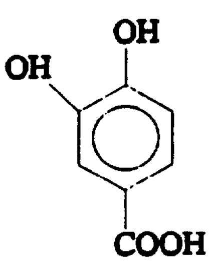 ; 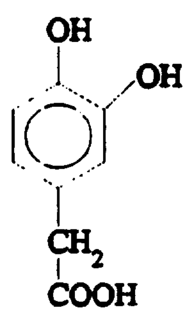 ; 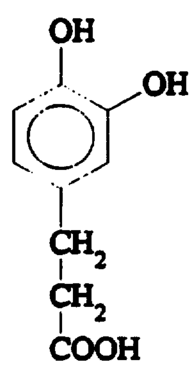 ;

$$CH_3(CH_2)_2CH(OH)\text{-}CH(OH)(CH_2)_3CO_2K;$$

$(HOC_2H_4)_2N—C_3H_6—OSO_3Na;$

$(HOCH_2CH_2)_2NC_6H_4O(CH_2CH_2O)SO_2OH;$

and mixtures thereof.

**17.** The composition of claim 8 further characterized by said basic salt forming compound being selected from the group consisting of ammonia, trimethylamine, triethylamine, tripropylamine, triisopropylamine, tributylamine, triethanolamine, diethanolamine; and mixtures thereof.

**18.** The composition of claim 8 further characterized by said difunctional chain extender being selected from the group consisting of 1,4-butanediol, ethylene glycol, diethylene glycol, dipropylene glycol, neopentyl glycol, 1,6-hexanediol, 1,4-cyclohexane dimethanol, bis(2-hydroxylethyl) hydroquinone, 4,4'-methylene bis(o-chloroaniline), 2,5-diethyl-2,4-toluene diamine, 4,4'-methylene bis(3-chloro-2,6-diethylaniline), propylene glycol bis(4,4'-aminobenzoate), 3,5-di(thiomethyl)-2,4-toluene diamine, methylene bis(4,4'-aniline), ethyl-1,2-di(2-amino thiophenol), 4-chloro-3,5-diamino isobutylbenzoate, 1,2-diaminoethane, N,N'-dialkyl(methylene dianiline), N,N'-dialkyl(1,4-diaminobenzene), and mixtures thereof.

**19.** The composition of claim 8 further characterized by the isocyanate reactive silane being selected from the group consisting of

$H_2NCH_2CH_2CH_2Si(OC_2H_5)_3$ ;

$H_2NCH_2CH_2CH_2Si(OCH_3)_3$ ;

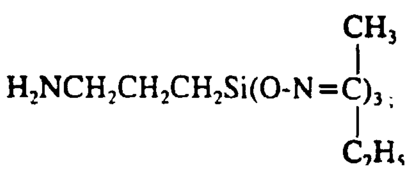

$HSCH_2CH_2CH_2Si(OCH_3)_3$ ;

$HO(C_2H_4O)_3C_2H_4N(CH_3)(CH_2)_3Si(OC_4H_9)_3$ ;

$H_2NCH_2C_6H_4CH_2CH_2Si(OCH_3)_3$ ;

$HSCH_2CH_2CH_2Si(OCOCH_3)_3$ ;

$HN(CH_3)CH_2CH_2Si(OCH_3)_3$ ;

$HSCH_2CH_2CH_2SiCH_3(OCH_3)_2$;

$(H_3CO)_3SiCH_2CH_2CH_2NHCH_2CH_2CH_2Si(OCH_3)_3$;

and mixtures thereof.

**20.** The composition of claim 8 further characterized by the urethane branching coefficient representing a numeral of 1.85 to 2.01.

**21.** The composition of claim 9 further characterized by the divalent sterically hindered amine being selected from the group consisting of n-butyldiethanolamine, and phenyldiethanol amine.

**22.** A film comprising the cured composition of claim 8.

**23.** An elastomer comprising the cured composition of claim 8.

**24.** A substrate coated with the cured composition of claim 9.

**25.** The coated substrate of claim 24 further characterized by the substrate being selected from the group consisting of leather, woven webs, nonwoven webs, glass, glass fibers, wood, metals, plastics, composition vinyl and composite materials.

**26.** The coated substrate of claim 24 further characterized by the substrate being an oil wood.

**27.** The coated substrate of claim 26 further characterized by the substrate being teakwood.

**28.** The coated substrate of claim 26 further characterized by the composition further including a photostabilizer.

**29.** The coated substrate of claim 27 further characterized by the composition further including a photostabilizer.

**30.** The cured composition of claim 8.

**31.** A composition characterized by:

(a) 85 to 99.9 percent by weight of the dispersion of Claim 8;
(b) 0.1 to 10 percent by weight of a photostabilizer;
(c) 0 to 10 percent by weight of a surfactant; and
(d) 0 to 10 percent by weight of a thickening agent;

the weight percentages being based upon the total weight of the coating composition and total 100%.

**32.** The cured composition of claim 31.

**33.** A coated substrate characterized by wood coated with the cured composition of claim 31.

**34.** A composition characterized by:

(a) 94 to 99 percent by weight of the dispersion of claim 9; and
(b) 1 to 6 percent by weight of a plasticizer, based on total weight of composition.

**35.** The cured composition of claim 34.

**36.** A coated substrate characterized by composition vinyl coated with the cured composition of claim 35.

**37.** A chip-resistant coating composition characterized by a dispersion comprising:

(a) 0.5 to 99.9 weight percent of a dispersion comprising:

an anionically stabilized aqueous polymer dispersion comprising polymer of the formula (I)

$$[SIL\text{-}X]\text{-}ISO\text{-}Y\text{-}[POL\text{-}X\text{-}ISO\text{-}Y]_n \sim [CE\text{-}X\text{-}ISO\text{-}Y]_m \sim [WSC\text{-}X\text{-}ISO\text{-}Y]_q\text{-}[SIL] \qquad (I)$$

wherein [POL-X-ISO-Y], [CE-X-ISO-Y] and [WSC-X-ISO-Y] can be randomly distributed or form blocks; wherein
SIL represents

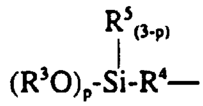 ;

$R^3$ is selected from the group consisting of hydrogen, alkyl radicals comprising 1 to 4 carbon atoms; acyl groups comprising 2 to 5 carbon atoms; and oxime groups of the formula -N $=CR^5R^6$, wherein $R^5$ is a monovalent alkyl group comprising 1 to 12 carbon atoms and wherein $R^6$ is a monovalent alkyl group comprising 1 to 12 carbon atoms;
$R^4$ is a divalent radical comprising 2 to 20 carbon atoms, wherein said radical contains no isocyanate reactive functional groups;
p represents an integer of 1 to 3;
X is a divalent radical selected from the group consisting of

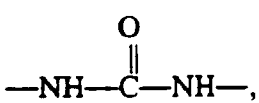, 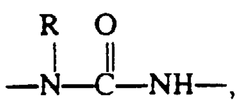, 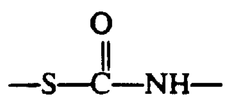, 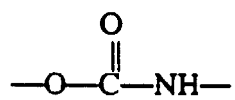 ,

wherein R is independently selected from the group consisting of phenyl, linear aliphatic groups comprising 1 to 12 carbon atoms, branched aliphatic groups comprising 1 to 12 carbon atoms, and cycloaliphatic groups;
ISO represents a moiety derived from a polyisocyanate component comprising a compound having 2 isocyanate groups and optionally further comprising a compound having greater than 2 isocyanate groups;
Y is a divalent radical selected from the group consisting of

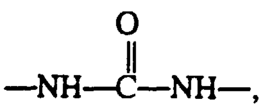, 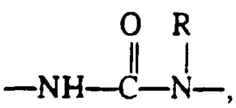, 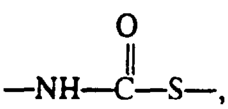, and 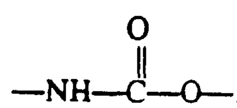,

wherein R is as defined above;
POL represents a moiety derived from a polyol component comprising a compound having 2 isocyanate reactive functional groups and optionally a compound having greater than 2 isocyanate reactive functional groups, each isocyanate reactive functional group having at least one active hydrogen;
n represents an integer of 2 to 85;
CE represents a moiety derived from a chain extender component comprising a difunctional chain extender having 2 isocyanate reactive functional groups and optionally a polyfunctional chain extender having at least 3 isocyanate reactive functional groups each isocyanate reactive functional group having at least one active hydrogen;
m represents an integer of 1 to 84;
WSC represents a moiety derived from a water-solubilizing compound, wherein the water solubilizing compound possesses at least one water solubilizing group and at least two isocyanate reactive functional group, each isocyanate reactive functional group containing at least one active hydrogen wherein the water solubilizing group is reacted with a basic salt forming compound to anionically stabilize the polymer;
q represents an integer of 2 to 85;
wherein the urethane branching coefficient of the polymer is 1.7 to 2.25; and wherein sufficient polyisocyanate component is included to provide an excess on an isocyanate equivalent basis of 1.4 to 4 times the combined active hydrogen equivalent of the isocyanate reactive functional groups of the polyol component, the water solubilizing compound, and the chain extender component;

(b) 0.1 to 15 weight percent a thickening agent;
(c) 0 to 70 weight percent of a pigment;

(d) 0 to 10 weight percent of a surfactant;
(e) 0 to 80 weight percent of an aqueous thermoplastic polymer dispersion; and
(f) 0 to 15 weight percent of an additive(s);

wherein the weight percentages are based upon 100% solids and the total of the weight percentages (a) plus (b) plus (c) plus (d) plus (e) plus (f) equals 100%, and sufficient amount of water, if necessary, such that the composition has a weight percent solids of 5 to 60%.

**38.** The composition of claim 37, wherein said aqueous thermoplastic dispersion is selected from the group consisting of vinyl/acrylic copolymer dispersions, epoxy polymer dispersions, acrylonitrile/butadiene/styrene copolymer dispersions, polyurethane dispersions, and mixtures thereof.

**39.** The composition of claim 38 wherein said aqueous thermoplastic dispersion comprises polymer having a Tg of -60°C to 25°C.

**40.** The composition of claim 37, wherein said pigment is selected from the group consisting of calcium carbonate, titanium dioxide, talc, clay, mica, carbon black, and mixtures thereof.

**41.** The composition of claim 37, wherein said surfactant is selected from the group consisting of anionic surfactants, cationic surfactants, nonionic surfactants, and amphoteric surfactants.

**42.** The composition of claim 37, which is further characterized by an additive selected from the group consisting of defoamers, colorants, crosslinking agents, plasticizers, adhesion promoters, pH control agents, biocides, fungicides, antioxidants, corrosion inhibitors, flash rust inhibitors, leveling agents, freeze control agents, coalescing agents, utlraviolet radiation absorbers, solvents, ionizable salts, and mixtures thereof.

**43.** The chip-resistant coating composition of claim 37 further characterized by a dispersion comprising:

(a) 10 to 50 weight percent of said anionically stabilized polymer dispersion;
(b) 10 to 50 weight percent of said aqueous thermoplastic polymer dispersion;
(c) 0.1 to 3 weight percent of said thickening agent;
(d) 20 to 60 weight percent of said pigment;
(e) 0.2 to 3 weight percent of said surfactant; and
(f) 0 to 15 weight percent of said additive(s);

and sufficient amount of water, if necessary, such that the composition has a weight percent solids of 30 to 55 percent.

**44.** The chip-resistant coating formed by curing the chip-resistant coating composition of claim 37.

**45.** A coated substrate comprising a substrate coated with the chip-resistant coating of claim 37.

**46.** The coated substrate of claim 45 further characterized by said substrate being selected from the group consisting of metals, plastics, and composite materials.

**47.** The coated substrate of claim 45 further characterized by said substrate being part of an article selected from the group consisting of vehicle exteriors and appliance cabinets.

**48.** A multilayer structure comprising:

(a) a substrate;
(b) at least one layer of primer coated on at least one surface of the substrate;
(c) the chip-resistant coating of claim 44 coated on the primer; and
(d) at least one layer of paint coated on the chip resistant coating.

**49.** The multilayer structure of claim 48 wherein said substrate is selected from the group consisting of metal, plastics, and composite materials.

## Patentansprüche

1. Verfahren zur Herstellung eines Polyurethans mit endständigen Silylresten in einer wäßrigen Dispersion, das durch die Schritte gekennzeichnet ist:

   (a) Umsetzung eines Gemisches umfassend:

   (i) eine Polyolkomponente umfassend eine Verbindung mit 2 mit Isocyanat reaktiven funktionellen Gruppen und gegebenenfalls eine Verbindung mit mehr als 2 mit Isocyanat reaktiven funktionellen Gruppen, wobei jede mit Isocyanat reaktive funktionelle Gruppe wenigstens ein aktives Wasserstoffatom aufweist;
   (ii) eine wasserlöslich machende Verbindung, wobei die wasserlöslich machende Verbindung wenigstens eine wasserlöslich machende Gruppe und wenigstens eine mit Isocyanat reaktive funktionelle Gruppe besitzt, wobei jede mit Isocyanat reaktive funktionelle Gruppe wenigstens ein aktives Wasserstoffatom enthält; und
   (iii) eine Polyisocyanatkomponente umfassend eine Verbindung mit 2 Isocyanatgruppen und gegebenenfalls ferner umfassend eine Verbindung mit mehr als 2 Isocyanatgruppen; wobei ausreichend Polyisocyanatkomponente vorhanden ist, um einen Überschuß auf einer Isocyanatäquivalentbasis von 1,4 bis 4 mal über die zusammengefaßten aktiven Wasserstoffatomäquivalente der mit Isocyanat reaktiven funktionellen Gruppen der Polyolkomponente und der wasserlöslich machenden Komponente bereitzustellen;
   (iv) gegebenenfalls ein polares organisches koaleszierendes Lösungsmittel; und
   (v) gegebenenfalls einen Katalysator bei einer hinreichenden Temperatur, um die Umsetzung des Gemisches zu erleichtern, um ein Polyurethanprepolymer mit endständigen Isocyanatgruppen zu bilden, wobei das Verhältnis der Isocyanatgruppen der Polyisocyanatkomponente zu den wasserlöslich machenden Gruppen der wasserlöslich machenden Verbindung derart ist, daß das Prepolymer eine stabile Dispersion bereitstellen kann, sobald es mit einer Wasserphase kombiniert wird;

   (b) Herstellen einer stabilen Polyurethandispersion mit endständigen Silylresten durch Kombinieren des Polyurethanprepolymers mit endständigen Isocyanatgruppen, das gemäß Schritt (a) hergestellt wurde, unter hinreichendem Rühren, bei einer hinreichenden Temperatur und einem hinreichenden pH-Wert mit einer Wasserphase umfassend:

   (i) deionisiertes Wasser;
   (ii) eine Kettenverlängerungskomponente, umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist;
   (iii) eine mit Isocyanat reaktive Silanverbindung mit wenigstens einem aktiven Wasserstoffatom; und
   (iv) eine salzbildende Verbindung, ausgewählt aus basischen salzbildenden Verbindungen und sauren salzbildenden Verbindungen, wobei die salzbildende Verbindung derart ausgewählt ist, daß die salzbildende Verbindung sich mit der wasserlöslich machenden Gruppe in der wasserlöslich machenden Verbindung umsetzen läßt; wobei ein Teil oder die gesamte salzbildende Verbindung alternativ dem Gemisch aus Schritt (a) vor oder während der Umsetzung oder dem Polyurethanprepolymer mit endständigen Isocyanatgruppen vor der Kombination des Polyurethanprepolymers mit endständigen Isocyanatgruppen mit der Wasserphase zugesetzt wird;

   wobei eine hinreichende Menge der Kettenverlängerungskomponente und des mit Isocyanat reaktiven Silans in bezug auf den Überschuß an Polyisocyanatkomponente vorhanden ist, derart, daß das Verhältnis aktive Wasserstoffatome zu Isocyanatgruppen 0,85:1 bis 1:1 beträgt; und wobei das gegebenenfalls vorhandene polare organische koaleszierende Lösungsmittel aus Schritt (a) (iv) gegebenenfalls der Wasserphase vor der Bildung der Dispersion zugesetzt werden kann.

2. Verfahren zur Herstellung eines hydrolysierbaren Polyurethans mit endständigen Silylresten in einer wäßrigen Dispersion, das durch die Schritte gekennzeichnet ist:

   (a) Umsetzen eines Gemisches umfassend:

   (i) eine Polyolkomponente umfassend eine Verbindung mit 2 mit Isocyanat reaktiven funktionellen Gruppen und gegebenenfalls eine Verbindung mit mehr als 2 mit Isocyanat reaktiven funktionellen Gruppen,

wobei jede mit Isocyanat reaktive funktionelle Gruppe wenigstens ein aktives Wasserstoffatom aufweist;
(ii) eine wasserlöslich machende Verbindung, wobei die wasserlöslich machende Verbindung wenigstens eine wasserlöslich machende Gruppe und wenigstens eine mit Isocyanat reaktive funktionelle Gruppe aufweist, wobei jede mit Isocyanat reaktive funktionelle Gruppe wenigstens ein aktives Wasserstoffatom enthält;
(iii) eine Kettenverlängerungskomponente umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist;
(iv) eine Polyisocyanatkomponente umfassend eine Verbindung mit 2 Isocyanatgruppen und gegebenenfalls ferner umfassend eine Verbindung mit mehr als 2 Isocyanatgruppen, wobei hinreichend Polyisocyanatkomponente vorhanden ist, um einen Überschuß auf Isocyanatäquivalentbasis von 1,4 bis 4 mal über die zusammengefaßten aktiven Wasserstoffatomäquivalente der mit Isocyanat reaktiven funktionellen Gruppen der Polyolkomponente, der wasserlöslich machenden Verbindung und der Kettenverlängerungskomponente bereitzustellen;
(v) gegebenenfalls ein polares organisches koaleszierendes Lösungsmittel; und
(vi) gegebenenfalls einen Katalysator;

bei einer hinreichenden Temperatur, um die Umsetzung des Gemisches zu erleichtern, um ein kettenverlängertes Polyurethanprepolymer mit endständigen Isocyanatgruppen zu bilden; wobei das Verhältnis der Isocyanatgruppen der Polyisocyanatkomponente zu den wasserlöslich machenden Gruppen der wasserlöslich machenden Verbindung derart ist, daß das Prepolymer eine stabile Dispersion bereitstellen kann, sobald es mit einer Wasserphase kombiniert wird;
(b) Herstellen einer stabilen Polyurethandispersion mit endständigen Silylresten durch Kombinieren des kettenverlängerten Polyurethanprepolymers mit endständigen Isocyanatgruppen aus Schritt (a) unter hinreichendem Rühren, bei einer hinreichenden Temperatur und einem hinreichenden pH-Wert mit einer Wasserphase umfassend:

(i) deionisiertes Wasser;
(ii) eine mit Isocyanat reaktive Silanverbindung mit wenigstens einem aktiven Wasserstoffatom; und
(iii) eine salzbildende Verbindung ausgewählt aus basischen salzbildenden Verbindungen und sauren salzbildenden Verbindungen, wobei die salzbildende Verbindung derart ausgewählt ist, daß die salzbildende Verbindung sich mit der wasserlöslich machenden Gruppe in der wasserlöslich machenden Verbindung umsetzt; wobei ein Teil oder die gesamte salzbildende Verbindung alternativ dem Gemisch aus Schritt (a) vor oder während der Umsetzung oder dem Polyurethanprepolymer mit endständigen Isocyanatgruppen vor der Kombination des Polyurethanprepolymers mit endständigen Isocyanatgruppen mit der Wasserphase zugesetzt wird;

wobei eine hinreichende Menge des mit Isocyanat reaktiven Silans, bezogen auf den Überschuß Polyisocyanatverbindung vorhanden ist, derart, daß das Verhältnis von aktiven Wasserstoffatomen zu Isocyanatgruppen 0,85:1 bis 1:1 beträgt; und das gegebenenfalls vorhandene polare organische koaleszierende Lösungsmittel aus Schritt (a) (v) gegebenenfalls der Wasserphase vor der Bildung der Dispersion zugegeben wird.

**3.** Verfahren zur Herstellung eines hydrolysierbaren Polyurethans mit endständigen Silylresten in einer wäßrigen Dispersion, welches die Schritte umfaßt:

(a) Umsetzen eines Gemisches umfassend:

(i) eine Polyolkomponente umfassend eine Verbindung mit 2 mit Isocyanat reaktiven funktionellen Gruppen und gegebenenfalls eine Verbindung mit mehr als 2 mit Isocyanat reaktiven funktionellen Gruppen, wobei jede mit Isocyanat reaktive funktionelle Gruppe wenigstens ein aktives Wasserstoffatom aufweist;
(ii) eine wasserlöslich machende Verbindung, wobei die wasserlöslich machende Verbindung wenigstens eine wasserlöslich machende Gruppe und wenigstens eine mit Isocyanat reaktive funktionelle Gruppe aufweist, wobei jede mit Isocyanat reaktive funktionelle Gruppe wenigstens ein aktives Wasserstoffatom enthält;
(iii) eine Kettenverlängerungskomponente umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist; und

(iv) eine Polyisocyanatkomponente umfassend eine Verbindung mit 2 Isocyanatgruppen und gegebenenfalls ferner umfassend ein Polyisocyanat mit wenigstens 3 Isocyanatgruppen;

(v) gegebenenfalls ein polares organisches koaleszierendes Lösungsmittel; und

(vi) gegebenenfalls einen Katalysator;

bei einer hinreichenden Temperatur, um die Umsetzung des Gemisches zu erleichtern, um ein kettenverlängertes Polyurethanprepolymer mit endständigen Isocyanatgruppen zu bilden; wobei das Verhältnis der Isocyanatgruppen der Polyisocyanatverbindung zu den wasserlöslich machenden Gruppen der Wasser löslich machenden Verbindung derart ist, daß das Prepolymer eine stabile Dispersion bereitstellen kann, sobald es mit einer Wasserphase kombiniert wird;

(b) Zugeben eines Polyisocyanataddukt mit mehr als 2 Isocyanatgruppen zu dem Gemisch aus Schritt (a), wenn die Umsetzung des Gemisches aus Schritt (a) zu 80 bis 90 % beendet ist, um ein verzweigtes kettenverlängertes Polyurethanprepolymer mit endständigen Isocyanatgruppen zu bilden; wobei hinreichend Polyisocyanatkomponente und Polyisocyanataddukt vorhanden sind, um einen Überschuß auf Isocyanatäquivalentbasis von 1,4 bis 4 mal über die zusammengefaßten aktiven Wasserstoffatomäquivalente der mit Isocyanat reaktiven funktionellen Gruppen der Polyolkomponente, der wasserlöslich machenden Verbindung und der Kettenverlängerungskomponente bereitzustellen;

(c) Herstellen einer stabilen Polyurethandispersion mit endständigen Silylresten durch Kombinieren des verzweigten kettenverlängerten Polyurethanprepolymers mit endständigen Isocyanatgruppen aus Schritt (b) unter hinreichendem Rühren, bei einer hinreichenden Temperatur und einem hinreichenden pH-Wert mit einer Wasserphase umfassend:

(i) deionisiertes Wasser;

(ii) eine mit Isocyanat reaktive Silanverbindung mit wenigstens einem aktiven Wasserstoffatom;

(iii) eine Kettenverlängerungskomponente umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist; und

(iv) eine salzbildende Verbindung gewählt aus basischen salzbildenden Verbindungen und sauren salzbildenden Verbindungen, wobei die salzbildende Verbindung derart gewählt ist, daß die salzbildende Verbindung sich mit der wasserlöslich machenden Gruppe in der wasserlöslich machenden Verbindung umsetzen läßt, wobei ein Teil oder die gesamte salzbildende Verbindung alternativ dem Gemisch aus Schritt (a) oder dem Gemisch aus Schritt (b) vor der Kombination des verzweigten kettenverlängerten Polyurethanprepolymer mit endständigen Isocyanatgruppen mit der Wasserphase zugegeben wird;

wobei eine hinreichende Menge des mit Isocyanat reaktiven Silans, bezogen auf den Überschuß Polyisocyanat vorhanden ist, derart, daß das Verhältnis der aktiven Wasserstoffatome zu Isocyanatgruppen 0,85:1 bis 1:1 beträgt; wobei (a) (v) gegebenenfalls der Wasserphase vor der Bildung der Dispersion zugesetzt werden kann.

**4.** Verfahren zur Herstellung eines hydrolysierbaren Polyurethans mit endständigen Silylresten in einer wäßrigen Dispersion, das durch die Schritte gekennzeichnet ist:

(a) Umsetzen eines Gemisches umfassend:

(i) eine Polyolkomponente umfassend eine Verbindung mit 2 mit Isocyanat reaktiven funktionellen Gruppen und gegebenenfalls eine Verbindung mit mehr als 2 mit Isocyanat reaktiven funktionellen Gruppen, wobei jede mit Isocyanat reaktive funktionelle Gruppe wenigstens ein aktives Wasserstoffatom aufweist;

(ii) eine wasserlöslich machende Verbindung, wobei die wasserlöslich machende Verbindung wenigstens eine wasserlöslich machende Gruppe und wenigstens eine mit Isocyanat reaktive funktionelle Gruppe aufweist, wobei jede mit Isocyanat reaktive funktionelle Gruppe wenigstens ein aktives Wasserstoffatom enthält;

(iii) eine Kettenverlängerungskomponente umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist; und

(iv) eine Polyisocyanatkomponente umfassend eine Verbindung mit 2 Isocyanatgruppen und gegebenenfalls ferner umfassend eine Verbindung mit mehr als 2 Isocyanatgruppen, wobei hinreichend Polyisocyanatkomponente enthalten ist, um einen Überschuß auf einer Isocyanatäquivalentbasis von 1,4 bis 4 mal über die zusammengefaßten aktiven Wasserstoffatomäquivalente der mit Isocyanat reaktiven funktionellen Gruppen der Polyolkomponente, der wasserlöslich machenden Verbindung und der Kettenverlängerungskomponente bereitzustellen;
(v) gegebenenfalls ein polares organisches koaleszierendes Lösungsmittel; und
(vi) gegebenenfalls einen Katalysator;

bei einer hinreichenden Temperatur, um die Umsetzung des Gemisches zu erleichtern, um ein kettenverlängertes Polyurethanprepolymer mit endständigen Isocyanatgruppen zu bilden;
(b) Umsetzen wenigstens einer stöchiometrisch äquivalenten Menge eines Isocyanat blockierenden Mittels mit dem Umsetzungsprodukt aus (a) umfassend das kettenverlängerte Polyurethanprepolymer mit endständigen Isocyanatgruppen, um ein blockiertes kettenverlängertes Polyurethanprepolymer mit endständigen Isocyanatgruppen zu bilden; wobei das Verhältnis der Isocyanatgruppen der Polyisocyanatkomponente zu den wasserlöslich machenden Gruppen der wasserlöslich machenden Komponente derart ist, daß das Prepolymer eine stabile Dispersion bereitstellen kann, sobald es mit einer Wasserphase kombiniert wird;
(c) Herstellen einer stabilen Polyurethandispersion mit endständigen Silylresten durch Ersetzen des Isocyanat blockierenden Mittels in dem blockierten kettenverlängerten Polyurethanprepolymers mit endständigen Isocyanatgruppen aus (b) durch Umsetzen des blockierten kettenverlängerten Polyurethanprepolymers mit endständigen Isocyanatgruppen aus (b) unter hinreichendem Rühren, bei einer hinreichenden Temperatur und einem hinreichenden pH-Wert mit einer Wasserphase umfassend

(i) deionisiertes Wasser;
(ii) eine mit Isocyanat reaktive Silanverbindung mit wenigstens einem aktiven Wasserstoffatom;
(iii) eine salzbildende Verbindung, gewählt aus basischen salzbildenden Verbindungen und sauren salzbildenden Verbindungen, wobei die salzbildende Verbindung derart gewählt wird, daß die salzbildende Verbindung sich mit den wasserlöslich machenden Gruppen der wasserlöslich machenden Verbindung umsetzen läßt, die mit dem kettenverlängerten Polyurethanprepolymer aus (a) umgesetzt ist, wobei ein Teil oder die gesamte salzbildende Verbindung alternativ dem Gemisch aus Schritt (a) oder dem Gemisch aus Schritt (b) vor der Kombination des blockierten kettenverlängerten Polyurethanprepolymers mit endständigen Isocyanatgruppen mit der Wasserphase zugegeben wird;

wobei eine hinreichende Menge des mit Isocyanat reaktiven Silans bezogen auf den Überschuß an Polyisocyanatkomponente vorhanden ist, derart, daß das Verhältnis aktive Wasserstoffatome zu Isocyanatgruppen 0,85:1 bis 1:1 beträgt; und das gegebenenfalls vorhandene polare organische koaleszierende Lösungsmittel aus Schritt (a) (v) gegebenenfalls der Wasserphase vor der Bildung der Dispersion zugegeben wird.

**5.** Verfahren zur Herstellung eines hydrolysierbaren Polyurethans mit endständigen Silylresten in einer wäßrigen Dispersion, das durch die Schritte gekennzeichnet ist:

(a) Umsetzen eines Gemisches umfassend:

(i) eine Polyolkomponente umfassend eine Verbindung mit 2 mit Isocyanat reaktiven funktionellen Gruppen und gegebenenfalls eine Verbindung mit mehr als 2 mit Isocyanat reaktiven funktionellen Gruppen, wobei jede mit Isocyanat reaktive funktionelle Gruppe wenigstens ein aktives Wasserstoffatom aufweist;
(ii) eine wasserlöslich machende Verbindung, wobei die wasserlöslich machende Verbindung wenigstens eine wasserlöslich machende Gruppe und wenigstens eine mit Isocyanat reaktive funktionelle Gruppe besitzt, wobei jede mit Isocyanat reaktive funktionelle Gruppe wenigstens ein aktives Wasserstoffatom enthält; und
(iii) eine Kettenverlängerungskomponente umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist;
(iv) eine Polyisocyanatkomponente umfassend eine Verbindung mit 2 Isocyanatgruppen und gegebenenfalls ferner umfassend eine Verbindung mit mehr als 2 Isocyanatgruppen, wobei hinreichend Polyisocyanatkomponente enthalten ist, um einen Überschuß auf einer Isocyanatäquivalentbasis von 1,4 bis 4 mal über die zusammengefaßten aktiven Wasserstoffatomäquivalente der mit Isocyanat reaktiven funktionellen Gruppen der Polyolkomponente, der Wasser löslich machenden Verbindung und der Kettenverlängerungskomponente bereitzustellen;

(v) gegebenenfalls ein polares organisches koaleszierendes Lösungsmittel; und
(vi) gegebenenfalls einen Katalysator;

bei einer hinreichenden Temperatur, um die Umsetzung des Gemisches zu erleichtern, um ein kettenverlängertes Polyurethanprepolymer mit endständigen Isocyanatgruppen zu bilden; wobei das Verhältnis der Isocyanatgruppen der Polyisocyanatverbindung zu den wasserlöslich machenden Gruppen der wasserlöslich machenden Verbindung derart ist, daß das Prepolymer eine stabile Dispersion bereitstellen kann, sobald es mit einer Wasserphase kombiniert wird;
(b) Umsetzen des kettenverlängerten Polyurethanprepolymers mit endständigen Isocyanatgruppen aus (a) mit einer mit Isocyanat reaktiven Silanverbindung mit wenigstens einem aktiven Wasserstoffatom, um ein kettenverlängertes Polyurethanprepolymer mit endständigen Silylresten herzustellen;
wobei eine hinreichende Menge an mit Isocyanat reaktiver Silanverbindung im Verhältnis zum Überschuß an Polyisocyanatkomponente vorhanden ist, derart, daß das Verhältnis der aktiven Wasserstoffatome zu den Isocyanatgruppen 0,85:1 bis 1:1 beträgt;
(c) Herstellen einer stabilen Polyurethandispersion mit endständigen Silylresten durch Kombinieren des kettenverlängerten Polyurethanprepolymers mit endständigen Silylresten und Isocyanatgruppen aus (b) unter hinreichendem Rühren, bei einer hinreichenden Temperatur und einem hinreichenden pH-Wert mit einer Wasserphase umfassend:

(i) deionisiertes Wasser;
(ii) eine salzbildende Verbindung ausgewählt aus basischen salzbildenden Verbindungen und sauren salzbildenden Verbindungen, wobei die salzbildende Verbindung derart ausgewählt ist, daß die salzbildende Verbindung sich mit der wasserlöslich machenden Gruppe der wasserlöslich machenden Verbindung umsetzen läßt, die mit dem kettenverlängerten Polyurethanprepolymers mit endständigen Isocyanatgruppen umgesetzt ist; wobei ein Teil oder die gesamte salzbildende Verbindung alternativ dem Gemisch aus Schritt (a) oder dem Gemisch aus Schritt (b) vor dem Kombinieren des kettenverlängerten Polyurethanprepolymers mit endständigen Silylresten mit der Wasserphase zugesetzt wird, wobei das gegebenenfalls vorhandene polare organische koaleszierende Lösungsmittel aus Stufe (a) (v) gegebenenfalls der Wasserphase vor der Bildung der Dispersion zugesetzt wird.

**6.** Verfahren zur Herstellung eines hydrolysierbaren Polyurethans mit endständigen Silylresten in einer wäßrigen Dispersion, das durch die Schritte gekennzeichnet ist:

(a) Umsetzen eines Gemisches umfassend:

(i) eine Polyolkomponente umfassend eine Verbindung mit 2 mit Isocyanat reaktiven funktionellen Gruppen und gegebenenfalls eine Verbindung mit mehr als 2 mit Isocyanat reaktiven funktionellen Gruppen, wobei jede mit Isocyanat reaktive funktionelle Gruppe wenigstens ein aktives Wasserstoffatom aufweist;
(ii) eine wasserlöslich machende Verbindung, wobei die wasserlöslich machende Verbindung wenigstens eine wasserlöslich machende Gruppe und wenigstens eine mit Isocyanat reaktive funktionelle Gruppe aufweist, wobei jede mit Isocyanat reaktive funktionelle Gruppe wenigstens ein aktives Wasserstoffatom enthält;
(iii) eine Kettenverlängerungskomponente umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist;
(iv) eine Polyisocyanatkomponente umfassend eine Verbindung mit 2 Isocyanatgruppen und gegebenenfalls ferner umfassend eine Verbindung mit mehr als 2 Isocyanatgruppen, wobei hinreichend Polyisocyanatkomponente vorhanden ist, um einen Überschuß auf einer Isocyanatäquivalentbasis von 1,4 zu 4 mal über die zusammengefaßten aktiven Wasserstoffäquivalente der mit Isocyanat reaktiven funktionellen Gruppen der Polyolkomponente, der wasserlöslich machenden Verbindung und der Kettenverlängerungskomponente bereitzustellen;
(v) gegebenenfalls ein polares organisches koaleszierendes Lösungsmittel; und
(vi) gegebenenfalls einen Katalysator;

bei einer hinreichenden Temperatur, um die Umsetzung des Gemisches zu erleichtern, um ein kettenverlängertes Polyurethanprepolymer mit endständigen Isocyanatgruppen zu bilden; wobei das Verhältnis der Isocyanatgruppen der Polyisocyanatkomponente zu den wasserlöslich machenden Gruppen der wasserlöslich

machenden Verbindung derart ist, daß das Prepolymer eine stabile Dispersion bereitstellen kann, sobald es mit einer Wasserphase kombiniert wird;
(b) Herstellen einer stabilen Polyurethandispersion mit endständigen Silylresten durch Kombinieren des kettenverlängerten Polyurethanprepolymers mit endständigen Isocyanatgruppen aus (a) unter hinreichendem Rühren, bei einer hinreichenden Temperatur und einem hinreichenden pH-Wert mit einer Wasserphase umfassend:

(i) deionisiertes Wasser;
(ii) eine Kettenverlängerungskomponente umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen wobei jede mit Isocyanat reaktive funktionelle Gruppe wenigstens ein aktives Wasserstoffatom aufweist;
(iii) eine mit Isocyanat reaktive Silanverbindung mit wenigstens einem aktiven Wasserstoffatom; und
(iv) eine salzbildende Verbindung ausgewählt aus basischen salzbildenden Verbindungen und sauren salzbildenden Verbindungen, wobei die salzbildende Verbindung derart ausgewählt ist, daß die salzbildende Verbindung sich mit der wasserlöslich machenden Gruppe in der wasserlöslich machenden Verbindung umsetzen läßt, wobei ein Teil oder die gesamte salzbildende Verbindung alternativ dem Gemisch aus Schritt (a) vor der Kombination des kettenverlängerten Polyurethanprepolymers mit endständigen Isocyanatgruppen mit der Wasserphase zugesetzt wird;

wobei eine hinreichende Menge der Kettenverlängerungskomponente und der mit Isocyanat reaktiven Silanverbindung, bezogen auf den Überschuß Polyisocyanatkomponente, vorhanden ist, derart, daß das Verhältnis aktive Wasserstoffatome zu Isocyanatgruppen 0,85:1 bis 1:1 beträgt; wobei (a) (v) gegebenenfalls der Wasserphase vor der Bildung der Dispersion zugesetzt werden kann.

**7.** Verfahren nach einem der Ansprüche 1 bis 6, wobei der difunktionelle Kettenverlängerer ein zweiwertiges sterisch gehindertes Amin mit der allgemeinen Formel ist:

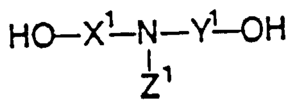

wobei $X^1$, $Y^1$ und $Z^1$ unabhängig voneinander ausgewählt sind aus cyclischen und aliphatischen organischen Resten, die frei von reaktiven funktionellen Gruppen sind, mit der Maßgabe, daß wenigstend 75 % der $Z^1$-Gruppen wenigstens 4 Kohlenstoffatome aufweisen.

**8.** Wäßrige Dispersion einer anionisch stabilisierten Polymermasse, dadurch gekennzeichnet, daß ein Polymer der Formel (I)

$$[SIL\text{-}X]\text{-}ISO\text{-}Y\text{-}[POL\text{-}X\text{-}ISO\text{-}Y]_n \sim [CE\text{-}X\text{-}ISO\text{-}Y]_m \sim [WSC\text{-}X\text{-}ISO\text{-}Y]_q\text{-}[SIL] \qquad (I)$$

enthalten ist,

wobei [POL-X-ISO-Y], [CE-X-ISO-Y] und [WSC-X-ISO-Y] statistisch verteilt sein können oder Blöcke bilden können, wobei
SIL

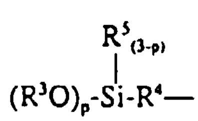

darstellt;

$R^3$ ausgewählt ist aus Wasserstoffatomen, Alkylresten umfassend 1 bis 4 Kohlenstoffatome, Acylresten umfassend etwa 2 bis etwa 5 Kohlenstoffatome, und Oximresten der Formel $-N{=}CR^5R^6$, wobei $R^5$ ein einwertiger Alkylrest umfassend 1 bis 12 Kohlenstoffatome ist und wobei $R^6$ ein einwertiger Alkylrest umfassend 1 bis 12 Kohlenstoffatome ist;

$R^4$ ein zweiwertiger Rest umfassend 2 bis 20 Kohlenstoffatome ist, wobei der Rest keine mit Isocyanat reaktiven funktionellen Gruppen enthält,

p eine ganze Zahl von 1 bis 3 darstellt;

X ein zweiwertiger Rest ist, ausgewählt aus

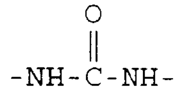 , 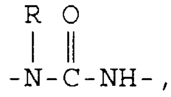 , 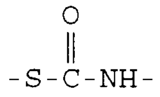 , und 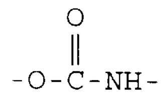 ;

wobei R unabhängig voneinander ausgewählt ist aus Phenylresten, linearen aliphatischen Resten umfassend 1 bis 12 Kohlenstoffatome, verzweigten aliphatischen Resten umfassend 1 bis 12 Kohlenstoffatome und cycloaliphatischen Resten;

ISO eine Einheit darstellt, die von einer Polyisocyanatkomponente abgeleitet ist, umfassend eine Verbindung mit 2 Isocyanatgruppen und gegebenenfalls ferner umfassend eine Verbindung mit mehr als 2 Isocyanatgruppen;

Y ein zweiwertiger Rest ist, ausgewählt aus

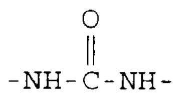 , 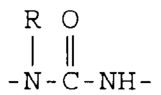 , 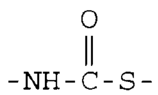 , und 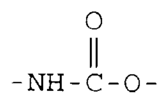 ;

wobei R wie vorstehend definiert ist;

POL eine Einheit darstellt, die von einer Polyolkomponente abgeleitet ist, umfassend eine Verbindung mit 2 mit Isocyanat reaktiven funktionellen Gruppen und gegebenenfalls eine Verbindung mit mehr als 2 mit Isocyanat reaktiven funktionellen Gruppen, wobei jede mit Isocyanat reaktive funktionelle Gruppe wenigstens ein aktives Wasserstoffatom aufweist;

n eine ganze Zahl von 2 bis 85 darstellt;

CE eine Einheit darstellt, die von einer Kettenverlängerungskomponente abgeleitet ist, umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist;

m eine ganze Zahl von 1 bis 84 darstellt;

WSC eine Einheit darstellt, die von einer wasserlöslich machenden Verbindung abgeleitet ist, wobei die wasserlöslich machende Verbindung wenigstens eine wasserlöslich machende Gruppe und wenigstens 2 mit Isocyanat reaktive funktionelle Gruppen besitzt, wobei jede mit Isocyanat reaktive funktionelle Gruppe wenigstens ein aktives Wasserstoffatom enthält, wobei die wasserlöslich machende Gruppe mit einer basischen salzbildenden Verbindung umgesetzt wird, um das Polymer anionisch zu stabilisieren;

q eine ganze Zahl von 2 bis 85 darstellt;

der Urethanverzweigungskoeffizient des Polymers 1,7 bis 2,25 ist; und hinreichend Polyisocyanatkomponente vorhanden ist, um einen Überschuß auf einer Isocyanatäquivalentbasis von 1,4 bis 4 mal über die zusammengefaßten aktiven Wasserstoffatomäquivalente der mit Isocyanat reaktiven funktionellen Gruppen der Polyolkomponente, der wasserlöslich machenden Verbindung und der Kettenverlängerungskomponente bereitzustellen.

**9.** Masse nach Anspruch 8, wobei der difunktionelle Kettenverlängerer ein zweiwertiges sterisch gehindertes Amin mit der allgemeinen Formel ist,

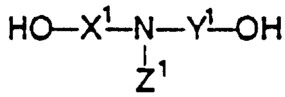

wobei $X^1$, $Y^1$ und $Z^1$ unabhängig voneinander ausgewählt sind aus cyclischen und aliphatischen organischen Resten, frei von reaktiven funktionellen Resten und mit der Maßgabe, daß wenigstens 75 % der $Z^1$-Reste wenigstens 4 Kohlenstoffatome aufweisen.

**10.** Masse nach Anspruch 8, ferner dadurch gekennzeichnet, daß n eine ganze Zahl von 3 bis 65 darstellt; m eine ganze Zahl von 2 bis 64 darstellt; und q eine ganze Zahl von 3 bis 65 darstellt.

**11.** Masse nach Anspruch 8, ferner dadurch gekennzeichnet, daß n eine ganze Zahl von 4 bis 15 darstellt; m eine ganze Zahl von 2 bis 64 darstellt; und q eine ganze Zahl von 4 bis 15 darstellt.

**12.** Masse nach Anspruch 8, ferner dadurch gekennzeichnet, daß $R^3$ gewählt ist aus Ethyl- und Methylgruppen; p 3 ist; und $R^4$ 2 bis 4 Kohlenstoffatome umfaßt.

**13.** Masse nach Anspruch 8, ferner dadurch gekennzeichnet, daß das Polyol ausgewählt ist aus Poly(oxypropylen) glykolen, Poly(oxypropylen)glykolen mit endständigem Ethylenoxid, Poly(oxytetramethylen)glykolen, α-ω-Diaminopoly(oxypropylen), aromatischen Poly(oxypropylen)glykolen mit endständigen Aminresten, Pfropf-Polyetherpolyolen, Poly(oxyethylen)polyolen, Polyglykoladipaten, Polyethylenterephthtalatpolyolen, Polycaprolactonpolyolen, Polybutadienpolyolen, hydrogenierten Polybutadienpolyolen, α-ω-Diaminopoly(oxytetramethylen), Polythioetherpolyolen, Polybutylenoxidpolyolen, statistischen Polyoxytetramethylen/Ethylenoxid-Copolymerpolyolen, fluorierten Polyetherpolyolen, Acrylpolyolen, Polycarbonatpolyolen und Gemischen daraus.

**14.** Masse nach Anspruch 8, ferner dadurch gekennzeichnet, daß die Polyolkomponente ein zahlengemitteltes Molekulargewicht von 250 bis 35 000 aufweist.

**15.** Masse nach Anspruch 8, ferner dadurch gekennzeichnet, daß die Polyolkomponente ein zahlengemitteltes Molekulargewicht von 500 bis 3000 aufweist.

**16.** Masse nach Anspruch 8, ferner dadurch gekennzeichnet, daß die wasserlöslich machende Verbindung ausgewählt ist aus:

$$(HOCH_2)_2C(CH_3)COOH;$$

$$H_2N—C_2H_4—NH—C_2H_4—SO_3H;$$

$$H_2N\text{-}C_3H_6\text{-}N(CH_3)\text{-}C_3H_6\text{-}SO_3H;$$

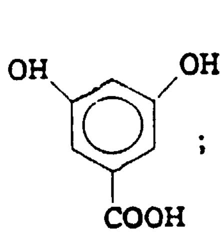 ; 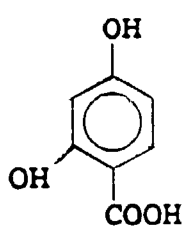 ; 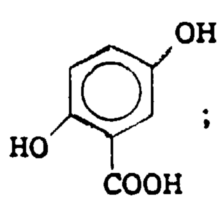 ; 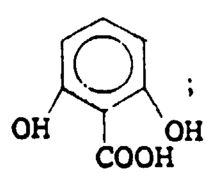 ;

$$HOCH_2\text{-}CH(OH)\text{-}CO_2Na;$$

$[(HOCH_2)_2CHCH_2—COO]^-[NH(CH_3)_3]^+$;

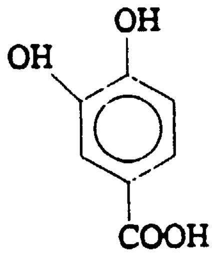 ; 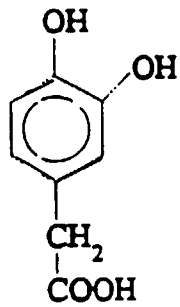 ; 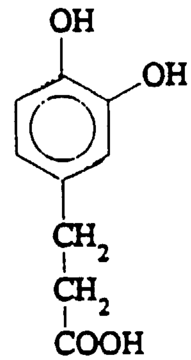 ;

$CH_3(CH_2)_2CH(OH)—CH(OH)(CH_2)_3CO_2K$;

$(HOC_2H_4)_2N—C_3H_6—OSO_3Na$;

$(HOCH_2CH_2)_2NC_6H_4O(CH_2CH_2O)SO_2OH$;

und Gemischen daraus.

17. Masse nach Anspruch 8, ferner dadurch gekennzeichnet, daß die basische salzbildende Verbindung ausgewählt ist aus Ammoniak, Trimethylamin, Triethylamin, Tripropylamin, Triisopropylamin, Tributylamin, Triethanolamin, Diethanolamin; und Gemischen daraus.

18. Masse nach Anspruch 8, ferner dadurch gekennzeichnet, daß der difunktionelle Kettenverlängerer ausgewählt ist aus 1,4-Butandiol, Ethylenglykol, Diethylenglykol, Dipropylenglykol, Neopentylglykol, 1,6-Hexandiol, 1,4-Cyclohexandimethanol, Bis (2-hydroxyethyl)hydrochinon, 4,4'-Methylen-bis(o-chloranilin), 2,5-Diethyl-2,4-toluoldiamin, 4,4'-Methylen-bis (3-chlor-2,6-diethylanilin), Propylenglykol-bis(4,4'-aminobenzoat), 3,5-Di(thiomethyl)-2,4-toluoldiamin, Methylen-bis(4,4'-anilin), Ethyl-1,2-di(2-aminothiophenol), 4-Chlor-3,5-diaminoisobutylbenzoat, 1,2-Diaminoethan, N,N'-Dialkyl(methylendianilin), N,N'-Dialkyl(1,4-diaminobenzol); und Gemischen daraus.

19. Masse nach Anspruch 8, ferner dadurch gekennzeichnet, daß das mit Isocyanat reaktive Silan ausgewählt ist aus

$H_2NCH_2CH_2CH_2Si(OC_2H_5)_3$;

$H_2NCH_2CH_2CH_2Si(OCH_3)_3$ ;

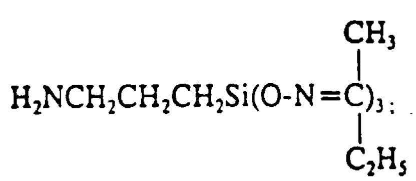

$HSCH_2CH_2CH_2Si(OCH_3)_3$ ;

$$HO(C_2H_4O)_3C_2H_4N(CH_3)(CH_2)_3Si(OC_4H_9)_3 ;$$

$$H_2NCH_2C_6H_4CH_2CH_2Si(OCH_3)_3 ;$$

$$HSCH_2CH_2CH_2Si(OCOCH_3)_3 ;$$

$$HN(CH_3)CH_2CH_2Si(OCH_3)_3 ;$$

$$HSCH_2CH_2CH_2SiCH_3(OCH_3)_2;$$

$$(H_3CO)_3SiCH_2CH_2CH_2NHCH_2CH_2CH_2Si(OCH_3)_3;$$

und Gemischen daraus.

**20.** Masse nach Anspruch 8, ferner dadurch gekennzeichnet, daß der Urethanverzweigungskoeffizient einen Wert von 1,85 bis 2,01 darstellt.

**21.** Masse nach Anspruch 9, ferner dadurch gekennzeichnet, daß das zweiwertige sterisch gehinderte Amin ausgewählt ist aus n-Butyldiethanolamin und Phenyldiethanolamin.

**22.** Film, umfassend die gehärtete Masse nach Anspruch 8.

**23.** Elastomer, umfassend die gehärtete Masse nach Anspruch 8.

**24.** Substrat, beschichtet mit der gehärteten Masse nach Anspruch 9.

**25.** Beschichtetes Substrat nach Anspruch 24, ferner dadurch gekennzeichnet, daß das Substrat ausgewählt ist aus Leder, Geweben, Vliesmaterialien, Glas, Glasfasern, Holz, Metall, Kunststoffen, Vinylmassen und Verbundmaterialien.

**26.** Beschichtetes Substrat nach Anspruch 24, ferner dadurch gekennzeichnet, daß das Substrat Holz eines ölhaltigen Baums ist.

**27.** Beschichtetes Substrat nach Anspruch 26, ferner dadurch gekennzeichnet, daß das Substrat Teakholz ist.

**28.** Beschichtetes Substrat nach Anspruch 26, ferner dadurch gekennzeichnet, daß die Masse ferner einen Photostabilisator enthält.

**29.** Beschichtetes Substrat nach Anspruch 27, ferner dadurch gekennzeichnet, daß die Masse ferner einen Photostabilisator enthält.

**30.** Gehärtete Masse nach Anspruch 8.

**31.** Masse, gekennzeichnet durch:

(a) 95 bis 99,9 Gew.-% der Dispersion von Anspruch 8;
(b) 0,1 bis 10 Gew.-% eines Photostabilisators;
(c) 0 bis 10 Gew.-% eines grenzflächenaktiven Mittels; und
(d) 0 bis 10 Gew.-% eines Verdickungsmittels;

wobei die Gewichtsprozente auf dem Gesamtgewicht der Beschichtungsmasse basieren und insgesamt 100 % betragen.

**32.** Gehärtete Masse nach Anspruch 31.

**33.** Beschichtetes Substrat, dadurch gekennzeichnet, daß Holz mit der gehärteten Masse nach Anspruch 31 beschichtet ist.

**34.** Masse, gekennzeichnet durch:

(a) 94 bis 99 Gew.-% der Dispersion von Anspruch 9; und
(b) 1 bis 6 Gew.-% eines Weichmachers, basierend auf dem Gesamtgewicht der Masse.

**35.** Gehärtete Masse nach Anspruch 34.

**36.** Beschichtetes Substrat, dadurch gekennzeichnet, daß eine Vinylmasse mit der gehärteten Masse nach Anspruch 35 beschichtet ist.

**37.** Abplatzbeständige Beschichtungsmasse, gekennzeichnet durch eine Dispersion umfassend:

(a) 0,5 bis 99,9 Gew.-% einer Dispersion umfassend:

eine anionisch stabilisierte wäßrige Polymerdispersion umfassend ein Polymer der Formel (I)

$$[SIL\text{-}X]\text{-}ISO\text{-}Y\text{-}[POL\text{-}X\text{-}ISO\text{-}Y]_n \sim [CE\text{-}X\text{-}ISO\text{-}Y]_m \sim [WSC\text{-}X\text{-}ISO\text{-}Y]_q\text{-}[SIL] \qquad (I)$$

wobei [POL-X-ISO-Y], [CE-X-ISO-Y] und [WSC-X-ISO-Y] statistisch verteilt sein können oder Blöcke bilden können;
wobei
SIL

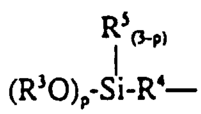

darstellt;
$R^3$ ausgewählt ist aus Wasserstoffatomen, Alkylresten, umfassend 1 bis 4 Kohlenstoffatome; Acylresten umfassend 2 bis 5 Kohlenstoffatome; und Oximresten der Formel $-N=CR^5R^6$, wobei $R^5$ ein einwertiger Alkylrest umfassend 1 bis 12 Kohlenstoffatome ist und wobei $R^6$ ein einwertiger Alkylrest umfassend 1 bis 12 Kohlenstoffatome ist;
$R^4$ ein zweiwertiger Rest umfassend 2 bis 20 Kohlenstoffatome ist, wobei der Rest keine mit Isocyanat reaktiven funktionellen Gruppen enthält;
p eine ganze Zahl von 1 bis 3 darstellt;
X ein zweiwertiger Rest ist, ausgewählt aus

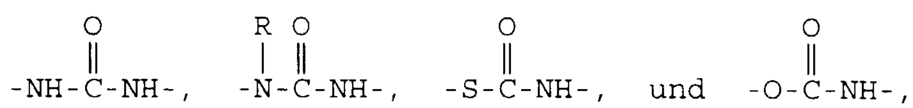

wobei R unabhängig ausgewählt ist aus Phenylgruppen, linearen aliphatischen Resten umfassend 1 bis 12 Kohlenstoffatome, verzweigten aliphatischen Resten umfassend 1 bis 12 Kohlenstoffatome und cycloaliphatischen Resten;
ISO eine Einheit darstellt, die abgeleitet ist von einer Polyisocyanatkomponente umfassend eine Verbindung mit 2 Isocyanatgruppen und gegebenenfalls ferner umfassend eine Verbindung mit mehr als 2 Isocyanatgruppen;

Y ein zweiwertiger Rest ist, ausgewählt aus

```
     O              O R          O                O
     ‖              ‖ |          ‖                ‖
-NH-C-NH-,     -NH-C-N-,    -NH-C-S-,   und   -NH-C-O-;
```

wobei R wie vorstehend definiert ist;
POL eine Einheit darstellt, die von einer Polyolkomponente abgeleitet ist, umfassend eine Verbindung mit 2 mit Isocyanat reaktiven funktionellen Gruppen und gegebenenfalls eine Verbindung mit mehr als 2 mit Isocyanat reaktiven funktionellen Gruppen, wobei jede mit Isocyanat reaktive funktionelle Gruppe wenigstens ein aktives Wasserstoffatom aufweist; n eine ganze Zahl von 2 bis 85 darstellt;
CE eine Einheit darstellt, die von einer Kettenverlängerungskomponente abgeleitet ist, umfassend einen difunktionellen Kettenverlängerer mit 2 mit Isocyanat reaktiven funktionellen Gruppen und gegebenenfalls einen polyfunktionellen Kettenverlängerer mit wenigstens 3 mit Isocyanat reaktiven funktionellen Gruppen, wobei jede mit Isocyanat reaktive funktionelle Gruppe wenigstens ein aktives Wasserstoffatom aufweist;
m eine ganze Zahl von 1 bis 84 darstellt;
WSC eine Einheit darstellt, die von einer wasserlöslich machenden Verbindung abgeleitet ist, wobei die wasserlöslich machende Verbindung wenigstens eine wasserlöslich machende Gruppe und wenigstens 2 mit Isocyanat reaktive funktionelle Gruppen aufweist, wobei jede mit Isocyanat reaktive funktionelle Gruppe wenigstens ein aktives Wasserstoffatom enthält, wobei die wasserlöslich machende Gruppe mit einer basischen salzbildenden Verbindung umgesetzt wird, um das Polymer anionisch zu stabilisieren;
q eine ganze Zahl von 2 bis 85 darstellt;
wobei der Urethanverzweigungskoeffizient des Polymers 1,7 bis 2,25 beträgt; und wobei hinreichend Polyisocyanatkomponente vorhanden ist, um einen Überschuß auf einer Isocyanatäquivalentbasis von 1,4 bis 4 mal über die zusammengefaßten aktiven Wasserstoffatomäquivalente der mit Isocyanat reaktiven funktionellen Gruppen der Polyolkomponente, der wasserlöslich machenden Verbindung und der Kettenverlängerungskomponente bereitzustellen;

(b) 0,1 bis 15 Gew.-% eines Verdickungsmittels;
(c) 0 bis 70 Gew.-% eines Pigments;
(d) 0 bis 10 Gew.-% eines grenzflächenaktiven Mittels;
(e) 0 bis 80 Gew.-% einer wäßrigen thermoplastischen Polymerdispersion; und
(f) 0 bis 15 Gew.-% eines Additivs oder Additive

wobei die Gewichtsprozente auf 100 % Feststoff basieren und die Summe der Gewichtsprozente (a) + (b) + (c) + (d) + (e) + (f) 100 % beträgt und eine hinreichende Menge Wasser falls notwendig, vorhanden ist, so daß die Masse 5 bis 60 Gew.-% an Feststoffen aufweist.

**38.** Masse nach Anspruch 37, wobei die wäßrige thermoplastische Dispersion gewählt ist aus Vinyl/Acrylcopolymerdispersionen, Epoxypolymerdispersionen, Acrylnitril/Butadien/Styrolcopolymerdispersionen, Polyurethandispersionen und Gemischen daraus.

**39.** Masse nach Anspruch 38, wobei die wäßrige thermoplastische Dispersion ein Polymer mit einer Tg von -60°C bis 25°C umfaßt.

**40.** Masse nach Anspruch 37, wobei das Pigment ausgewählt ist aus Calciumcarbonat, Titandioxid, Talkum, Ton, Glimmer, Ruß und Gemischen daraus.

**41.** Masse nach Anspruch 37, wobei das grenzflächenaktive Mittel ausgewählt ist aus anionischen, kationischen, nichtionischen und amphoteren grenzflächenaktiven Mitteln.

**42.** Masse nach Anspruch 37, die ferner dadurch gekennzeichnet ist, daß das Additiv ausgewählt ist aus Entschäumern, Farbstoffen, Vernetzungsmitteln, Weichmachern, Haftvermittlern, Mitteln zur Einstellung des pH-Wertes, Bioziden, Fungiziden, Antioxidantien, Korrosionsinhibitoren, Rostinhibitoren, Verlaufmitteln Frostschutzmitteln, Koaleszenzmitteln, UV-Absorbern, Lösungsmitteln, ionisierbaren Salzen und Gemischen daraus.

**43.** Abplatzbeständige Beschichtungsmasse nach Anspruch 37, ferner dadurch gekennzeichnet, daß die Dispersion umfaßt:

(a) 10 bis 50 Gew.-% der anionisch stabilisierten Polymerdispersion;
(b) 10 bis 50 Gew.-% der wäßrigen thermoplastischen Polymerdispersion;
(c) 0,1 bis 3 Gew.-% des Verdickungsmittels;
(d) 20 bis 60 Gew.-% des Pigments;
(e) 0,2 bis 3 Gew.-% des grenzflächenaktiven Mittels; und
(f) 0 bis 15 Gew.-% des oder der Additive;

und einer hinreichenden Menge Wasser, falls notwendig, so daß die Masse 30 bis 55 Gew.-% Feststoffe aufweist.

**44.** Abplatzbeständige Beschichtung, gebildet durch Härten der abplatzbeständigen Beschichtungsmasse von Anspruch 37.

**45.** Beschichtetes Substrat, umfassend ein Substrat beschichtet mit der abplatzbeständigen Beschichtung von Anspruch 37.

**46.** Beschichtetes Substrat von Anspruch 45, ferner dadurch gekennzeichnet, daß das Substrat ausgewählt ist aus Metallen, Kunststoffen und Verbundmaterialien.

**47.** Beschichtetes Substrat nach Anspruch 45, ferner dadurch gekennzeichnet, daß das Substrat Teil eines Gegenstandes ist, ausgewählt aus Fahrzeugverkleidungen und Anlagengehäusen.

**48.** Mehrschichtstruktur, umfassend:

(a) ein Substrat;
(b) wenigstens eine Primerschicht geschichtet auf wenigstens eine Oberfläche des Substrats;
(c) die abplatzbeständige Beschichtung nach Anspruch 44 geschichtet auf den Primer; und
(d) wenigstens eine Farbschicht geschichtet auf die abplatzbeständige Beschichtung.

**49.** Mehrschichtstruktur nach Anspruch 48, wobei das Substrat ausgewählt ist aus Metallen, Kunststoffen und Verbundmaterialien.

## Revendications

**1.** Un procédé pour préparer un polyuréthanne à groupes terminaux silyle dans une dispersion aqueuse, caractérisé par les stades opératoires suivants :

[a] on fait réagir un mélange constitué de :

[i] un composant polyol constitué lui-même d'un composé à deux groupes fonctionnels réactifs avec les isocyanates et facultativement d'un composé contenant plus de deux groupes fonctionnels réactifs avec les isocyanates, chaque groupe fonctionnel réactif avec les isocyanates contenant au moins un hydrogène actif ;

[ii] un composé hydrosolubilisant, qui contient au moins un groupe hydrosolubilisant et au moins un groupe fonctionnel réactif avec les isocyanates, chaque groupe fonctionnel réactif avec les isocyanates contenant au moins un hydrogène actif ; et

[iii] un composant polyisocyanate constitué d'un composé à deux groupes isocyanate et facultativement d'un composé à plus de deux groupes isocyanate ; en quantité suffisante pour apporter, sur la base des équivalents d'isocyanate, un excès de 1,4 à 4 fois les équivalents combinés d'hydrogène actif des groupes fonctionnels réactifs avec les isocyanates du composant polyol et du composé hydrosolubilisant ;

[iv] facultativement un solvant organique polaire coalescent ; et

[v] facultativement un catalyseur

à une température suffisante pour faciliter la réaction du mélange avec formation d'un prépolymère de polyuréthanne à groupes terminaux isocyanate ; le rapport entre les groupes isocyanate du composant polyisocyanate et les groupes hydrosolubilisants du composé hydrosolubilisant étant tel que le prépolymère peut donner une dispersion stable à la combinaison avec une phase aqueuse ;

[b] on prépare une dispersion stable de polyuréthanne à groupes terminaux silyle en combinant sous agitation suffisante et à température et pH suffisants le prépolymère de polyuréthanne à groupes terminaux isocyanate préparé au stade opératoire [a] avec une phase aqueuse constituée de :

[i] de l'eau déminéralisée ;

[ii] un composant allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actf ;

[iii] un silane réactif avec les isocyanates, contenant au moins un hydrogène actif ; et

[iv] un composé formant des sels choisis parmi les composés formant des sels basiques et les composés formant des sels acides, le composant formant des sels étant réactif avec le groupe hydrosolubilisant du composé hydrosolubilisant ; une partie ou la totalité du composé formant des sels pouvant aussi être ajoutée au mélange du stade opératoire [a] avant ou durant la réaction, ou au prépolymère de polyuréthanne à groupes terminaux isocyanate avant sa combinaison avec la phase aqueuse ;

le composant allongeur de chaînes et le silane réactif avec les isocyanates étant présents en quantités suffisantes par rapport à l'excès du composant polyisocyanate pour que le rapport entre les hydrogène actifs et les groupes isocyanate soit de 0,85:1 à 1:1 ; le solvant organique polaire coalescent facultatif du stade opératoire [a] [iv] pouvant éventuellement être ajouté à la phase aqueuse avant formation de la dispersion.

**2.** Un procédé pour préparer un polyuréthanne à groupes terminaux silyle, hydrolysable, dans une dispersion aqueuse, caractérisé par les stades opératoires suivants :

[a] on fait réagir un mélange constitué de :

[i] un composant polyol constitué lui-même d'un composé à deux groupes fonctionnels réactifs avec les isocyanates et facultativement d'un composé à plus de deux groupes fonctionnels réactifs avec les isocyanates, chaque groupe fonctionnel réactif avec les isocyanates contenant au moins un hydrogène actif ;

[ii] un composé hydrosolubilisant qui contient au moins un groupe hydrosolubilisant et au moins un groupe fonctionnel réactif avec les isocyanates, chaque groupe fonctionnel réactif avec les isocyanates contenant au moins un hydrogène actif ;

[iii] un composé allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ;

[iv] un composant polyisocyanate constitué d'un composé à deux groupes isocyanate et facultativement d'un composé à plus de deux groupes isocyanate ; ce composant polyisocyanate étant introduit en quantité suffisante pour apporter un excès, sur la base des équivalents d'isocyanate, de 1,4 à 4 fois les équivalents combinés d'hydrogène actif des groupes fonctionnels réactifs avec les isocyanates du composant polyol, du composé hydrosolubilisant et du composant allongeur de chaînes ;

[v] facultativement un solvant organique polaire coalescent ; et

[vi] facultativement un catalyseur

à une température suffisante pour faciliter la réaction du mélange avec formation d'un prépolymère de polyuréthanne à groupes terminaux isocyanate et à chaînes allongées ; le rapport entre les groupes isocyanate du composant polyisocyanate et les groupes hydrosolubilisants du composé hydrosolubilisant étant tel que le prépolymère peut donner une dispersion stable à la combinaison avec une phase aqueuse ;

[b] on prépare une dispersion stable de polyuréthanne à groupes terminaux silyle en combinant sous agitation suffisante et à température et pH suffisants le prépolymère de polyuréthanne à groupes terminaux isocyanate et à chaînes allongées du stade opératoire [a] avec une phase aqueuse constituée de :

[i] de l'eau déminéralisée ;

[ii] un silane réactif avec les isocyanates, contenant au moins un hydrogène actif ; et

[iii] un composé formant des sels choisi parmi les composés formant des sels basiques et les composés formant des sels acides, ce composé étant réactif avec le groupe hydrosolubilisant du composé hydrosolubilisant ; une partie ou la totalité du composé formant des sels pouvant aussi être ajoutée au mélange du stade opératoire [a] avant ou durant la réaction, ou au prépolymère de polyuréthanne à groupes terminaux isocyanate avant sa combinaison avec la phase aqueuse ;

le silane réactif avec les isocyanates étant présent en quantité suffisante par rapport à l'excès du composant polyisocyanate pour que le rapport entre les hydrogène actifs et les groupes isocyanate soit de 0,85:1 à 1:1 ; et le solvant organique polaire coalescent facultatif du stade opératoire [a] [v] pouvant éventuellement être ajouté à la phase aqueuse avant formation de la dispersion.

**3.** Un procédé pour préparer un polyuréthanne à groupes terminaux silyle, hydrolysable, dans une dispersion aqueuse, comprenant les stades opératoires suivants :

[a] on fait réagir un mélange constitué de :

[i] un composant polyol constitué lui-même d'un composé à deux groupes fonctionnels réactifs avec les isocyanates et facultativement d'un composé à plus de deux groupes fonctionnels réactifs avec les isocyanates, chaque groupe fonctionnel réactif avec les isocyanates contenant au moins un hydrogène actif ;

[ii] un composé hydrosolubilisant, contenant au moins un groupe hydrosolubilisant et au moins un groupe fonctionnel réactif avec les isocyanates, chaque groupe fonctionnel réactif avec les isocyanates contenant au moins un hydrogène actif ;

[iii] un composé allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ; et

[iv] un composant polyisocyanate constitué d'un composé à deux groupes isocyanate et facultativement d'un polyisocyanate à au moins trois groupes isocyanate ;

[v] facultativement un solvant organique polaire coalescent ; et

[vi] facultativement un catalyseur ;

à une température suffisante pour faciliter la réaction du mélange avec formation d'un prépolymère de polyuréthanne à groupes terminaux isocyanate et à chaînes allongées ; le rapport entre les groupes isocyanate du composant polyisocyanate et les groupes hydrosolubilisants du composé hydrosolubilisant étant tel que le prépolymère peut donner une dispersion stable à la combinaison avec une phase aqueuse ;

[b] lorsque le mélange des composants du stade opératoire [a] a réagi à 80-90 %, on ajoute au mélange [a] un adduct de polyisocyanate à plus de deux groupes isocyanate en vue de former un prépolymère de polyuréthanne à groupes terminaux isocyanate et à chaînes allongées ramifiées ; le composant polyisocyanate et l'adduct de polyisocyanate étant introduits en quantités suffisantes pour apporter un excès, sur la base des

équivalents d'isocyanate, de 1,4 à 4 fois les équivalents combinés d'hydrogène actif des groupes fonctionnels réactifs avec les isocyanates du composant polyol, du composé hydrosolubilisant et du composant allongeur de chaînes ;

[c] on prépare une dispersion stable d'un polyuréthanne à groupes terminaux silyle en combinant sous agitation suffisante et à température et pH suffisants le prépolymère de polyuréthanne à groupes terminaux isocyanate et à chaînes allongées et ramifiées du stade opératoire [b] avec une phase aqueuse constituée de :

[i] de l'eau déminéralisée ;

[ii] un silane réactif avec les isocyanates et contenant au moins un hydrogène actif ;

[iii] un composant allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ; et

[iv] un composant formant des sels choisi parmi les composés formant des sels basiques et les composés formant des sels acides, ce composé étant réactif avec le groupe hydrosolubilisant du composé hydrosolubilisant, une partie ou la totalité du composé formant des sels pouvant aussi être ajoutée au mélange du stade opératoire [a] ou au mélange du stade opératoire [b] avant combinaison du prépolymère de polyuréthanne à groupes terminaux isocyanate et à chaînes allongées et ramifiées avec la phase aqueuse ;

le silane réactif avec les isocyanates étant présent en quantité suffisante par rapport à l'excès de polyisocyanate pour que le rapport entre les hydrogène actifs et les groupes isocyanate soit de 0,85:1 à 1:1 ; le composant (a)(v) pouvant facultativement être ajouté à la phase aqueuse avant formation de la dispersion.

**4.** Un procédé pour préparer un polyuréthanne à groupes terminaux silyle, hydrolysable, dans une dispersion aqueuse, caractérisé par les stades opératoires suivants :

[a] on fait réagir un mélange constitué de :

[i] un composant polyol constitué lui-même d'un composé à deux groupes fonctionnels réactifs avec les isocyanates et facultativement d'un composé à plus de deux groupes fonctionnels réactifs avec les isocyanates, chaque groupe fonctionnel réactif avec les isocyanates contenant au moins un hydrogène actif ;

[ii] un composé hydrosolubilisant qui contient au moins un groupe hydrosolubilisant et au moins un groupe fonctionnel réactif avec les isocyanates, chaque groupe fonctionnel réactif avec les isocyanates contenant au moins un hydrogène actif ;

[iii] un composant allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ;

[iv] un composant polyisocyanate constitué d'un composé à deux groupes isocyanate et facultativement d'un composé à plus de deux groupes isocyanate, ce composant polyisocyanate étant introduit en quantité suffisante pour apporter un excès, sur la base des équivalents d'isocyanate, de 1,4 à 4 fois les équivalents combinés d'hydrogène actif des groupes fonctionnels réactifs avec les isocyanates du composant polyol, du composé hydrosolubilisant et du composant allongeur de chaînes ;

[v] facultativement un solvant organique polaire coalescent ; et

[vi] facultativement un catalyseur ;

à une température suffisante pour faciliter la réaction du mélange avec formation d'un prépolymère de polyuréthanne à groupes terminaux isocyanate et à chaînes allongées,

[b] on fait réagir une quantité au moins équivalente d'un agent bloquant des isocyanates avec le produit de réaction du stade opératoire [a] constitué d'un prépolymère de polyuréthanne à groupes terminaux isocyanate et à chaînes allongées, pour formation d'un prépolymère de polyuréthanne à groupes terminaux isocyanate et à chaînes allongées bloqué ; le rapport entre les groupes isocyanate du composant polyisocyanate et les groupes hydrosolubilisants du composé hydrosolubilisant étant tel que le prépolymère peut donner une dispersion stable à la combinaison avec une phase aqueuse ;

[c] on prépare une dispersion stable d'un polyuréthanne à groupes terminaux silyle en éliminant l'agent bloquant des isocyanates du prépolymère de polyuréthanne à groupes terminaux isocyanate et à chaînes allongées bloqué du stade opératoire [b] par réaction sous agitation suffisante et à température et pH suffisants du prépolymère de polyuréthanne à groupes terminaux isocyanate et à chaînes allongées, bloqué, du stade opératoire [b], avec une phase aqueuse constituée de :

[i] de l'eau déminéralisée ;

[ii] un silane réactif avec les isocyanates et qui contient au moins un hydrogène actif ; et

[iii] un composé formant des sels choisi parmi les composés formant des sels basiques et les composés formant des sels acides, ce composé formant des sels étant réactifs avec le groupe hydrosolubilisant du composé hydrosolubilisant qui a été utilisé pour la préparation du prépolymère de polyuréthanne à chaînes allongées du stade opératoire [a], une partie ou la totalité du composé formant des sels pouvant aussi être ajoutée au mélange du stade opératoire [a] ou au mélange du stade opératoire [b] avant combinaison du prépolymère de polyuréthanne à groupes terminaux isocyanate et à chaînes allongées bloqué avec la phase aqueuse ;

le silane réactif avec les isocyanates étant introduit en quantité suffisante par rapport à l'excès du composant polyisocyanate pour que le rapport entre les hydrogène actifs et les groupes isocyanate soit de 0,85:1 à 1:1 ; et le solvant organique polaire coalescent facultatif [a][v] pouvant éventuellement être ajouté à la phase aqueuse avant formation de la dispersion.

**5.** Un procédé pour préparer un polyuréthanne à groupes terminaux silyle, hydrolysable, dans une dispersion aqueuse, caractérisé par les stades opératoires suivants :

[a] on fait réagir un mélange constitué de :

[i] un composant polyol constitué lui-même d'un composé à deux groupes fonctionnels réactifs avec les isocyanates et facultativement d'un composé à plus de deux groupes fonctionnels réactifs avec les isocyanates, chaque groupe fonctionnel réactif avec les isocyanates contenant au moins un hydrogène actif ;

[ii] un composé hydrosolubilisant qui contient au moins un groupe hydrosolubilisant et au moins un groupe fonctionnel réactif avec les isocyanates, chaque groupe fonctionnel réactif avec les isocyanates contenant au moins un hydrogène actif ; et

[iii] un composant allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ;

[iv] un composant polyisocyanate constitué d'un composé à deux groupes isocyanate et facultativement d'un composé à plus de deux groupes isocyanate, le composant polyisocyanate étant introduit en quantité suffisante pour apporter un excès, sur la base des équivalents d'isocyanate, de 1,4 à 4 fois les équivalents combinés d'hydrogène actif des groupes fonctionnels réactifs avec les isocyanates du composant polyol, du composé hydrosolubilisant et du composant allongeur de chaînes ;

[v] facultativement un solvant organique polaire coalescent ; et

[vi] facultativement un catalyseur ;

à une température suffisante pour faciliter la réaction du mélange avec formation d'un prépolymère de polyuréthanne à groupes terminaux isocyanate et à chaînes allongées, le rapport entre les groupes isocyanate du composant polyisocyanate et les groupes hydrosolubilisants du composé hydrosolubilisant étant tel que le prépolymère peut donner une dispersion stable à la combinaison avec une phase aqueuse ;

[b] on fait réagir le prépolymère de polyuréthanne à groupes terminaux isocyanate et à chaînes allongées de [a] avec un silane réactif avec les isocyanates, contenant au moins un hydrogène actif, pour formation d'un prépolymère de polyuréthanne à chaînes allongées et à groupes terminaux silyle ;
le silane réactif avec les isocyanates étant présent en quantité suffisante, par rapport à l'excès du composant polyisocyanate, pour que le rapport entre les hydrogène actifs et les groupes isocyanate soit de 0,85:1 à 1:1 ;

[c] on prépare une dispersion stable de polyuréthanne à groupes terminaux silyle par combinaison sous agitation suffisante et à température et pH suffisants du prépolymère de polyuréthanne à groupes terminaux isocyanate, à chaînes allongées et à groupes terminaux silyle de [b] avec une phase aqueuse constituée de :

[i] de l'eau déminéralisée ;

[ii] un composé formant des sels choisi parmi les composés formant des sels basiques et les composés formant des sels acides, ce composé étant réactif avec le groupe hydrosolubilisant du composé hydrosolubilisant qui a été utilisé pour la préparation du prépolymère de polyuréthanne à groupes terminaux isocyanate et à chaînes allongées ; une partie ou la totalité du composé formant des sels pouvant aussi être ajoutée au mélange du stade opératoire [a] ou au mélange du stade opératoire [b] avant combinaison du prépolymère de polyuréthanne à chaînes allongées et à groupes terminaux silyle avec la phase aqueuse ; le solvant organique polaire coalescent facultatif du stade (a)(v) pouvant aussi être ajouté à la phase aqueuse avant formation de la dispersion.

**6.** Un procédé pour préparer un polyuréthanne à groupes terminaux silyle, hydrolysable, dans une dispersion aqueuse, caractérisé par les stades opératoires suivants :

[a] on fait réagir un mélange constitué de :

[i] un composant polyol constitué d'un composé à deux groupes fonctionnels réactifs avec les isocyanates et facultativement d'un composé à plus de deux groupes fonctionnels réactifs avec les isocyanates, chaque groupe fonctionnel réactif avec les isocyanates contenant au moins un hydrogène actif ;

[ii] un composé hydrosolubilisant qui contient au moins un groupe hydrosolubilisant et au moins un groupe fonctionnel réactif avec les isocyanates, chaque groupe fonctionnel réactif avec les isocyanates contenant au moins un hydrogène actif ;

[iii] un composant allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ;

[iv] un composant polyisocyanate constitué d'un composé à deux groupes isocyanate et facultativement d'un composé à plus de deux groupes isocyanate, ce composant polyisocyanate étant introduit en quantité suffisante pour apporter un excès, sur la base des équivalents d'isocyanate, de 1,4 à 4 fois les équivalents combinés d'hydrogène actif des groupes fonctionnels réactifs avec les isocyanates du composant polyol, du composé hydrosolubilisant et du composant allongeur de chaînes ;

[v] facultativement un solvant organique polaire coalescent ; et

[vi] facultativement un catalyseur,

à une température suffisante pour faciliter la réaction du mélange avec formation d'un prépolymère de polyuréthanne à groupes terminaux isocyanate et à chaînes allongées, le rapport entre les groupes isocyanate du composant polyisocyanate et les groupes hydrosolubilisants du composé hydrosolubilisant étant tel que le prépolymère peut donner une dispersion stable à la combinaison avec une phase aqueuse ;

[b] on prépare une dispersion stable de polyuréthanne à groupes terminaux silyle en combinant sous agitation suffisante et à température et pH suffisants le prépolymère de polyuréthanne à groupes terminaux isocyanate et à chaînes allongées du stade opératoire [a] avec une phase aqueuse constituée de :

[i] de l'eau déminéralisée ;

[ii] un composant allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ;

[iii] un silane réactif avec les isocyanates, qui contient au moins un hydrogène actif ; et

[iv] un composé formant des sels, choisi parmi les composés formant des sels basiques et les composés formant des sels acides, ce composé étant réactif avec le groupe hydrosolubilisant du composé hydrosolubilisant, une partie ou la totalité du composé formant des sels pouvant aussi être ajoutée au mélange du stade opératoire [a] avant combinaison du prépolymère de polyuréthanne à groupes terminaux isocyanate et à chaînes allongées avec la phase aqueuse ;

le composant allongeur de chaînes et le silane réactif avec les isocyanates étant présents en quantités suffisantes, par rapport à l'excès du composant polyisocyanate, pour que le rapport entre les hydrogène actifs et les groupes isocyanate soit de 0,85:1 à 1:1 ; le composant [a][v] pouvant aussi être ajouté à la phase aqueuse avant formation de la dispersion.

**7.** Procédé selon l'une quelconque des revendications 1 à 6 dans lequel ledit allongeur de chaînes difonctionnelles est une amine divalente objet d'un empêchement stérique et qui répond à la formule générale

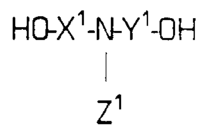

dans laquelle $X^1$, $Y^1$ et $Z^1$ représentent chacun, indépendamment les uns des autres, un radical organique cyclique ou aliphatique exempt de groupe fonctionnel, et sous réserve qu'au moins 75 % des groupes $Z^1$ contiennent au moins 4 atomes de carbone.

**8.** Une dispersion aqueuse d'une composition polymère à stabilisation anionique caractérisée en ce qu'elle contient un polymère de formule I

$$[SIL\text{-}X]\text{-}ISO\text{-}Y\text{-}[POL\text{-}X\text{-}ISO\text{-}Y]_n\sim[CE\text{-}X\text{-}ISO\text{-}Y]_m\sim[WSC\text{-}X\text{-}ISO\text{-}Y]_q\text{-}[SIL] \quad [I]$$

dans laquelle [POL-X-ISO-Y], [CE-X-ISO-Y] et [WSC-X-ISO-Y] peuvent être en répartition statistique ou sous la forme de blocs ;

SIL représente

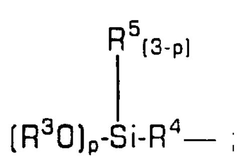

$R^3$ représente l'hydrogène ; un radical alkyle en C1-C4 ; un radical acyle en C2-C5 ; un groupe oxime de formule $-N = CR^5R^6$, dans lequel $R^5$ représente un groupe alkyle monovalent en C1-C12 et $R^6$ un groupe

alkyle monovalent en C1-C12 ;

$R^4$ représente un radical divalent en C2-C20 qui ne contient pas de groupe fonctionnel réactif avec les isocyanates ;

p est un nombre entier allant de 1 à 3 ;

X est un radical divalent choisi parmi

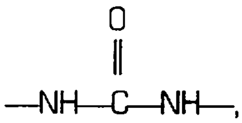, 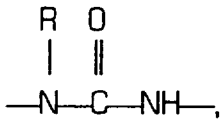, 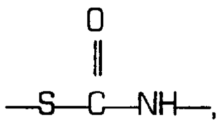, et 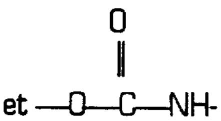 ;

dans lesquels R représente un groupe phényle, un groupe aliphatique linéaire en C1-C12, un groupe aliphatique ramifié en C1-C12 ou un groupe cycloaliphatique ;

ISO représente un motif dérivé d'un composant polyisocyanate constitué d'un composé à deux groupes isocyanate et facultativement d'un composé à plus de deux groupes isocyanate ;

Y est un radical divalent choisi parmi les suivants :

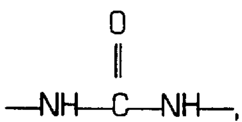, 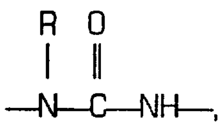, 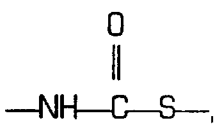, et 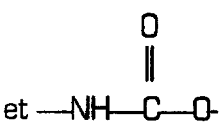 ;

dans lesquels R a les significations indiquées ci-dessus ;

POL représente un motif dérivant d'un composant polyol constitué d'un composé à deux groupes fonctionnels réactifs avec les isocyanates et facultativement d'un composé à plus de deux groupes fonctionnels réactifs avec les isocyanates, chaque groupe fonctionnel réactif avec les isocyanates contenant au moins un hydrogène actif ;

n est un nombre entier allant de 2 à 85 ;

CE représente un motif dérivant d'un composant allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ;

m est un nombre entier allant de 1 à 84 ;

WSC représente un motif dérivant d'un composé hydrosolubilisant qui contient au moins un composé hydrosolubilisant et au moins deux groupes fonctionnels réactifs avec les isocyanates, chaque groupe fonctionnel réactif avec les isocyanates contenant au moins un hydrogène actif, le groupe hydrosolubilisant ayant réagi avec un composé formant un sel basique pour provoquer la stabilisation anionique du polymère ;

q est un nombre entier allant de 2 à 85 ;

le coefficient de ramification d'uréthanne du polymère allant de 1,7 à 2,25 ; et le composant polyisocyanate étant introduit en quantité suffisante pour apporter un excès, sur la base des équivalents d'isocyanate, de 1,4 à 4 fois les équivalents combinés d'hydrogène actif des groupes fonctionnels réactifs avec les isocyanates du composant polyol, du composé hydrosolubilisant et du composant allongeur de chaînes.

**9.** Composition selon revendication 8, dans laquelle l'allongeur de chaînes difonctionnel est une amine divalente

objet d'un empêchement stérique répondant à la formule générale

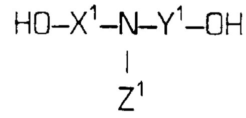

dans laquelle $X^1$, $Y^1$ et $Z^1$ représentent chacun, indépendamment les uns des autres, un radical organique cyclique ou aliphatique exempt de groupes fonctionnels réactifs, sous réserve qu'au moins 75 % des groupes $Z^1$ contiennent au moins 4 atomes de carbone.

**10.** La composition de la revendication 8, caractérisée en outre en ce que n est un nombre entier allant de 3 à 65 ; m est un nombre entier allant de 2 à 64 et q un nombre entier allant de 3 à 65.

**11.** La composition de la revendication 8, caractérisée en outre en ce que n est un nombre entier allant de 4 à 15 ; m un nombre entier allant de 2 à 64 et q un nombre entier allant de 4 à 15.

**12.** La composition de la revendication 8, caractérisée en outre en ce que $R^3$ représente un groupe éthyle ou méthyle ; p est égal à 3 ; et $R^4$ contient de 2 à 4 atomes de carbone.

**13.** La composition de la revendication 8, caractérisée en outre en ce que ledit polyol est choisi parmi les poly[oxypropylène] glycols, les poly[oxypropylène] glycols à motif terminal d'oxyde d'éthylène, les poly(oxytétraméthylène] glycols, les α-oméga-diaminopoly[oxypropylènes], les poly[oxypropylène] glycols à groupe terminal amino aromatique, les polyéther polyols greffés, les poly[oxyéthylène] polyols, les adipates de polyglycols, les polyéthylène téréphtalate polyols, les polycaprolactone polyols, les polybutadiène polyols, les polybutadiène polyols hydrogénés, les α-oméga-diamino poly(oxytétraméthylènes], les polythioéther polyols, les polybutylène oxyde polyols, les polyols consistant en copolymères statistiques polyoxytétraméthylènes/oxyde d'éthylène, les polyéther polyols fluorés, les polyols acryliques, les polycarbonate polyols et leurs mélanges.

**14.** La composition de la revendication 8, caractérisée en outre en ce que ledit composant polyol a un poids moléculaire moyen, moyenne en nombre, de 250 à 35.000.

**15.** La composition de la revendication 8, caractérisée en outre en ce que ledit composant polyol a un poids moléculaire moyen, moyenne en nombre, de 500 à 3000.

**16.** La composition de la revendication 8, caractérisée en outre en ce que ledit composé hydrosolubilisant est choisi parmi les suivants :

$$[HOCH_2]_2C[CH_3]COOH ;$$

$$H_2N\text{-}C_2H_4\text{-}NH\text{-}C_2H_4\text{-}SO_3H ;$$

$$H_2N\text{-}C_3H_6\text{-}N[CH_3]\text{-}C_3H_6\text{-}SO_3H ;$$

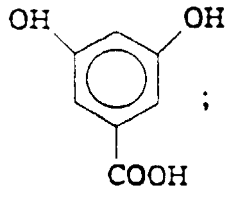 ; 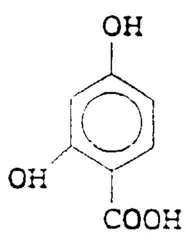 ; 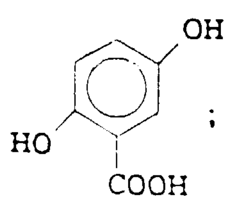 ; 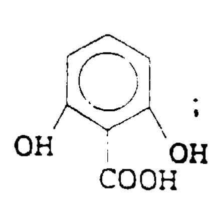 ;

$HOCH_2\text{-}CH[OH]\text{-}CO_2Na$ ;

$[[HOCH_2]_2CHCH_2\text{-}COO]\ [NH[CH_3]_3]^+$ ;

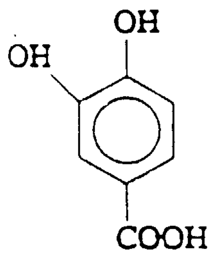
;
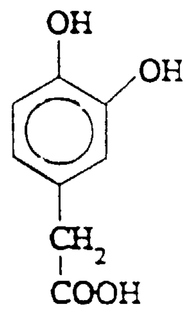
;
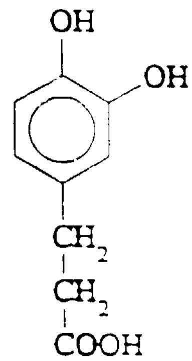
;

$CH_3[CH_2]_2CH[OH]\text{-}CH[OH][CH_2]_3CO_2K$ ;

$[HOC_2H_4]_2N\text{-}C_3H_6\text{-}OSO_3Na$ ;

$[HOCH_2CH_2]_2NC_6H_4O[CH_2CH_2O]SO_2OH$ ;

et leurs mélanges.

**17.** La composition de la revendication 8, caractérisée en outre en ce que ledit composé formant des sels basiques est choisi parmi l'ammoniac, la triméthylamine, la triéthylamine, la tripropylamine, la triisopropylamine, la tributylamine, la triéthanolamine, la diéthanolamine et leurs mélanges.

**18.** La composition de la revendication 8, caractérisée en outre en ce que ledit allongeur de chaînes difonctionnel est choisi dans le groupe consistant en le 1,4-butane diol, l'éthylène glycol, le diéthylène glycol, le dipropylène glycol, le néopentyl glycol, le 1,6-hexane diol, le 1,4-cyclohexane diméthanol, la bis(2-hydroxiéthyl) hydroquinone, la 4,4'-méthylène bis(o-chloraniline), la 2,5-diéthyl-2,4-toluène diamine, la 4',4'-méthylène bis(3-chloro-2,6-diéthylaniline), le bis(4,4'-aminobenzoate) du propylène glycol, la 3,5-di(thiométhyl)-2,4-toluène diamine, la méthylène bis (4,4'-aniline), l'éthyl-1,2-di(2-amino thiophénol), le benzoate de 4-chloro-3,5-diamino isobutyle, le 1,2-diaminoéthane, les N,N'-dialkyl[méthylène dianilines), les N,N'-dialkyl(1,4-diaminobenzènes] et leurs mélanges.

**19.** La composition de la revendication 8, caractérisée en outre en ce que le silane réactif avec les isocyanates est choisi parmi les suivants :

$H_2NCH_2CH_2CH_2Si(OC_2H_5)_3$ ;

$H_2NCH_2CH_2CH_2Si(OCH_3)_3$ ;

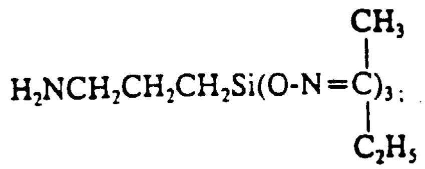

$$HSCH_2CH_2CH_2Si[OCH_3]_3\ ;$$

$$HO[C_2H_4O]_3C_2H_4N[CH_3][CH_2]_3Si[OC_4H_9]_3\ ;$$

$$H_2NCH_2C_6H_4CH_2CH_2Si[OCH_3]_3\ ;$$

$$HSCH_2CH_2CH_2Si[OCOCH_3]_3\ ;$$

$$HN[CH_3]CH_2CH_2Si[OCH_3]_3\ ;$$

$$HSCH_2CH_2CH_2SiCH_3[OCH_3]_2\ ;$$

$$[H_3CO]_3SiCH_2CH_2CH_2NHCH_2CH_2CH_2Si[OCH_3]_3;$$

et leurs mélanges.

**20.** La composition de la revendication 8, caractérisée en ce que le coefficient de ramification d'uréthanne correspond à une valeur de 1,85 à 2,01.

**21.** La composition de la revendication 9, caractérisée en outre en ce que l'amine divalente objet d'un empêchement stérique est choisie dans le groupe consistant en la n-butyldiéthanolamine et la phényldiéthanolamine.

**22.** Une pellicule constituée de la composition de la revendication 8, durcie.

**23.** Un élastomère constitué de la composition de la revendication 8, durcie.

**24.** Un support revêtu de la composition de la revendication 9, durcie.

**25.** Le support revêtu de la revendication 24 caractérisé en outre en ce qu'il consiste en cuir, étoffes tissées, étoffes non tissées, verre, fibres de verre, bois, métal, matières plastiques, une composition vinylique ou une matière composite.

**26.** Le support revêtu de la revendication 24 caractérisé en outre en ce qu'il consiste en un bois gras.

**27.** Le support revêtu de la revendication 26 caractérisé en outre en ce qu'il consiste en bois de teck.

**28.** Le support revêtu de la revendication 26 caractérisé en ce que la composition contient en outre un photostabilisant.

**29.** Le support revêtu de la revendication 27 caractérisé en outre en ce que la composition contient en outre un photostabilisant.

**30.** La composition de la revendication 8, durcie.

**31.** Une composition caractérisée en ce qu'elle consiste en :

[a] 85 à 99,9 % en poids de la dispersion de la revendication 8 ;

[b] 0,1 à 10 % en poids d'un photostabilisant ;

[c] 0 à 10 % en poids d'un agent tensioactif ; et

[d] 0 à 10 % en poids d'un agent épaississant ;

les pourcentages en poids étant basés sur le poids total de la composition de revêtement et se complétant à un total de 100 %.

**32.** La composition de la revendication 31, durcie.

**33.** Un support revêtu caractérisé en ce qu'il consiste en bois revêtu de la composition de la revendication 31, durcie.

**34.** Une composition caractérisée en ce qu'elle contient :

[a] 94 à 99 % en poids de la dispersion de la revendication 9 ; et

[b] 1 à 6 % en poids d'un plastifiant, par rapport au poids total de la composition.

**35.** La composition de la revendication 34, durcie.

**36.** Un support revêtu caractérisé en ce qu'il consiste en une composition vinylique revêtue de la composition de la revendication 35, durcie.

**37.** Une composition de revêtement résistant à l'écaillage, caractérisée en ce qu'elle consiste en une dispersion comprenant :

[a] 0,5 à 99,9 % en poids d'une dispersion constituée de :

- une dispersion aqueuse d'un polymère à stabilisation anionique contenant un polymère de formule [I]

$$[SIL\text{-}X]\text{-}ISO\text{-}Y\text{-}[POL\text{-}X\text{-}ISO\text{-}Y]_n\sim[CE\text{-}X\text{-}ISO\text{-}Y]_m\sim[WSC\text{-}X\text{-}ISO\text{-}Y]_q\text{-}[SIL] \qquad [I]$$

dans laquelle [POL-X-ISO-Y], [CE-X-ISO-Y] et [WSC-X-ISO-Y] peuvent être en répartition statistique ou sous la forme de blocs ;

SIL représente

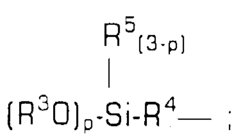

$R^3$ représente l'hydrogène, un radical alkyle en C1-C4 ; un groupe acyle en C2-C5 ; ou un groupe oxime de formule -N = $CR^5R^6$, dans laquelle $R^5$ représente un groupe alkyle monovalent en C1-C12 et $R^6$ un groupe alkyle monovalent en C1-C12 ;

$R^4$ représente un radical divalent en C2-C20 qui ne contient pas de groupe fonctionnel réactif avec les isocyanates ;

p est un nombre entier allant de 1 à 3 ;

X représente un radical divalent choisi parmi les suivants

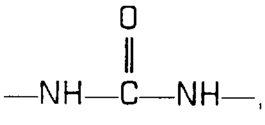, 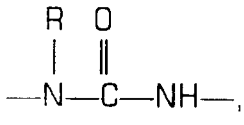, 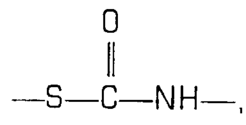, et 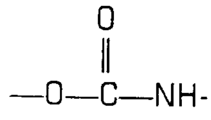 ;

dans lesquels R représente un groupe phényle, un groupe aliphatique linéaire en C1-C12, un groupe aliphatique ramifié en C1-C12 ou un groupe cycloaliphatique ;

ISO représente un motif dérivant d'un composant polyisocyanate constitué d'un composé à deux groupes isocyanate et facultativement d'un autre composé à plus de deux groupes isocyanate ;

Y représente un radical divalent choisi parmi les suivants :

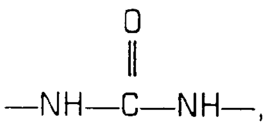, 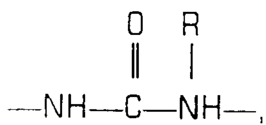, 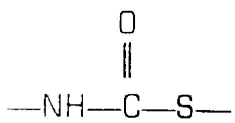, et 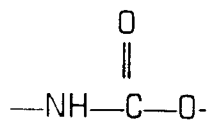 ;

dans lesquels R a les significations indiquées ci-dessus ;

POL représente un motif dérivant d'un composant polyol constitué d'un composé à deux groupes fonctionnels réactifs avec les isocyanates et facultativement d'un composé à plus de deux groupes fonctionnels réactifs avec les isocyanates, chaque groupe fonctionnel réactif avec les isocyanates contenant au moins un hydrogène actif ;

n est un nombre entier allant de 2 à 85 ;

CE représente un motif dérivant d'un composant allongeur de chaînes constitué d'un allongeur de chaînes difonctionnelles à deux groupes fonctionnels réactifs avec les isocyanates et facultativement d'un allongeur de chaînes polyfonctionnelles à au moins trois groupes fonctionnels réactifs avec les isocyanates, chaque groupe fonctionnel réactif avec les isocyanates contenant au moins un hydrogène actif ;

m est un nombre entier allant de 1 à 84 ;

WSC représente un motif dérivant d'un composé hydrosolubilisant qui contient au moins un groupe hydrosolubilisant et au moins deux groupes fonctionnels réactifs avec les isocyanates, chaque groupe fonctionnel réactif avec les isocyanates contenant au moins un hydrogène actif, ce groupe hydrosolubilisant ayant réagi avec un composé formant des sels basiques pour stabilisation anionique du polymère ;

q est un nombre entier allant de 2 à 85 ;

le coefficient de ramification d'uréthanne du polymère allant de 1,7 à 2,25 ; et le composant polyisocyanate étant introduit en quantité suffisante pour apporter un excès, sur la base des équivalents d'isocyanate, de 1,4 à 4 fois les équivalents combinés d'hydrogène actif des groupes fonctionnels réactifs avec les isocyanates du composant polyol, du composé hydrosolubilisant et du composant allongeur de chaînes ;

[b] 0,1 à 15 % en poids d'un agent épaississant ;

[c] 0 à 70 % en poids d'un pigment ;

[d] 0 à 10 % en poids d'un agent tensioactif ;

[e] 0 à 80 % en poids d'une dispersion aqueuse d'un polymère thermoplastique ; et

[f] 0 à 15 % en poids d'un ou plusieurs additifs ;

les pourcentages en poids se rapportant aux matières solides à 100 % et le total des pourcentages en poids [a] plus (b] plus [c] plus [d] plus [e] plus [f] étant égal à 100 %, avec, si nécessaire, de l'eau en quantité suffisante pour que la composition soit à une teneur de 5 à 60 % en poids de matières solides.

**38.** La composition de la revendication 37, dans laquelle ladite dispersion aqueuse de résine thermoplastique est choisie parmi les dispersions de copolymères vinyliques/acryliques, les dispersions de polymères époxydiques, les dispersions de copolymères acrylonitrile/butadiène/styrène, les dispersions de polyuréthannes et leurs mélanges.

**39.** La composition de la revendication 38, dans laquelle la dispersion aqueuse de résine thermoplastique contient un polymère ayant une température Tg de -60 à +25°C.

**40.** La composition de la revendication 37, dans laquelle ledit pigment est choisi parmi le carbonate de calcium, le dioxyde de titane, le talc, l'argile, le mica, le noir de carbone et leurs mélanges.

**41.** La composition de la revendication 37, dans laquelle ledit agent tensioactif est choisi parmi les agents tensioactifs anioniques, les agents tensioactifs cationiques, les agents tensioactifs non-ioniques et les agents tensioactifs amphotères.

**42.** La composition de la revendication 37, caractérisée en outre en ce qu'elle contient un additif choisi parmi les agents antimousse, les colorants, les agents réticulants, les plastifiants, les additifs améliorant l'adhérence, les agents de contrôle du pH, les biocides, les fongicides, les antioxydants, les inhibiteurs de corrosion, les inhibiteurs de rouille, les agents nivelants, les agents antigel, les agents coalescents, les absorbeurs de rayons ultraviolets, les solvants, les sels ionisables et leurs mélanges.

**43.** La composition de revêtement résistant à l'écaillage, de la revendication 37, caractérisée en outre en ce qu'elle consiste en une dispersion constituée de :

[a] 10 à 50 % en poids de ladite dispersion de polymère à stabilisation anionique ;

[b] 10 à 50 % en poids de ladite dispersion aqueuse de polymère thermoplastique ;

[c] 0,1 à 3 % en poids dudit agent épaississant ;

[d] 20 à 60 % en poids dudit pigment ;

[e] 0,2 à 3 % en poids dudit agent tensioactif ; et

[f] 0 à 15 % en poids dudit ou desdits additifs ;

et, si c'est nécessaire, de l'eau en quantité suffisante pour que la composition ait une teneur en matières solides de 30 à 55 % en poids.

**44.** Le revêtement, résistant à l'écaillage, formé par durcissement de la composition de revêtement résistant à l'écaillage de la revendication 37.

**45.** Un support revêtu constitué d'un support portant le revêtement résistant à l'écaillage de la revendication 37.

**46.** Le support revêtu de la revendication 45, caractérisé en ce qu'il consiste en métal, matière plastique ou matière composite.

**47.** Le support revêtu de la revendication 45, caractérisé en ce qu'il consiste en une partie d'un article choisi parmi les éléments extérieurs de véhicules et les logements d'appareils.

**48.** Une structure à couches multiples constituée de :

[a] un support ;

[b] au moins une couche d'un produit d'apprêt appliqué en revêtement sur au moins une face du support ;

[c] le revêtement résistant à l'écaillage de la revendication 44, appliqué sur la couche d'apprêt ; et

[d] au moins une couche de peinture appliquée sur le revêtement résistant à l'écaillage.

**49.** La structure à couches multiples de la revendication 48, dans laquelle le support est choisi parmi le groupe constitué par le métal, les matières plastiques et les matières composites.